(19) **Europäisches Patentamt**

**European Patent Office**

**Office européen des brevets**

(11) **EP 0 845 692 B1**

(12) **EUROPEAN PATENT SPECIFICATION**

(45) Date of publication and mention
of the grant of the patent:
**16.11.2005 Bulletin 2005/46**

(51) Int Cl.⁷: $G02B\ 17/08$, $G02B\ 27/00$

(21) Application number: **97109239.0**

(22) Date of filing: **06.06.1997**

(54) **Optical system with a rotationally asymmetric curved surface**

Optisches System mit einer rotationsasymmetrischengewölbten Fläche

Système optique avec une surface courbée asymétrique de révolution

(84) Designated Contracting States:
**DE FR GB**

(30) Priority: **27.11.1996 JP 31593096**

(43) Date of publication of application:
**03.06.1998 Bulletin 1998/23**

(73) Proprietor: **Olympus Corporation**
**Tokyo 151-0072 (JP)**

(72) Inventor: **Togino, Takayoshi,**
**c/o Olympus Optical Co., Ltd.**
**Hachioji-shi, Tokyo 192 (JP)**

(74) Representative: **Prechtel, Jörg et al**
**Weickmann & Weickmann**
**Patentanwälte**
**Kopernikusstrasse 9**
**81679 München (DE)**

(56) References cited:
**EP-A- 0 167 926**     **EP-A- 0 655 636**
**EP-A- 0 660 155**     **EP-A- 0 687 932**
**EP-A- 0 730 169**     **EP-A- 0 730 183**
**WO-A-92/05462**       **US-A- 4 518 231**
**US-A- 4 952 040**     **US-A- 4 976 524**
**US-A- 5 005 957**     **US-A- 5 513 041**
**US-A- 5 726 807**

- **W T PLUMMER: "Unusual optics of the Polaroid**
**SX-70 Land camera" APPLIED OPTICS, vol. 21,**
**no. 2, 15 January 1982, pages 196-202,**
**XP002056646**

**Description**

BACKGROUND OF THE INVENTION

The present invention related to an endoscope, which is also refered to as an optical system according to the preamble of claim 1 and, more particularly, to a decentered optical system having power, which comprises a decentered reflecting surface.

There has heretofore been known a compact reflecting decentered optical system as disclosed in Japanese Pat. Appln. Laid-Open (KOKAI) No. 59-84201. This is an invention of a one-dimensional light-receiving lens comprising a cylindrical reflecting surface; therefore, two-dimensional imaging cannot be effected with the conventional optical system. Japanese Pat. Appln. Laid-Open (KOKAI) No. 62-144127 discloses an optical system wherein the identical cylindrical surface is used twice to effect reflection in order to reduce spherical aberration in the above-mentioned invention. Japanese Pat. Appln. Laid-Open (KOKAI) No. 62-205547 discloses the use of an aspherical reflecting surface as a reflecting surface, but makes no mention of the configuration of the reflecting surface.

U.S. Pat. Nos. 3,810,221 and 3,836,931 both disclose an example in which a rotationally symmetric aspherical mirror and a lens system having a surface which has only one plane of symmetry are used to constitute a finder optical system of a reflex camera. In this example, however, the surface having only one plane of symmetry is utilized for the purpose of correcting the tilt of a virtual image for observation.

Japanese Pat. Appln. Laid-Open (KOKAI) No. 1-257834 (U.S. Pat. No. 5,274,406) discloses an example in which a surface having only one plane of symmetry is used for a reflecting mirror to correct image distortion in a back projection type television. In this example, however, a projection lens system is used for projection onto a screen, and the surface having only one plane of symmetry is used for correction of image distortion.

Japanese Pat. Appln. Laid-Open (KOKAI) No. 7-333551 discloses an example of a back-coated mirror type decentered optical system using an anamorphic surface and a toric surface as an observation optical system. However, the decentered optical system is not sufficiently corrected for aberrations, including image distortion.

None of the above-described prior arts use a surface having only one plane of symmetry as a back-coated mirror to form a turn-back optical path.

In the conventional rotationally symmetric optical systems, a transmitting rotationally symmetric lens having refracting power is assigned to exert the required refracting power. Therefore, many constituent elements are needed for aberration correction. In the conventional decentered optical systems, however, an imaged figure or the like is undesirably distorted and the correct shape cannot be recorded unless aberrations of the formed image are favorably corrected and, particularly, rotationally asymmetric distortion is favorably corrected.

In a rotationally symmetric optical system comprising a refracting lens which is formed from a surface rotationally symmetric about an optical axis, a straight-line optical path is formed. Therefore, the whole optical system undesirably lengthens in the direction of the optical axis, resulting in an unfavorably large-sized apparatus.

In view of the problems associated with the prior arts, an object of the present invention is to provide a compact optical system capable of providing a clear image of minimal distortion even at a wide field angle.

The document EP 0 730 183 A2 discloses an optical system apparatus, which has a first surface symmetric with respect to only one symmetry plane and a second surface symmetric with respect to only the symmetry plane, in which the first plane is a reflective, concave surface and is inclined relative to a reference axial ray present in the symmetry plane. Further, a local power of the second surface changes from a positive to a negative.

Document US 5,005,957 discloses an objective lense system for endoscopes comprising, in the order from the object side, a first lense unit having negative reflective power and a second lense unit having positive refelctive power, said first lense unit comprising a surface which is concave on the image side and an aspherical surface which is arranged on the object side.

SUMMARY OF THE INVENTION

To attain the above-described object, the present invention provides an endoscope according to claim 1, wherein a decentered optical system including at least one curved surface with a rotationally asymmetric surface configuration has no axis of rotational symmetry in nor out of the surface, wherein rotationally asymmetric aberrations due to decentration are corrected by the rotationally asymmetric surface.

According to a first aspect of the present invention, there is provided a decentered optical system including at least one rotationally asymmetric surface having no axis of rotational symmetry in nor out of the surface, wherein, assuming that a light ray emanating from the center of an object point and passing through the center of a pupil to reach the center of an image is defined as a principal ray, and that a Y-axis is taken in the decentration plane of the surface, and an X-axis is taken in a direction perpendicularly intersecting the Y-axis, and further an axis constituting an orthogonal coordinate system in combination with the X- and Y-axes is defined as a Z-axis, and further that the principal ray and a light ray which is parallel to the principal ray at a slight distance d in the X-axis direction are made to enter the optical system from the entrance side thereof, and the sine of an angle formed between the two rays as projected on the XZ-plane at the exit side of the optical system is denoted by NA'X, and further that a value obtained by dividing the distance d between the parallel rays by NA'X is denoted by FX, and the focal length in the X-axis direction of that portion of the rotationally asymmetric surface on which the axial principal ray strikes is denoted by FXn, the following condition is satisfied to correct rotationally asymmetric aberrations due to decentration by the rotationally asymmetric surface:

$$-1000 < FX/FXn < 1000 \tag{1-1}$$

According to a second aspect of the present invention, there may be provided a decentered optical system including at least one rotationally asymmetric surface having no axis of rotational symmetry in nor out of the surface, wherein, assuming that a light ray emanating from the center of an object point and passing through the center of a pupil to reach the center of an image is defined as a principal ray, and that a Y-axis is taken in the decentration plane of the surface, and an X-axis is taken in a direction perpendicularly intersecting the Y-axis, and further an axis constituting an orthogonal coordinate system in combination with the X- and Y-axes is defined as a Z-axis, and further that the principal ray and a light ray which is parallel to the principal ray at a slight distance d in the Y-axis direction are made to enter the optical system from the entrance side thereof, and the sine of an angle formed between the two rays in the YZ-plane at the exit side of the optical system is denoted by NA'Y, and further that a value obtained by dividing the distance d between the parallel rays by NA'Y is denoted by FY, and the focal length in the Y-axis direction of that portion of the rotationally asymmetric surface on which the axial principal ray strikes is denoted by FYn, the following condition is satisfied to correct rotationally asymmetric aberrations due to decentration by the rotationally asymmetric surface:

$$-1000 < FY/FYn < 1000 \tag{2-1}$$

According to a third aspect of the present invention, there may be provided a decentered optical system including at least one rotationally asymmetric surface having no axis of rotational symmetry in nor out of the surface, wherein, assuming that a light ray emanating from the center of an object point and passing through the center of a pupil to reach the center of an image is defined as a principal ray, and that a Y-axis is taken in the decentration plane of the surface, and an X-axis is taken in a direction perpendicularly intersecting the Y-axis, and further an axis constituting an orthogonal coordinate system in combination with the X- and Y-axes is defined as a Z-axis, and further that the principal ray and a light ray which is parallel to the principal ray at a slight distance d in the X-axis direction are made to enter the optical system from the entrance side thereof, and the sine of an angle formed between the two rays as projected on the XZ-plane at the exit side of the optical system is denoted by NA 'X, and a value obtained by dividing the distance d between the parallel rays by NA 'X is denoted by FX, and further that the principal ray and a light ray which is parallel to the principal ray at a slight distance d in the Y-axis direction are made to enter the optical system from the entrance side thereof, and the sine of an angle formed between the two rays in the YZ-plane at the exit side of the optical system is denoted by NA'Y, and a value obtained by dividing the distance d between the parallel rays by NA 'Y is denoted by FY, the following condition is satisfied to correct rotationally asymmetric aberrations due to decentration by the rotationally asymmetric surface:

$$0.01 < |FY/FX| < 100 \tag{3-1}$$

First of all, a coordinate system used in the following description will be explained. It is assumed that a light ray passing through the center of an object point and passing through the center of a stop to reach the center of an image plane is defined as an axial principal ray. It is also assumed that an optical axis defined by a straight line intersecting the first surface of the optical system is defined as a Z-axis, and that an axis perpendicularly intersecting the Z-axis in the decentration plane of each surface constituting the optical system is defined as a Y-axis, and further that an axis perpendicularly intersecting the optical axis and also perpendicularly intersecting the Y-axis is defined as an X-axis.

Ray tracing will be described by forward ray tracing in which light rays are traced from the object toward the image plane.

In general, a spherical lens system comprising only a spherical lens is arranged such that aberrations produced by spherical surfaces, such as spherical aberration, coma and curvature of field, are corrected with some surfaces by canceling the aberrations each other, thereby reducing aberrations as a whole. On the other hand, aspherical surfaces and the like are used to favorably effect aberration correction with a minimal number of surfaces. The reason for this is to reduce various aberrations which would be produced by spherical surfaces.

However, in a decentered optical system, rotationally asymmetric aberrations due to decentration cannot be corrected by a rotationally symmetric optical system.

The arrangement and operation of the present invention will be described below.

The basic arrangement of the present invention is as follows: A decentered optical system includes at least one curved surface with a rotationally asymmetric surface configuration having no axis of rotational symmetry in nor out of the surface, and rotationally asymmetric aberrations due to decentration are corrected by the rotationally asymmetric surface.

When a rotationally symmetric optical system is decentered, rotationally asymmetric aberrations occur, and it is impossible to correct these aberrations only by the rotationally symmetric optical system. Rotationally asymmetric aberrations due to decentration include image distortion, curvature of field, and astigmatic and comatic aberrations, which occur even on the axis. Fig. 54 shows curvature of field produced by a decentered concave mirror M. Fig. 55 shows axial astigmatism produced by a decentered concave mirror M. Fig. 56 shows axial comatic aberration produced by a decentered concave mirror M. Accordingly to the present invention, a rotationally asymmetric surface is disposed in the optical system to correct such rotationally asymmetric aberrations due to decentration.

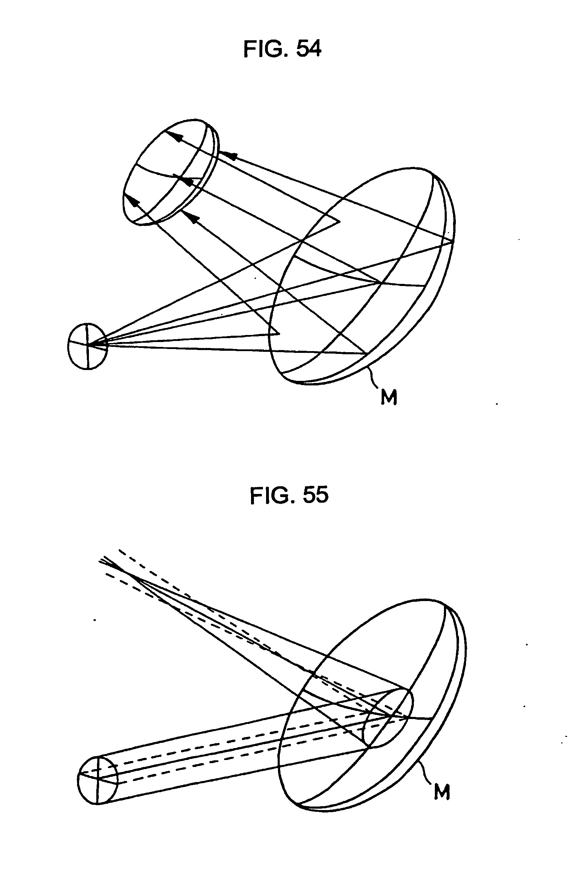

Rotationally asymmetric aberrations produced by the decentered concave mirror M include rotationally asymmetric curvature of field such as that shown in Fig. 54. For example, when light rays from an infinitely distant object point are incident on the decentered concave mirror M, the light rays are reflected by the concave mirror M to form an image. In this case, the back focal length from that portion of the concave mirror M on which the light rays strike to the image surface is a half the curvature of the portion on which the light rays strike. Consequently, an image surface tilted with respect to the axial principal ray is formed as shown in Fig. 54. It has heretofore been impossible to correct such rotationally asymmetric curvature, of field by a rotationally symmetric optical system. The tilted curvature of field can be corrected by forming the concave mirror M from a rotationally asymmetric surface, and, in this example, arranging it such that the curvature is made strong (refracting power is increased) in the positive Y-axis direction (the upward direction in the figure), whereas the curvature is made weak (refracting power is reduced) in the negative Y-axis direction. It is also possible to obtain a flat image surface with a minimal number of constituent surfaces by disposing a rotationally asymmetric surface having the same effect as that of the above-described arrangement in the optical system separately from the concave mirror M.

Next, rotationally asymmetric astigmatism will be explained. A decentered concave mirror M produces astigmatism even for axial rays, as shown in Fig. 55, as in the case of the above. The astigmatism can be corrected by appropriately changing the curvature in the X-axis direction of the rotationally asymmetric surface as in the case of the above.

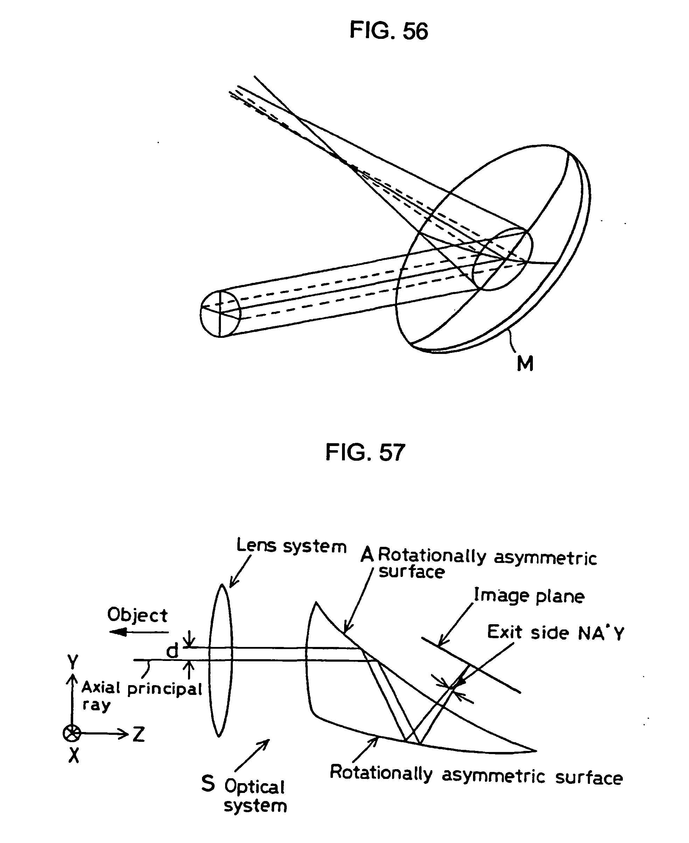

Rotationally asymmetric coma will be explained below. A decentered concave mirror M produces coma even for axial rays, as shown in Fig. 56, as in the case of the above.

The coma can be corrected by changing the tilt of the rotationally asymmetric surfce according as the distance from the origin of the X-axis increases, and further appropriately changing the tilt of the surface according to the sign (positive or negative) of the Y-axis.

As the above-described rotationally asymmetric surface, it is desirable to use a plane-symmetry three-dimensional surface characterized by having only one plane of symmetry.

The term "three-dimensional surface" as used in the present invention means a surface which is defined by the following equation:

$$Z = C_2$$

$$+ C_3 y + C_4 x$$

$$+ C_5 y^2 + C_6 yx + C_7 x^2$$

$$+ C_8 y^3 + C_9 y^2 x + C_{10} yx^2 + C_{11} x^3$$

$$+ C_{12} y^4 + C_{13} y^3 x + C_{14} y^2 x^2 + C_{15} yx^3 + C_{16} x^4$$

$$+ C_{17} y^5 + C_{18} y^4 x + C_{19} y^3 x^2 + C_{20} y^2 x^3 + C_{21} yx^4$$

$$+ C_{22} x^5$$

$$+C_{23}y^6+C_{24}y^5x+C_{25}y^4x^2+C_{26}y^3x^3+C_{27}y^2x^4$$

$$+C_{28}yx^5+C_{29}x^6$$

$$+C_{30}y^7+C_{31}y^6x+C_{32}y^5x^2+C_{33}y^4x^3+C_{34}y^3x^4$$

$$+C_{35}y^2x^5+C_{36}yx^6+C_{37}x^7 \tag{a}$$

where $C_m$ (m is an integer of 2 or higher) are coefficients.

In general, the above-described three-dimensional surface does not have planes of symmetry in both the XZ- and YZ-planes. In the present invention, a three-dimensional surface having only one plane of symmetry parallel to the YZ-plane is obtained by making all terms with odd-numbered powers of x zero. For example, in the above defining equation (a), the coefficients of the terms $C_4$, $C_6$, $C_9$· $C_{11}$, $C_{13}$, $C_{15}$, $C_{18}$, $C_{20}$, $C_{22}$, $C_{24}$, $C_{26}$, $C_{28}$, $C_{31}$, $C_{33}$, $C_{35}$, $C_{37}$, ... are set equal to zero. By doing so, it is possible to obtain a three-dimensional surface having only one plane of symmetry parallel to the YZ-plane.

A three-dimensional surface having only one plane of symmetry parallel to the XZ-plane is obtained by making all terms with odd-numbered powers of y zero. For example, in the above defining equation (a), the coefficients of the terms $C_3$, $C_6$, $C_8$· $C_{10}$, $C_{13}$, $C_{15}$, $C_{17}$, $C_{19}$, $C_{21}$, $C_{24}$, $C_{26}$, $C_{28}$, $C_{30}$, $C_{32}$, $C_{34}$, $C_{36}$, ... are set equal to zero. By doing so, it is possible to obtain a three-dimensional surface having only one plane of symmetry parallel to the XZ-plane. The use of a three-dimensional surface having such a plane of symmetry makes it possible to improve the productivity.

Rotationally asymmetric aberrations due to decentration can be effectively corrected by using a three-dimensional surface having either a plane of symmetry parallel to the YZ-plane or a plane of symmetry parallel to the XZ-plane.

It should be noted that the above defining equation is shown as merely an example, and that the feature of the present invention resides in that rotationally asymmetric aberrations due to decentration are corrected by a rotationally asymmetric surface having only one plane of symmetry. Therefore, the same advantageous effect can be obtained for any other defining equation.

It is desirable that the plane of symmetry of the rotationally asymmetric surface should be disposed in a plane approximately coincident with the decentration plane, which is the direction of decentration of each surface constituting the optical system.

If the rotationally asymmetric surface is a three-dimensional surface which is disposed in the decentered optical system and which has a plane of symmetry approximately coincident with the decentration plane of each decentered surface, both sides of the plane of symmetry can be made symmetric. This makes it possible to favorably effect aberration correction and to improve the productivity to a considerable extent.

It is also desirable to use the rotationally asymmetric surface as a reflecting surface.

If the above-described three-dimensional surface is formed as a reflecting surface, aberration correction can be made favorably. If a rotationally asymmetric surface is used as a reflecting surface, no chromatic aberration occurs in contrast to a case where it is used as a transmitting surface. Moreover, even if the tilt of the surface is small, the surface can bend light rays. Accordingly, the amount of other aberration produced by the surface is also small. In other words, when the same refracting power is to be obtained, the amount of aberration produced by a reflecting surface is smaller than by a refracting surface.

In this case, it is desirable for the reflecting surface to be a surface having totally reflecting action or reflecting action.

If the reflecting surface is a totally reflecting surface tilted with respect to light rays so that the light rays are incident thereon at an angle exceeding the critical angle, a high reflectivity can be obtained. The reflecting surface is preferably a reflecting surface having a thin film of a metal, e.g. aluminum or silver, formed thereon, or a reflecting surface formed from a dielectric multilayer film. In the case of a metal thin film having reflecting action, a high reflectivity can be readily obtained. The use of a dielectric reflecting film is advantageous in a case where a reflecting film having wavelength selectivity or minimal absorption is to be formed.

The rotationally asymmetric surface having only one plane of symmetry can also be used as a back-coated mirror.

By forming the above-described reflecting surface from a back-coated mirror, curvature of field can be reduced.

The reason for this is as follows: When concave mirrors of the same focal length are to be formed from a back-coated mirror and a surface-coated mirror, respectively, the back-coated mirror can have a greater radius of curvature by an amount corresponding to the refractive index and thus produces a smaller amount of aberration, particularly curvature of field.

Assuming that a light ray emanating from the center of an object point and passing through the center of a pupil to reach the center of an image is defined as a principal ray, and that a Y-axis is taken in the decentration plane of each surface, and an X-axis is taken in a direction perpendicularly intersecting the Y-axis, and further an axis constituting an orthogonal coordinate system in combination with the X- and Y-axes is defined as a Z-axis, and further that the principal ray and a light ray which is parallel to the principal ray at a slight distance d in the X-axis direction are made to enter the optical system from the entrance side thereof, and the sine of an angle formed between the two rays as projected on the XZ-plane at the exit side of the optical system is denoted by NA'X, and further that a value obtained by dividing the distance d between the parallel rays by NA'X is denoted by FX, and the focal length in the X-axis direction of that portion of the rotationally asymmetric surface on which the axial principal ray strikes is denoted by FXn, it is desirable to satisfy the following condition:

$$-1000 < FX/FXn < 1000 \tag{1-1}$$

The focal length of each surface of the optical system according to the present invention will be described. It is preferable from the viewpoint of aberration correction to satisfy the above condition (1-1) on the assumption that, as shown in Fig. 57, the direction of decentration of the optical system S is taken in the Y-axis direction, and that a light ray of height d in the YZ-plane which is parallel to the axial principal ray of the optical system S is made to enter the optical system S from the object side, and the sine of an angle formed between the parallel light and the axial principal ray as they are projected on the YZ-plane after exiting from the optical system S is denoted by NA 'Y, and further that d/NA'Y is defined as a focal length FY in the Y-axis direction, and a focal length FX in the X-axis direction is similarly defined, and further that the focal length in the X-axis direction of that portion of a specific rotationally asymmetric surface A according to the present invention on which the axial principal ray strikes is denoted by FXn.

If FX/FXn is not larger than the lower limit of the condition (1-1), i.e. -1000, or not smaller than the upper limit, i.e. 1000, the focal length of the rotationally asymmetric surface becomes excessively short on the negative side and the positive side, respectively, in comparison to the focal length FX of the entire optical system. Consequently, the refracting power of the rotationally asymmetric surface becomes excessively strong, and aberrations produced by the rotationally asymmetric surface cannot be corrected by another surface.

It is even more desirable from the viewpoint of aberration correction to satisfy the following condition:

$$-100 < FX/FXn < 100 \tag{1-2}$$

By satisfying the condition (1-2), rotationally asymmetric aberrations can be corrected even more favorably.

It is still more desirable from the viewpoint of aberration correction to satisfy the following condition:

$$-10 < FX/FXn < 10 \tag{1-3}$$

By satisfying the condition (1-3), rotationally asymmetric aberrations can be corrected even more favorably.

Assuming that a light ray emanating from the center of an object point and passing through the center of a pupil to reach the center of an image is defined as a principal ray, and that a Y-axis is taken in the decentration plane of each surface, and an X-axis is taken in a direction perpendicularly intersecting the Y-axis, and further an axis constituting an orthogonal coordinate system in combination with the X- and Y-axes is defined as a Z-axis, and further that the principal ray and a light ray which is parallel to the principal ray at a slight distance d in the Y-axis direction are made to enter the optical system from the entrance side thereof, and the sine of an angle formed between the two rays in the YZ-plane at the exit side of the optical system is denoted by NA'Y, and further that a value obtained by dividing the distance d between the parallel rays by NA'Y is denoted by FY, and further the focal length in the Y-axis direction of that portion of the rotationally asymmetric surface on which the axial principal ray strikes is denoted by FYn, it is desirable to satisfy the following condition:

$$-1000 < FY/FYn < 1000 \tag{2-1}$$

If FY/FYn is not larger than the lower limit of the condition (2-1), i.e. -1000, or not smaller than the upper limit, i.e. 1000, the focal length of the rotationally asymmetric surface becomes excessively short on the negative side and the positive side, respectively, in comparison to the focal length FY of the entire optical system. Consequently, the refracting power of the rotationally asymmetric surface becomes excessively strong, and aberrations produced by the rotationally asymmetric surface cannot be corrected by another surface.

It is even more desirable from the viewpoint of aberration correction to satisfy the following condition:

$$-100 < FY/FYn < 100 \qquad (2\text{-}2)$$

By satisfying the condition (2-2), rotationally asymmetric aberrations can be corrected even more favorably.
It is still more desirable from the viewpoint of aberration correction to satisfy the following condition:

$$-10 < FY/FYn < 10 \qquad (2\text{-}3)$$

By satisfying the condition (2-3), rotationally asymmetric aberrations can be corrected even more favorably.
It is preferable from the viewpoint of aberration correction to satisfy the following condition:

$$0.01 < |FY/FX| < 100 \qquad (3\text{-}1)$$

where FX and FY are the focal lengths of the entire optical system.
If |FY/FX| is not larger than the lower limit of the condition (3-1), i.e. 0.01, or not smaller than the upper limit, i.e. 100, the focal lengths in the X- and Y-axis directions of the entire optical system become excessively different from each other. Consequently, it becomes difficult to correct image distortion favorably, and the image is undesirably distorted.
It is even more desirable from the viewpoint of aberration correction to satisfy the following condition:

$$0.1 < |FY/FX| < 10 \qquad (3\text{-}2)$$

By satisfying the condition (3-2), rotationally asymmetric aberrations can be corrected even more favorably.
It is still more desirable from the viewpoint of aberration correction to satisfy the following condition:

$$0.5 < |FY/FX| < 2 \qquad (3\text{-}3)$$

By satisfying the condition (3-3), rotationally asymmetric aberrations can be corrected even more favorably.
The optical system according to the present invention may comprise only a first reflecting surface, wherein light rays are reflected by the first reflecting surface in a direction different from a direction in which the light rays are incident thereon. If the first reflecting surface is tilted with respect to the axial principal ray, aberrations due to decentration are produced when light rays are reflected at the surface. Rotationally asymmetric aberrations due to decentration can be satisfactorily corrected by forming the reflecting surface from a rotationally asymmetric surface. If the reflecting surface is not formed from a rotationally asymmetric surface, a large amount of rotationally asymmetric aberration is produced, and the resolution is degraded. Further, aberration correction can be made even more effectively by satisfying the above conditions (1-1) to (3-3).
The optical system according to the present invention may comprise a first reflecting surface and a first transmitting surface, wherein light rays enter the optical system through the first transmitting surface and are reflected by the first reflecting surface to exit from the optical system through the first transmitting surface in a direction different from a direction in which the light rays are incident on the first transmitting surface. By adding one transmitting surface, the Petzval sum of the optical system can be reduced. In the case of transmitting and reflecting surfaces of positive power, Petzval curvatures cancel each other. Accordingly, power can be dispersed, and the Petzval sum can be reduced. Thus, it becomes possible to correct curvature of field.
It is preferable from the viewpoint of favorably correcting field curvature that the first transmitting surface and the first reflecting surface should have powers of the same sign at their axial principal ray transmitting and reflecting regions.
The optical system according to the present invention may comprise a first reflecting surface, a first transmitting surface, and a second transmitting surface, wherein light rays enter the optical system through the first transmitting surface and are reflected by the first reflecting surface to exit from the optical system through the second transmitting surface in a direction different from a direction in which the light rays are incident on the first transmitting surface. By dividing the above-described first transmitting surface into two surfaces, curvature of field can be corrected even more favorably. In a case where the first and second transmitting surfaces constitute a transmission lens, it is possible to suppress divergence of light rays at the first reflecting surface and hence possible to reduce the size of the first reflecting surface. If the optical system is arranged such that light rays travel successively through the first transmitting surface, the first reflecting surface, and the second transmitting surface, it is possible to form the first reflecting surface from a back-coated mirror. If the first reflecting surface is formed from a back-coated mirror, curvature of field can be corrected more favorably than in the case of a surface-coated mirror. If either or both of the first and second transmitting surfaces are given power different in sign from the power of the first reflecting surface, curvature of field can be corrected approximately completely. On the other hand, if the powers of the first and second transmitting surfaces are made approximately zero, favorable effects can be produced on chromatic aberrations. That is, the first reflecting surface produces no chromatic aberration in theory and hence need not correct chromatic aberration with another surface. Therefore, the powers of the first and second transmitting surfaces are made approximately zero so that no chromatic aberration is produced by these surfaces. This makes it possible to construct an optical system having minimal chromatic aberration as a whole.

The optical system according to the present invention may comprise a first reflecting surface, a second reflecting surface, and a first transmitting surface, wherein light rays enter the optical system through the first transmitting surface and are reflected by the first reflecting surface and then reflected by the second reflecting surface to exit from the optical system through the first transmitting surface. If the optical system comprises a pair of first and second reflecting surfaces and a first transmitting surface, the optical axis can be folded by the two reflecting surfaces. This enables a reduction in the size of the optical system. Moreover, because reflection takes place an even number of times, an image can be formed without being reversed. Further, it is possible to vary the powers of the two reflecting surfaces. Accordingly, the principal point can be positioned in front of or behind the optical system by using a combination of a positive power and a negative power or a combination of a negative power and a positive power. This also makes it possible to produce favorable effects on the curvature of field. Furthermore, it is also possible to substantially eliminate field curvature by forming the two reflecting surfaces from back-coated mirrors.

The optical system according to the present invention may comprise a first reflecting surface, a second reflecting surface, a first transmitting surface, and a second transmitting surface, wherein light rays enter the optical system through the first transmitting surface and are reflected by the first reflecting surface and then reflected by the second reflecting surface to exit from the optical system through the second transmitting surface. If the optical system comprises a pair of first and second reflecting surfaces, and a pair of first and second transmitting surfaces, the optical axis can be folded by the two reflecting surfaces, and thus the optical system can be constructed in a compact form, as stated above. Moreover, the presence of two transmitting surfaces makes it possible to produce even more favorable effects on the principal point position and field curvature. Furthermore, even more favorable aberration correcting performance can be obtained by forming the two reflecting surfaces from back-coated mirrors.

In the above-described case, the optical system may be arranged such that the optical path has portions intersecting each other. If some portions of the optical path intersect each other, it is possible to construct the optical system in a compact form. The arrangement makes it possible to dispose the object and image planes approximately perpendicular to each other. Accordingly, the optical system and an imaging device or the like, which is disposed at the image-formation position, can be disposed approximately parallel to each other. Thus, an imaging optical system of low height, for example, can be constructed.

In the above-described case, the optical system may be arranged such that the optical path has no portions intersecting each other. If no portions of the optical path intersect each other, a Z-shaped optical path can be formed. Consequently, the angle of decentration at each reflecting surface can be reduced, and the amount of aberration due to decentration can be reduced. Therefore, the arrangement is favorable from the viewpoint of correcting aberrations due to decentration. Further, the optical path from the object to the optical system and the optical path from the optical system to the image plane can be disposed approximately parallel to each other. In particular, when the optical system is used as an observation optical system or an ocular optical system, the direction for observation of an object and the direction for observation through the optical system are identical with each other. Accordingly, it is possible to make observation without feeling incongruous.

In the above-described case, the first transmitting surface and second reflecting surface of the optical system may be the identical surface. If the first transmitting surface and the second reflecting surface are the identical surface, the number of surfaces to be formed is three. Accordingly, the productivity of the optical system improves.

In the above-described case, the first reflecting surface and second transmitting surface of the optical system may be the identical surface. If the first reflecting surface and the second transmitting surface are the identical surface, the number of surfaces to be formed is three. Accordingly, the productivity of the optical system improves.

The optical system according to the present invention may comprise a first reflecting surface, a second reflecting surface, a third reflecting surface, a first transmitting surface, and a second transmitting surface, wherein light rays enter the optical system through the first transmitting surface and are reflected successively by the first, second and third reflecting surfaces to exit from the optical system through the second transmitting surface in a direction different from a direction in which the light rays are incident on the first transmitting surface. If the optical system comprises three reflecting surfaces and two transmitting surfaces, the degree of freedom further increases, which is favorable from the viewpoint of aberration correction.

In this case, the first transmitting surface and second reflecting surface of the optical system may be the identical surface. Alternatively, the first reflecting surface and the third reflecting surface may be the identical surface. Alternatively, the first transmitting surface and the third reflecting surface may be the identical surface. Alternatively, the second transmitting surface and the second reflecting surface may be the identical surface. By forming at least two surfaces from the identical surface configuration in this way, the productivity of the optical system improves.

The optical system according to the present invention may comprise at least a first reflecting surface, a second reflecting surface, a third reflecting surface, a fourth reflecting surface, a first transmitting surface, and a second transmitting surface, wherein light rays enter the optical system through the first transmitting surface and are reflected successively by the first, second, third and fourth reflecting surfaces to exit from the optical system through the second transmitting surface in a direction different from a direction in which the light rays are incident on the first transmitting surface. If the optical system comprises four reflecting surfaces, and two transmitting surfaces, the degree of freedom further increases, which is favorable from the viewpoint of aberration correction.

In this case, the first transmitting surface and second reflecting surface of the optical system may be the identical surface. The second transmitting surface and third reflecting surface of the optical system may be the identical surface. The first and third reflecting surfaces of the optical system may be the identical surface. The second and fourth reflecting surfaces of the optical system may be the identical surface. The first transmitting surface and second and fourth reflecting surfaces of the optical system may be the identical surface. The optical system may be arranged such that the first transmitting surface and the second reflecting surface are the identical surface, and that the first and third reflecting surface are the identical surface. The optical system may be arranged such that the first transmitting surface and the second reflecting surface are the identical surface, and that the second transmitting surface and the third reflecting surface are the identical surface. The optical system may be arranged such that the first and third reflecting surfaces are the identical surface, and that the second and fourth reflecting surfaces are the identical surface. The optical system may be arranged such that the second and fourth reflecting surfaces are the identical surface, and that the second transmitting surface and the third reflecting surface are the identical surface. The optical system may be arranged such that the first transmitting surface and the second and fourth reflecting surfaces are the identical surface, and that the second transmitting surface and the third reflecting surface are the identical surface. The optical system may be arranged such that the first transmitting surface and the second and fourth reflecting surfaces are the identical surface, and that the first and third reflecting surfaces are the identical surface. The optical system may be arranged such that the first transmitting surface and the second reflecting surface are the identical surface, and that the second transmitting surface and the first and third reflecting surfaces are the identical surface. The optical system may be arranged such that the second and fourth reflecting surfaces are the identical surface, and that the second transmitting surface and the first and third reflecting surfaces are the identical surface. Alternatively, the optical system may be arranged such that the first transmitting surface and the second and fourth reflecting surfaces are the identical surface, and that the second transmitting surface and the first and third reflecting surfaces are the identical surface. By forming at least two surfaces from the identical surface configuration in this way, the productivity of the optical system improves.

The optical system according to the present invention may be produced by first machining a rotationally asymmetric surface and then machining a rotationally symmetric surface. If a rotationally asymmetric surface is first formed and then a rotationally symmetric surface is machined, positioning of each surface is facilitated, and the manufacturing accuracy improves.

The optical system according to the present invention may be produced by cementing together an optical component having at least one rotationally asymmetric surface machined thereon and an optical component having another surface machined thereon. If a decentered optical system is produced by cementing together an optical component having a rotationally asymmetric surface formed thereon and an optical component having another surface machined thereon, the rotationally asymmetric surface is formed on a planar thin member by machining. Therefore, it is possible to avoid degradation of the machining accuracy due to distortion or the like of the optical component during machining. In a case where a rotationally asymmetric surface is produced by injection molding, the optical component is preferably as thin as possible. The thinner the optical component, the further the distortion of the resin after the injection molding can be reduced.

When the optical system according to the present invention is arranged as an ocular optical system having a folded optical path, a reflecting surface constituting the folded optical path may have power. If an ocular optical system is constructed by using a folded optical path, it is possible to give power to a reflecting surface, and a transmission lens can be omitted. Moreover, the optical system can be constructed in a compact form by folding the optical path. It is also possible to give power to an inversion prism, which is even more desirable.

When the optical system according to the present invention is arranged as an image-forming optical system having a folded optical path, a reflecting surface constituting the folded optical path may have power. If an image-forming optical system is constructed by using a folded optical path, it is possible to give power to a reflecting surface, and a transmission lens can be omitted. Moreover, the optical system can be constructed in a compact form by folding the optical path. It is also possible to give power to an inversion prism, which is even more desirable.

An afocal optical system can be constructed of a combination of the above-described image-forming optical system having a folded optical path and an ocular optical system. For example, a prism optical system for obtaining an inverted image can be arranged as an image-forming optical system by giving power to it. Thus, the optical system can be constructed in a compact form. It is particularly preferable that an objective lens system of a real-image finder in a finder optical system of a camera or the like should be formed from an optical system having a rotationally asymmetric surface used in an inversion prism. By doing so, it is possible to reduce the size of the objective lens system and to simplify the structure thereof.

The afocal optical system may be arranged to obtain an erect image by an even number of reflections. In particular, when a human being makes an observation, the ease of observation is markedly improved by providing an erect image.

An afocal optical system can be constructed of a combination of an image-forming optical system and the above-described ocular optical system having a folded optical path. Such a combination makes it possible to reduce the size of an afocal optical system of short focal length in particular, which is complicated in arrangement. In the case of an ocular optical system having a focal length of 100 mm or less, the effect of reducing the size is even more remarkable.

In this case also, the afocal optical system may be arranged to obtain an erect image by an even number of reflections. In particular, when a human being makes an observation, the ease of observation is markedly improved by providing an erect image.

An afocal optical system can be constructed of a combination of the above-described image-forming optical system having a folded optical path and the above-described ocular optical system having a folded optical path. Such a combination makes it possible to construct an afocal optical system in an even more compact form. It is even more desirable to use a rotationally asymmetric surface for an inversion prism and to give power to the prism optical system, thereby simplifying the structure of an objective lens or an ocular lens or omitting it, and thus simplifying the structure of the optical system.

In this case also, the afocal optical system may be arranged to obtain an erect image by an even number of reflections. In particular, when a human being makes an observation, the ease of observation is markedly improved by providing an erect image.

If an optical system for an endoscope is constructed by using the optical system according to the present invention, a compact optical system can be formed because the optical path is folded. If another optical system of positive refracting power is disposed between the endoscope optical system and the image formation position, it is possible to dispose the pupil position in the optical system according to the present invention and to dispose the exit pupil at a distant position. Accordingly, it is possible to reduce the size of the prism optical system while maintaining telecentricity on the image side. If the optical element of positive refracting power is not provided, the telecentricity degrades, and the light-gathering efficiency reduces in a case where a CCD, for example, is used as an imaging device. In a case where an image guide is utilized, the light-gathering efficiency reduces, and it becomes impossible to observe a bright image unless an optical fiber bundle of large numerical aperture is used.

In a case where the above-described positive optical system is formed from a lens of positive power, the positive lens produces image distortion and lateral chromatic aberration to a considerable extent. Therefore, it is preferable from the viewpoint of favorably correcting aberrations to arrange the system such that aberrations produced by the positive lens and aberrations produced by the prism optical system according to the present invention cancel each other. It is preferable from the viewpoint of reducing image distortion produced by the positive lens that the radius of curvature on the image-formation plane side of the positive lens should be smaller than the radius of curvature on the object side. Conversely, the positive lens may have a curvature on the object side thereof and a flat surface on the image-formation plane side and be integrated with an imaging device. By doing so, the productivity of the optical system can be improved. If the positive lens is formed from a rotationally symmetric surface, the productivity of the lens improves. It is also possible to form the positive lens from a rotationally asymmetric surface. In this case, it is possible to correct image distortion even more favorably. If the positive lens is produced in the form a diffraction optical element or a Fresnel lens, it is possible to obtain a thin lens. This is advantageous when it is desired to construct a compact optical system.

In this case, the optical system according to the present invention may be applied to an endoscope using an imaging device. If an optical system for an endoscope is constructed by using the optical system according to the present invention and a two-dimensional imaging device, a compact endoscope can be obtained. The reason for this is that a two-dimensional imaging device comprises an electric board or the like which is thin and has a wide imaging area, and it is therefore preferable to dispose the two-dimensional imaging device at a tilt with respect to an optical axis of light rays from an object from the viewpoint of reducing the overall size of the apparatus.

The optical system according to the present invention may be used in an endoscope objective optical system.

By doing so, it is possible to reduce both the diameter and length of an objective optical system incorporated in a distal end part of an endoscope. Thus, it is possible to solve, particularly, the problem that the endoscope distal end part is likely to become undesirably thick.

A protective transparent plate may be disposed on the object side of the optical system according to the present invention. By doing so, it becomes possible to facilitate removal of dust and water drops from the endoscope distal end part. It is preferable that the protective transparent plate be a transparent plane-parallel plate.

An object-side surface of the optical system according to the present invention may be a plane surface. This makes it possible to facilitate removal of dust and water drops from the endoscope distal end part.

An image-side surface of the optical system according to the present invention may be a plane surface. This makes it possible to accurately position a two-dimensional imaging device and the optical system according to the present invention with respect to each other.

The image-side surface of the optical system according to the present invention may be placed in close contact with an imaging device. By doing so, the assembleability of optical components can be improved.

An optical fiber bundle may be disposed at the image-formation plane of the optical system separately from the optical system. By doing so, replacement of the optical fiber bundle is facilitated.

An optical fiber bundle may be placed in close contact with the image-side surface of the optical system according to the present invention. By doing so, it becomes possible to construct a compact endoscope objective optical system.

The object-side surface of the optical system may be formed from a protective transparent plate. By doing so, it becomes possible to facilitate removal of dust and water drops from the endoscope distal end part. It is preferable that the protective transparent plate be a plane-parallel plate.

The object-side surface of the optical system according to the present invention may be a plane surface. This makes it possible to facilitate removal of dust and water drops from the endoscope distal end part.

A first surface in the distal end part of the endoscope may be made of glass or a crystalline material, e.g. sapphire. By doing so, the optical system in the endoscope distal end part becomes unlikely to be damaged.

The first surface of the endoscope objective optical system may be recessed from the enclosure of the endoscope. By doing so, the distal end portion of the optical system is prevented from being damaged by contacting an object under observation.

The first surface of the endoscope objective optical system may project from the enclosure of the endoscope. This makes it possible to readily remove water drops from the distal end part.

The optical system according to the present invention may comprise a camera adapter for an endoscope to project an observation image onto an imaging device through the optical system. The use of a rotationally asymmetric surface makes it possible to construct the optical system in a compact form. It should be noted that a CCD, a film, etc. may be used as an imaging device.

In this case, a plane glass plate may be provided in front of or behind the optical system according to the present invention. With such an arrangement, it is possible to prevent dust or other foreign matter from entering the optical system when the endoscope camera adapter optical system is detached or attached.

It is possible to provide a device for varying the spacing between the optical system according to the present invention and another optical system or the image-formation plane. With such an arrangement, focusing can be performed.

The arrangement may be such that the sum total of reflections taking place in the optical system according to the present invention and another optical system is an even number. Such an arrangement is preferable because an image can be formed without being reversed, and thus it is possible for an observer to make observation without feeling incongruous.

The camera adapter for an endoscope may comprise an optical system in which the sum total of reflections is an odd number, and an electrically image-inverting circuit. In a case where the number of reflections in the optical system is an odd number, it is preferable to invert the image by electric processing because by doing so an observer can make observation without feeling incongruous.

The camera adapter for an endoscope may have a semitransparent reflecting surface to divide an optical path into two. If the optical path is divided into two by a semitransparent reflecting surface, it is possible to have an observation optical path and a camera optical path and hence possible to perform photographing while making observation.

The observation optical path for an observer may be approximately parallel to an optical axis of light rays entering the endoscope camera adapter from an observation optical system. It is preferable that the observation optical path should be approximately parallel to an optical axis of light rays entering the endoscope camera adapter from the observation optical system. The reason for this is that if the observation optical path is approximately parallel to the optical axis, the observation direction and the direction for controlling observation equipment such as an endoscope coincide with each other, thus allowing an observer to perform observation without feeling incongruous.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

BRIEF DESCRIPTION OF THE DRAWINGS

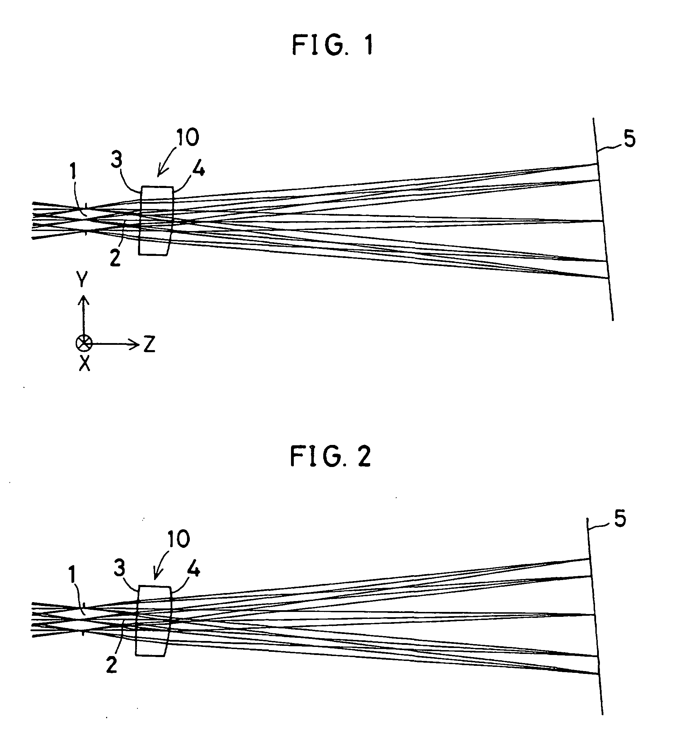

Fig. 1 is a sectional view of an optical system according to Example 1 of the present invention.
Fig. 2 is a sectional view of an optical system according to Example 2 of the present invention.

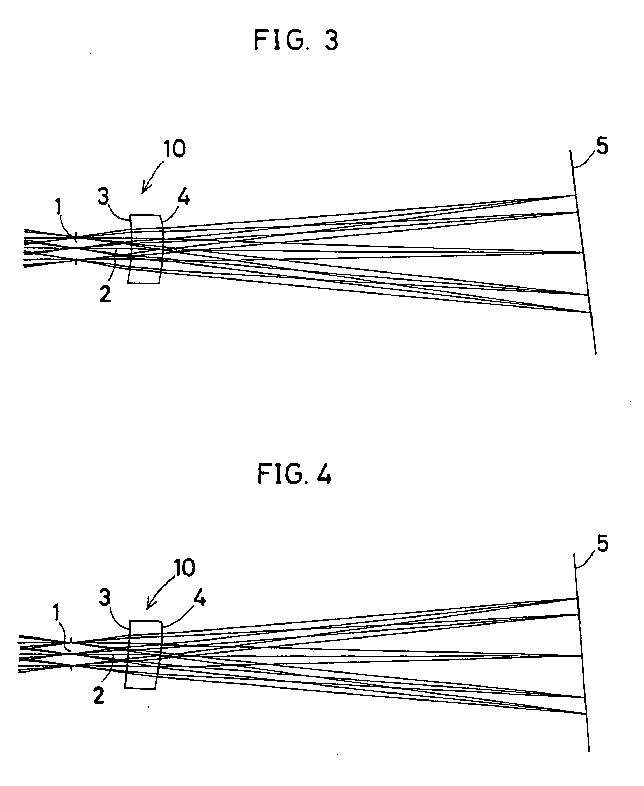

Fig. 3 is a sectional view of an optical system according to Example 3 of the present invention.
Fig. 4 is a sectional view of an optical system according to Example 4 of the present invention.

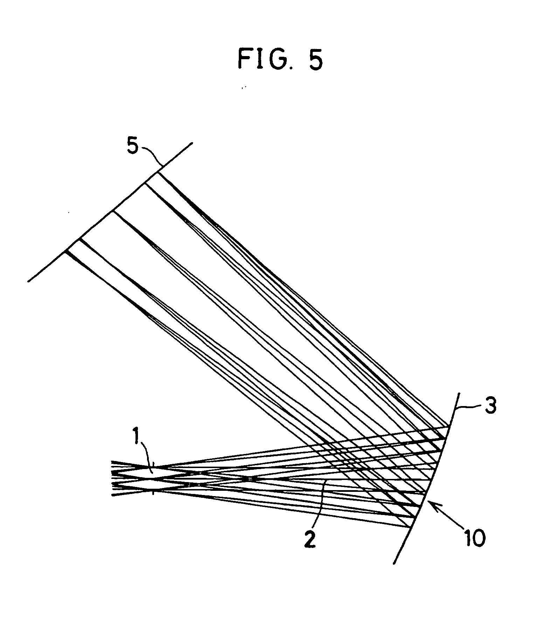

Fig. 5 is a sectional view of an optical system according to Example 5 of the present invention.

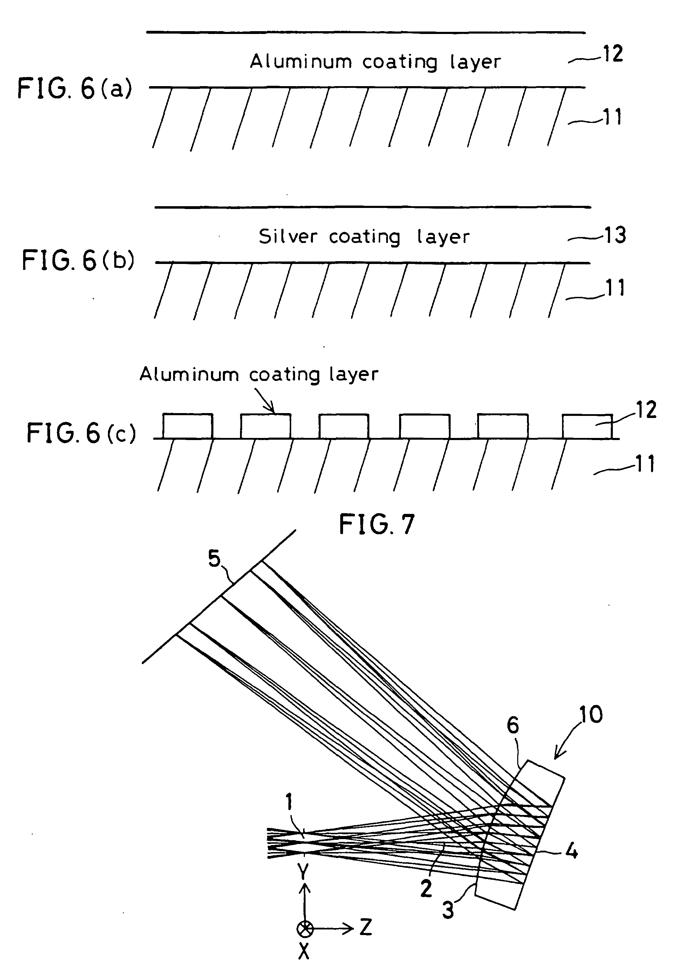

Figs. 6 (a), 6 (b) and 6 (c) illustrate examples of the structures of surfaces having reflecting action in Example 6 of the present invention.
Fig. 7 is a sectional view of an optical system according to Example 7 of the present invention.

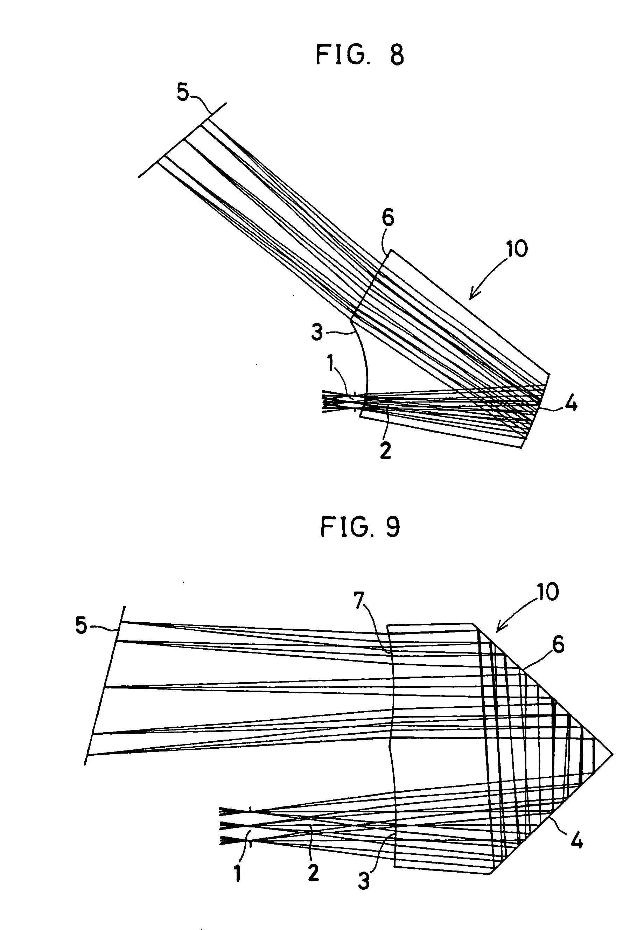

Fig. 8 is a sectional view of an optical system according to Example 8 of the present invention.
Fig. 9 is a sectional view of an optical system according to Example 9 of the present invention.

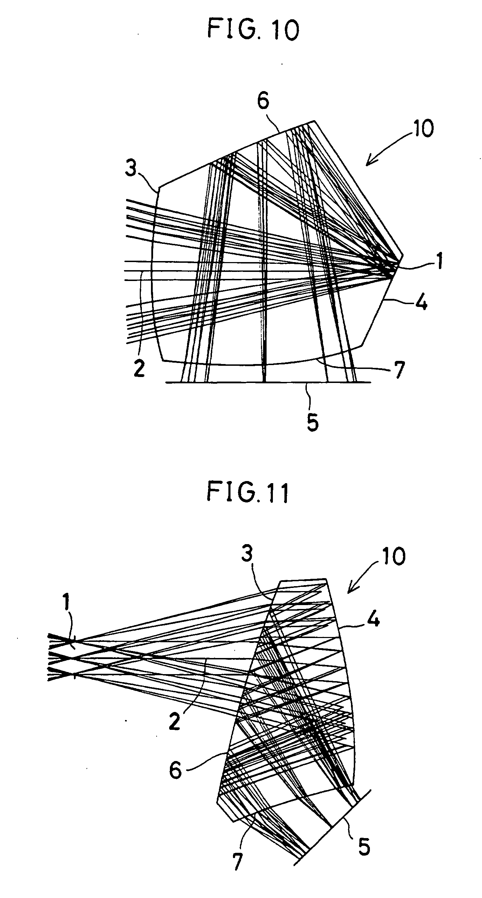

Fig. 10 is a sectional view of an optical system according to Example 10 of the present invention.
Fig. 11 is a sectional view of an optical system according to Example 11 of the present invention.

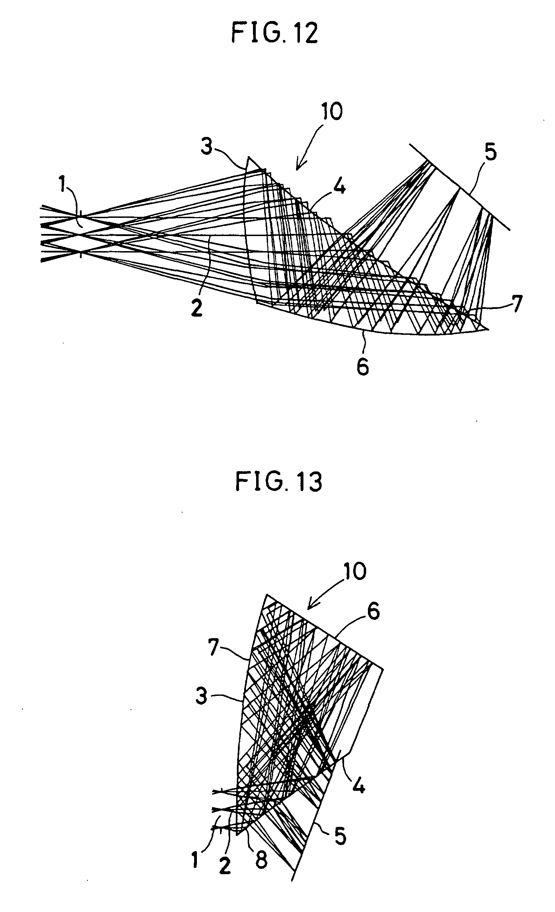

Fig. 12 is a sectional view of an optical system according to Example 12 of the present invention.
Fig. 13 is a sectional view of an optical system according to Example 13 of the present invention.

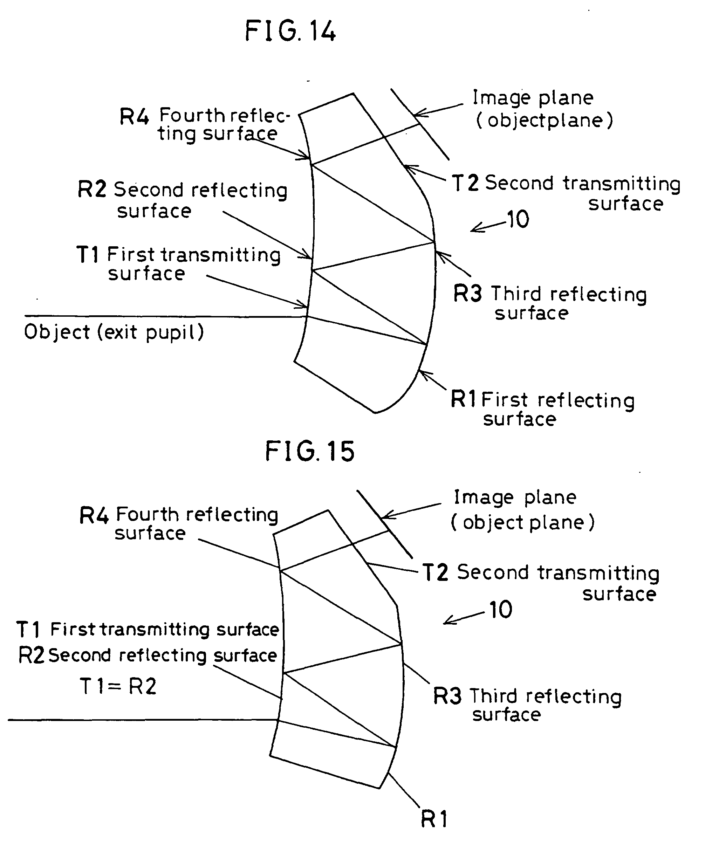

Fig. 14 illustrates an optical ray trace of an optical system according to Example 14 of the present invention.
Fig. 15 illustrates an optical ray trace of an optical system according to Example 15 of the present invention.

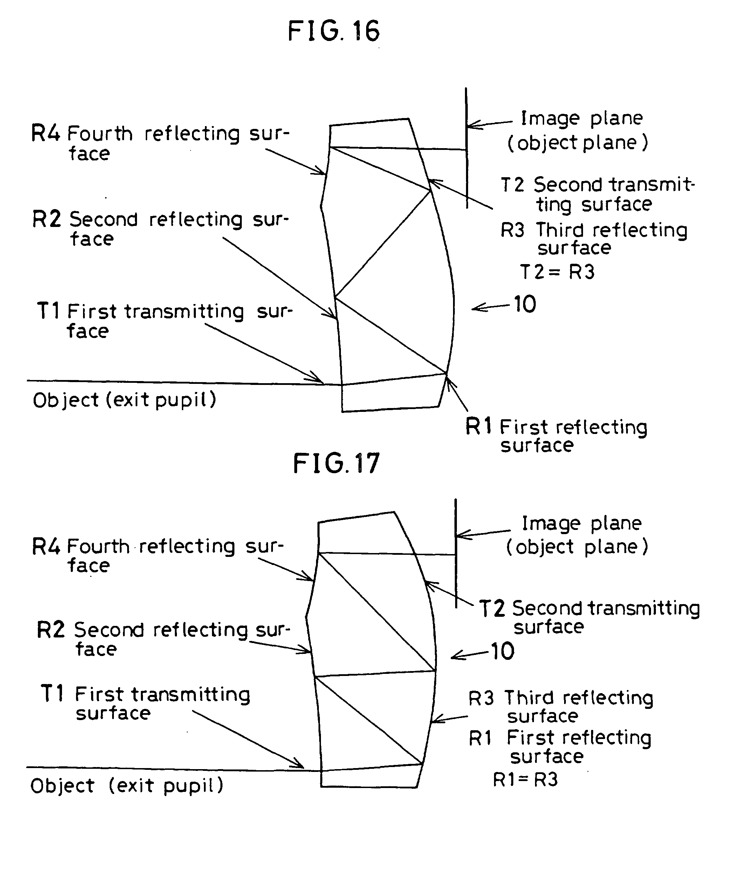

Fig. 16 illustrates an optical ray trace of an optical system according to Example 16 of the present invention.
Fig. 17 illustrates an optical ray trace of an optical system according to Example 17 of the present invention.

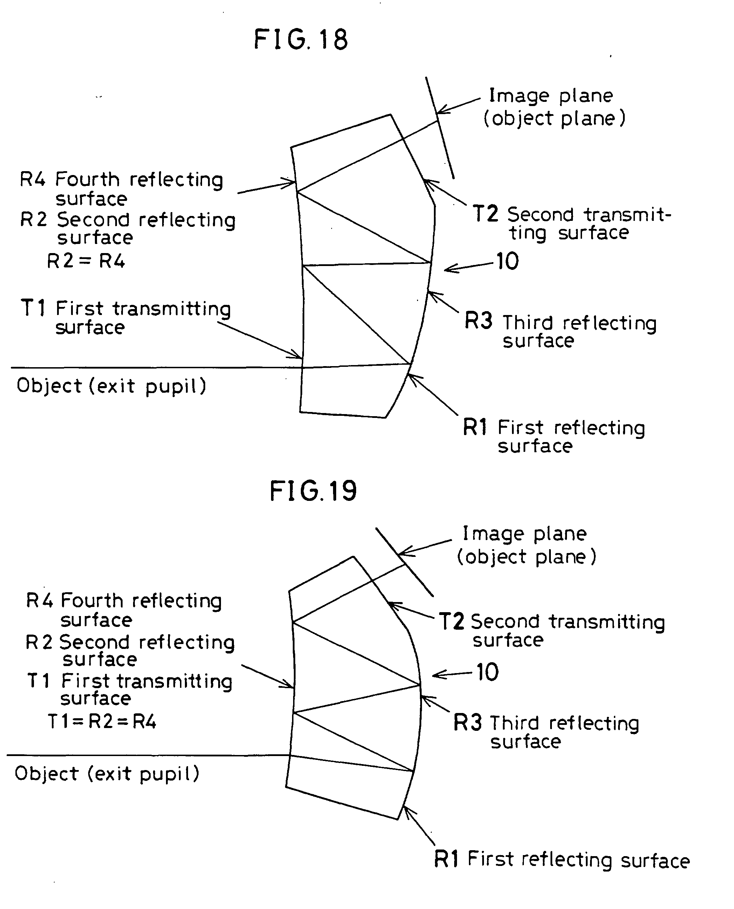

Fig. 18 illustrates an optical ray trace of an optical system according to Example 18 of the present invention.
Fig. 19 illustrates an optical ray trace of an optical system according to Example 19 of the present invention.

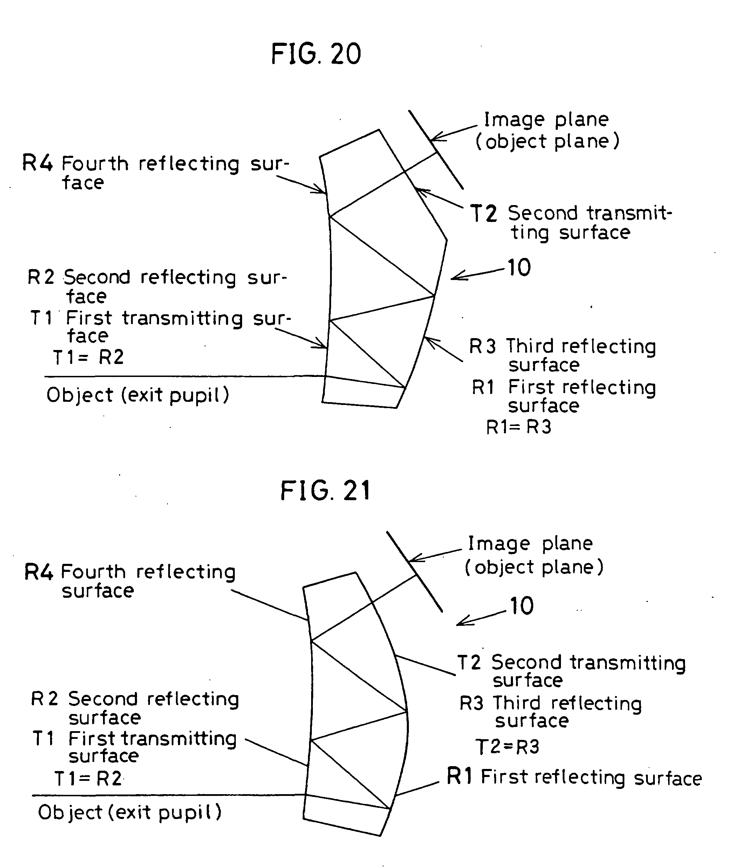

Fig. 20 illustrates an optical ray trace of an optical system according to Example 20 of the present invention.
Fig. 21 illustrates an optical ray trace of an optical system according to Example 21 of the present invention.

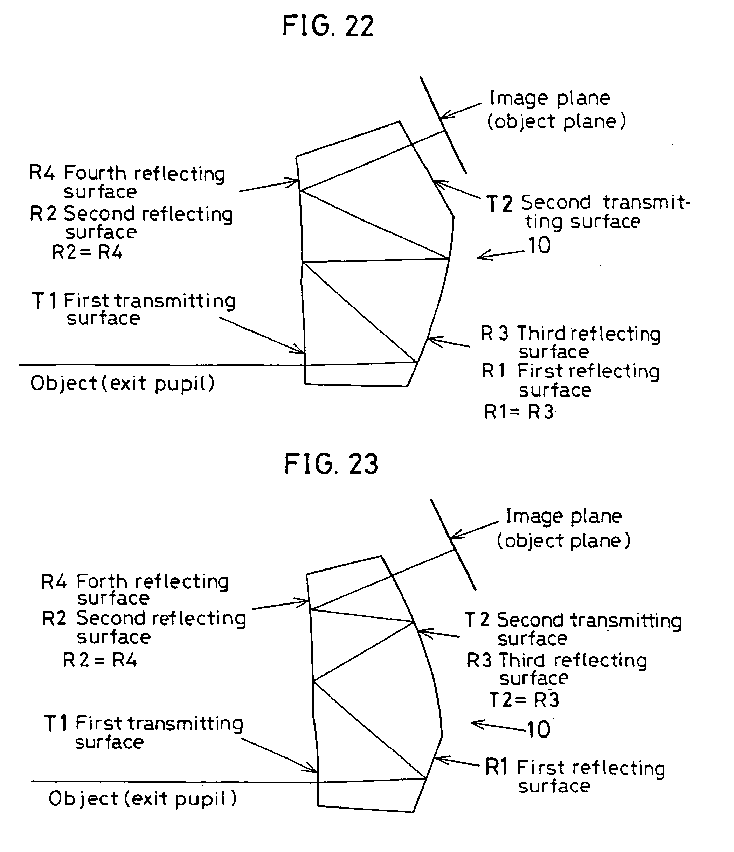

Fig. 22 illustrates an optical ray trace of an optical system according to Example 22 of the present invention.
Fig. 23 illustrates an optical ray trace of an optical system according to Example 23 of the present invention.

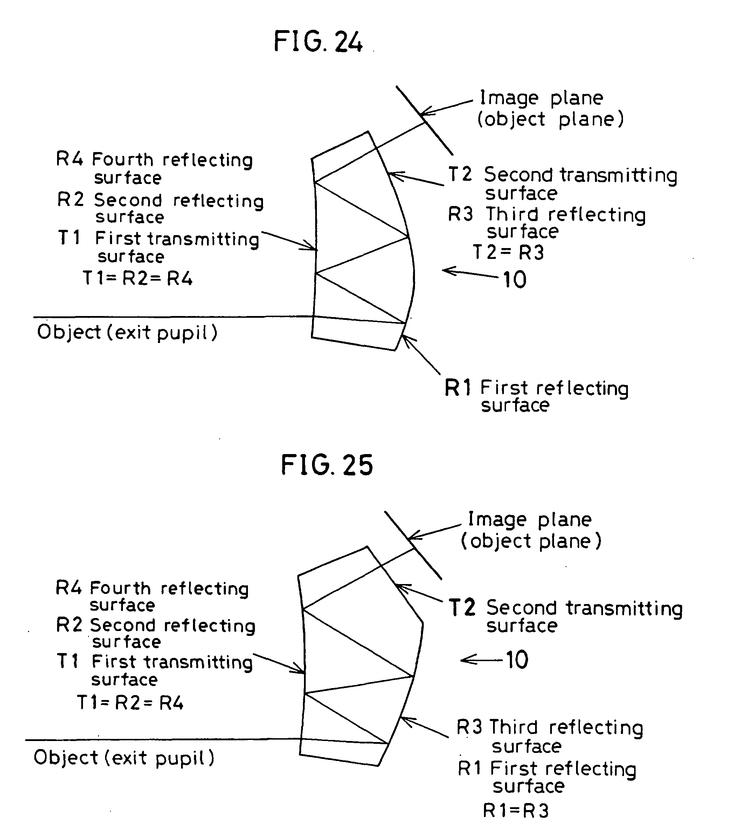

Fig. 24 illustrates an optical ray trace of an optical system according to Example 24 of the present invention.
Fig. 25 illustrates an optical ray trace of an optical system according to Example 25 of the present invention.

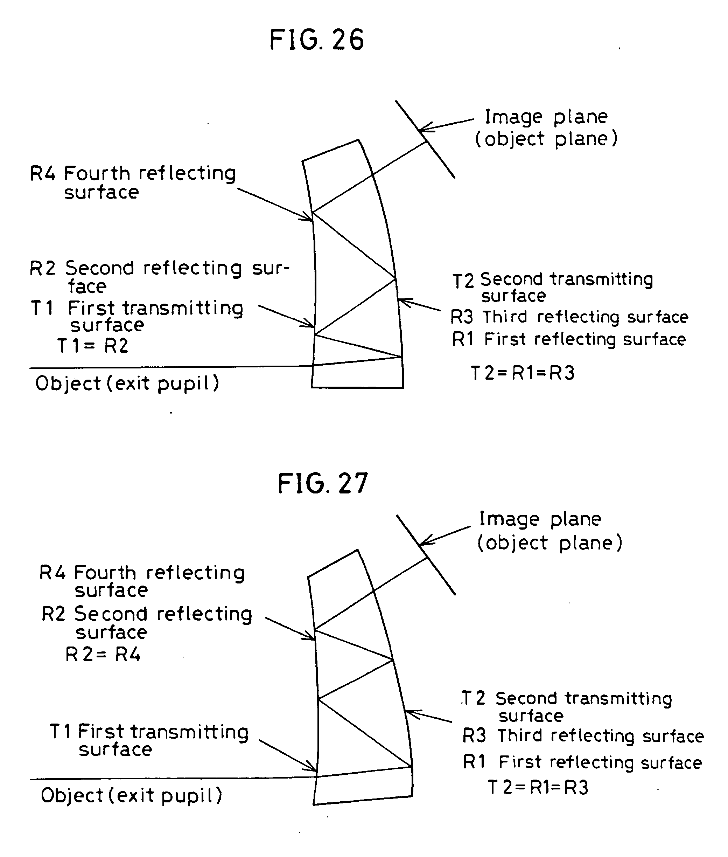

Fig. 26 illustrates an optical ray trace of an optical system according to Example 26 of the present invention.
Fig. 27 illustrates an optical ray trace of an optical system according to Example 27 of the present invention.

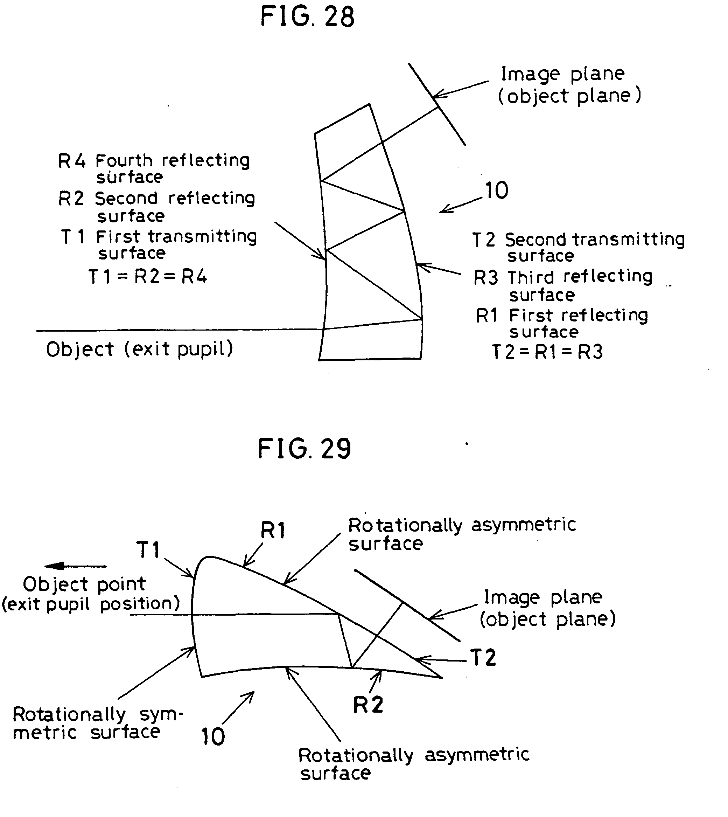

Fig. 28 illustrates an optical ray trace of an optical system according to Example 28 of the present invention.
Fig. 29 is a diagram for describing a machining method for forming an optical system according to Example 29 of the present invention.

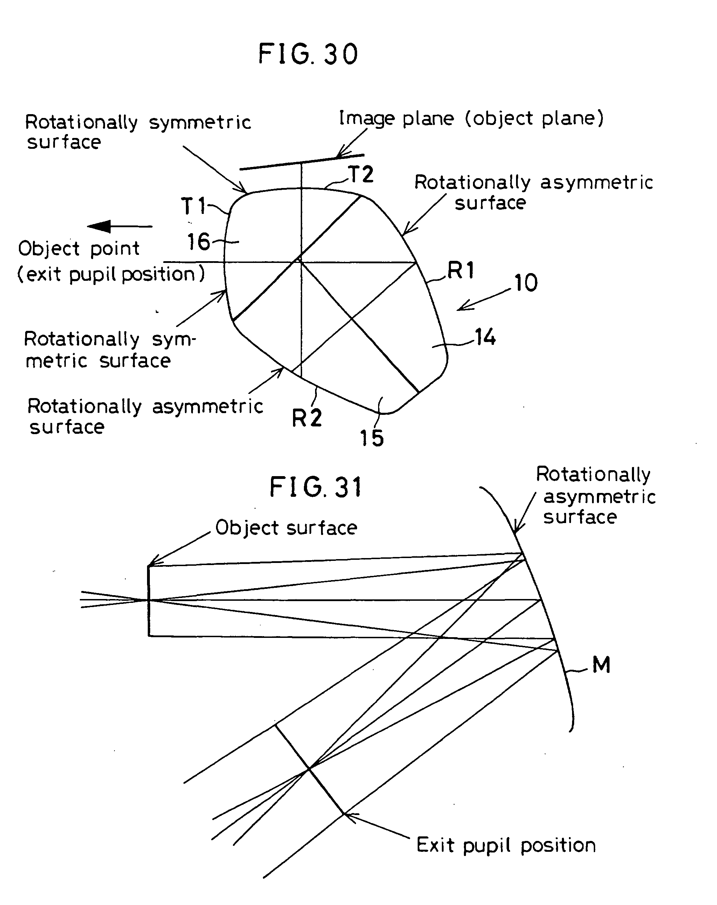

Fig. 30 is a diagram for describing a method of producing an optical system according to Example 30 of the present invention.
Fig. 31 illustrates an optical ray trace of Example 31 in which an optical system according to the present invention is used in an ocular optical system.

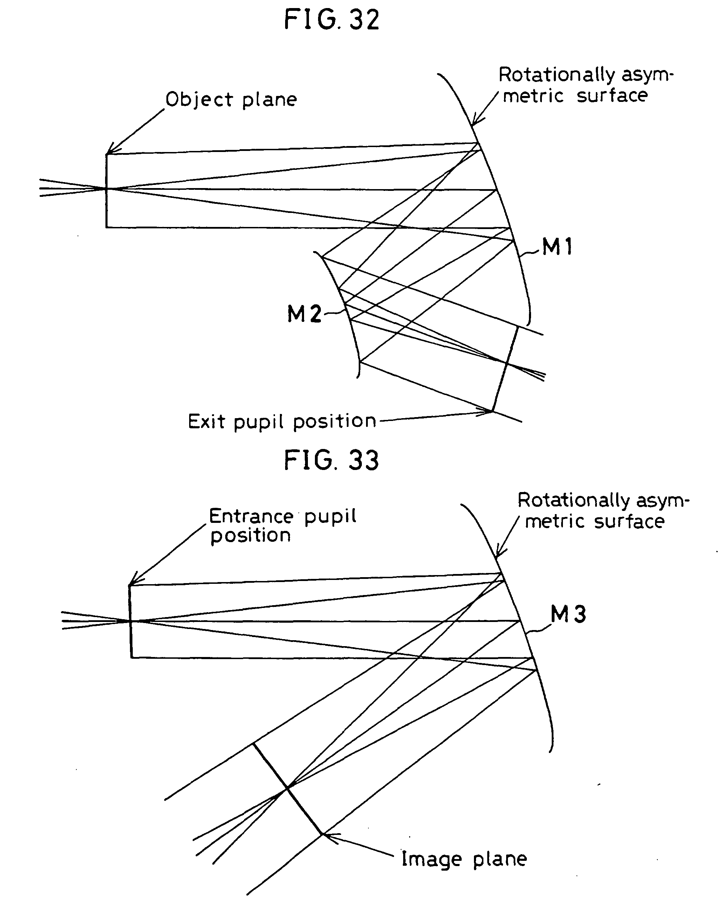

Fig. 32 illustrates an optical ray trace of an arrangement in which another optical system according to the present invention is used in Example 31.
Fig. 33 illustrates an optical ray trace of Example 32 in which an optical system according to the present invention is used in an image-forming optical system.

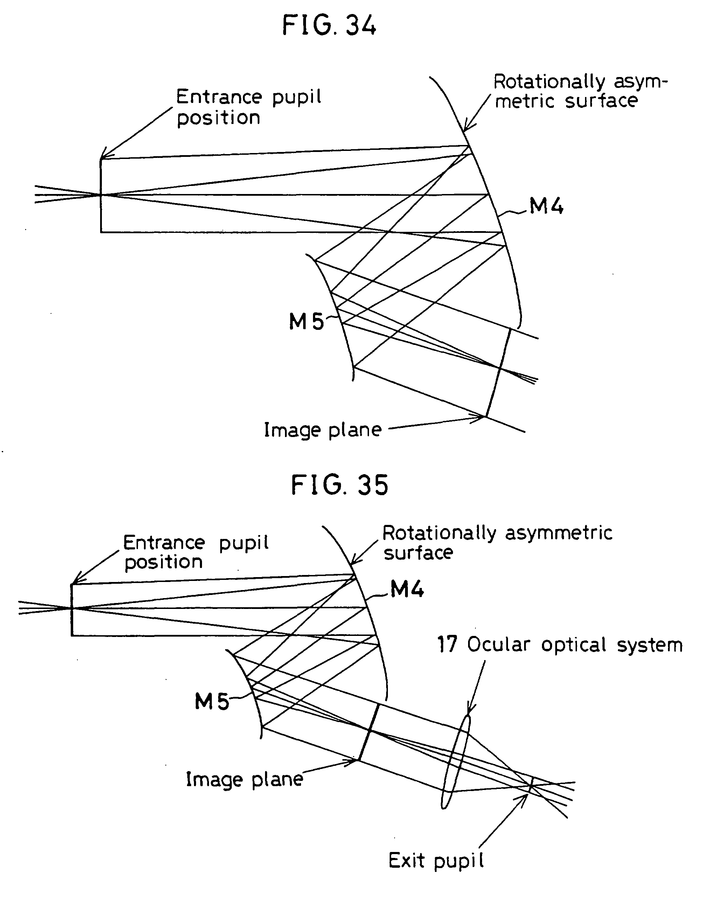

Fig. 34 illustrates an optical ray trace of an arrangement in which another optical system according to the present invention is used in Example 32.
Fig. 35 illustrates an optical ray trace of Example 33 in which an optical system according to the present invention is used in an afocal optical system.

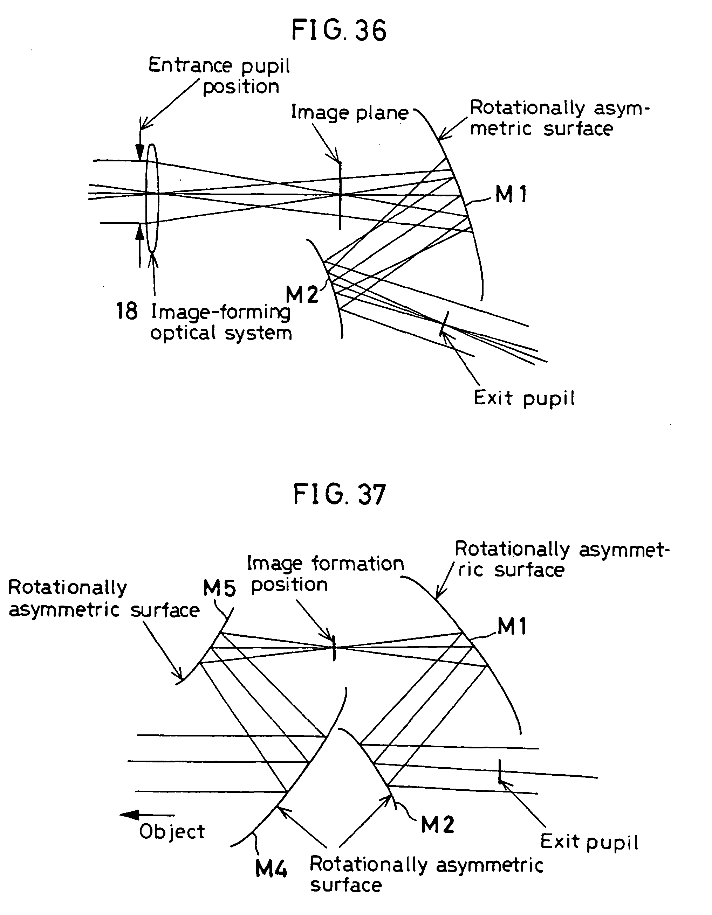

Fig. 36 illustrates an optical ray trace of Example 34 in which another optical system according to the present invention is used in an afocal optical system.
Fig. 37 illustrates an optical ray trace of Example 35 in which still another optical system according to the present invention is used in an afocal optical system.

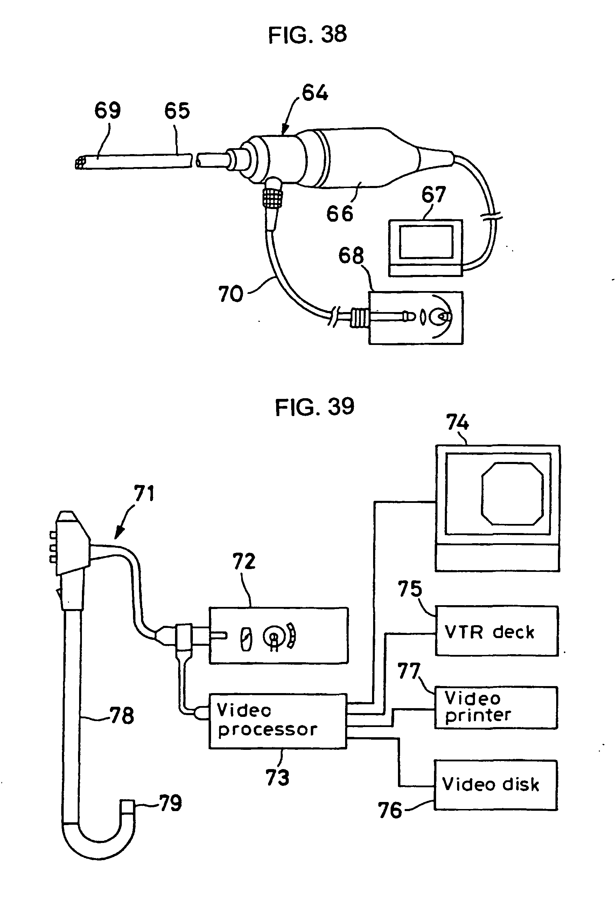

Fig. 38 schematically shows the arrangement of an endoscope using an image guide optical fiber bundle and a relay lens system.

Fig. 39 schematically shows a video endoscope.

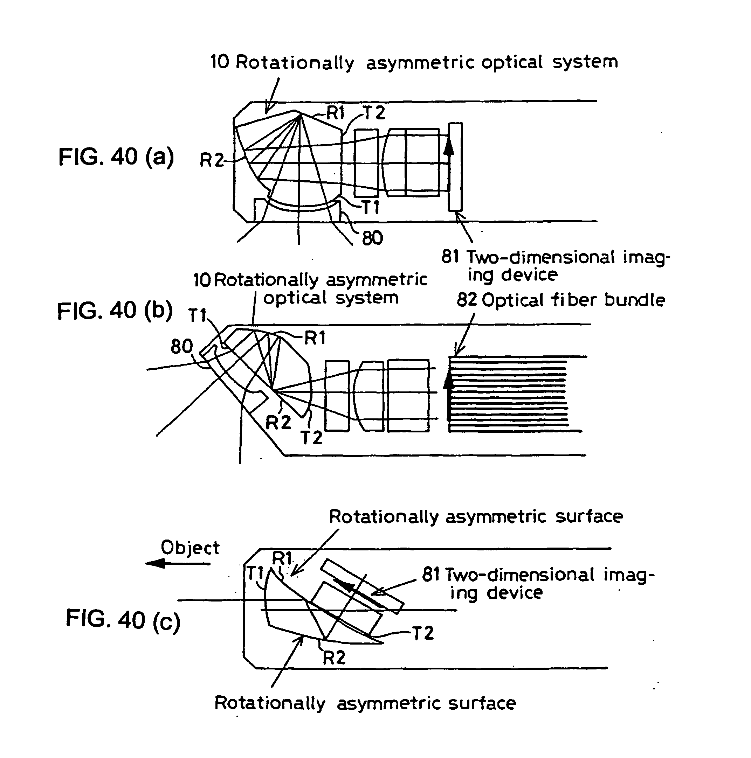

Figs. 40(a), 40(b) and 40 (c) each illustrate an optical ray trace of Example 36 in which an optical system according to the present invention is used in an objective optical system of an endoscope.

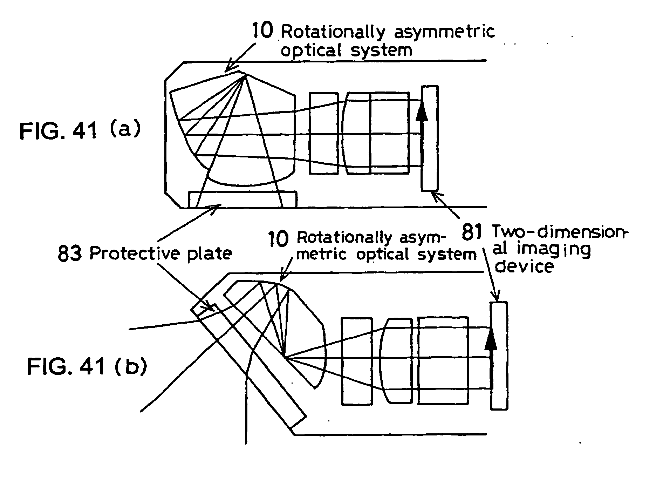

Figs. 41(a) and 41(b) each illustrate an optical ray trace of Example 37 in which an optical system according to the present invention is used in an objective optical system of an endoscope.

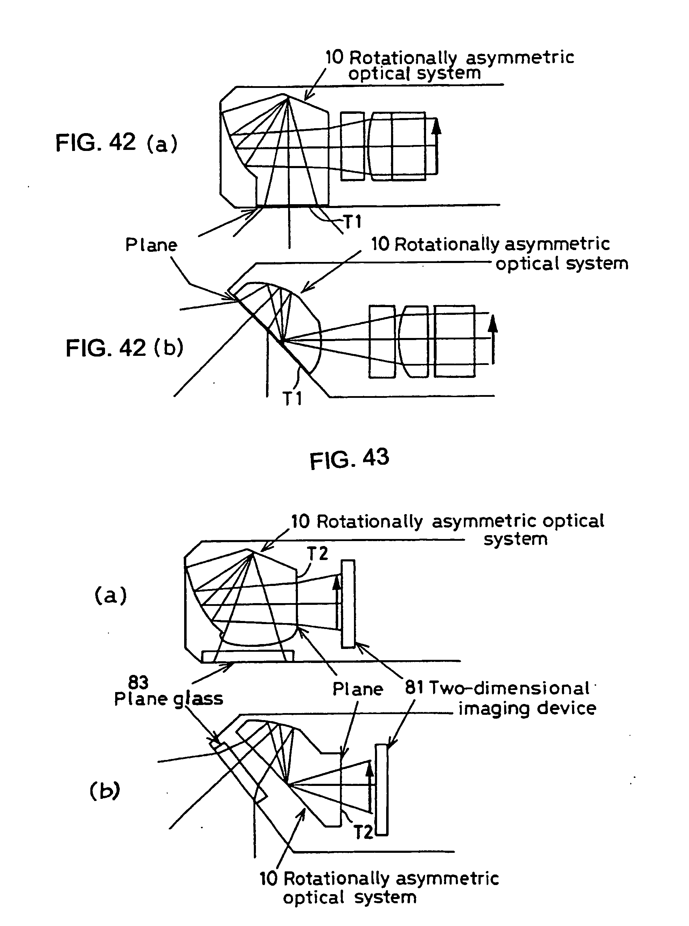

Figs. 42(a) and 42(b) each illustrate an optical ray trace of Example 38 in which an optical system according to the present invention is used in an objective optical system of an endoscope.

Figs. 43 (a) and 43(b) each illustrate an optical ray trace of Example 39 in which an optical system according to the present invention is used in an objective optical system of an endoscope.

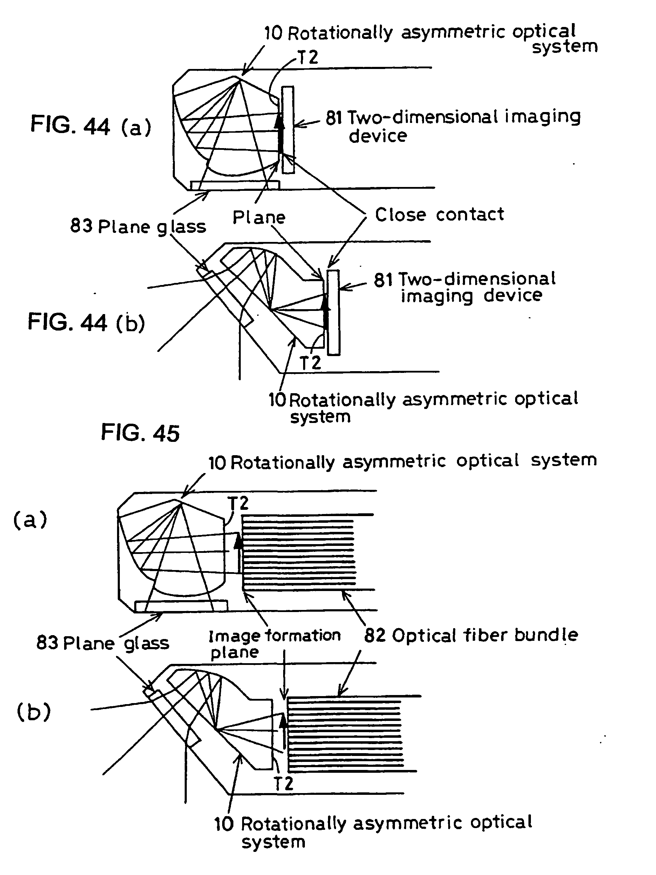

Figs. 44(a) and 44(b) each illustrate an optical ray trace of Example 40 in which an optical system according to the present invention is used in an objective optical system of an endoscope.

Figs. 45(a) and 45(b) each illustrate an optical ray trace of Example 41 in which an optical system according to the present invention is used in an objective optical system of an endoscope.

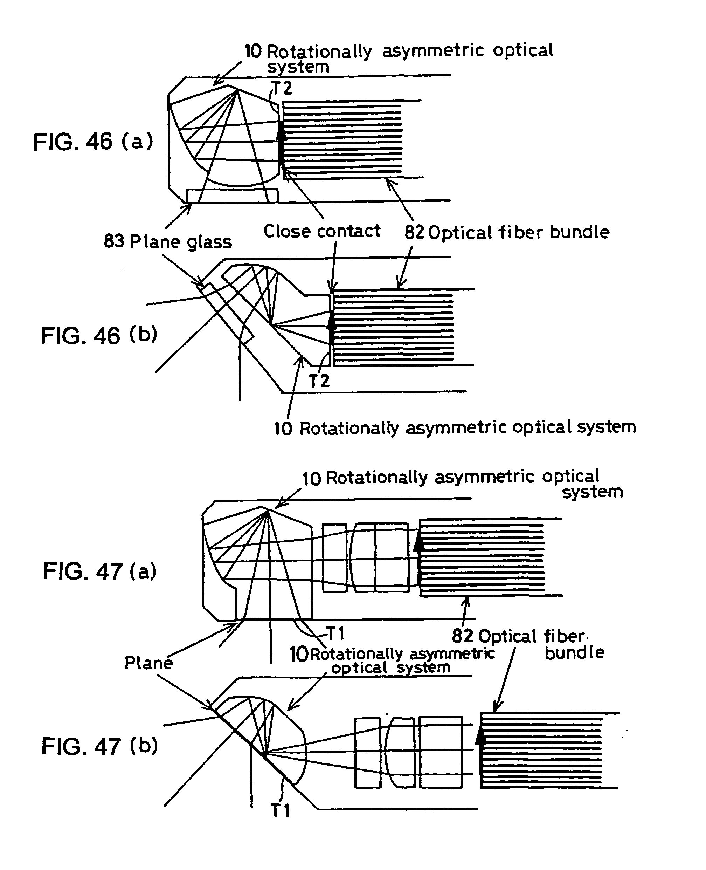

Figs. 46 (a) and 46(b) each illustrate an optical ray trace of Example 42 in which an optical system according to the present invention is used in an objective optical system of an endoscope.

Figs. 47(a) and 47(b) each illustrate an optical ray trace of Example 43 in which an optical system according to the present invention is used in an objective optical system of an endoscope.

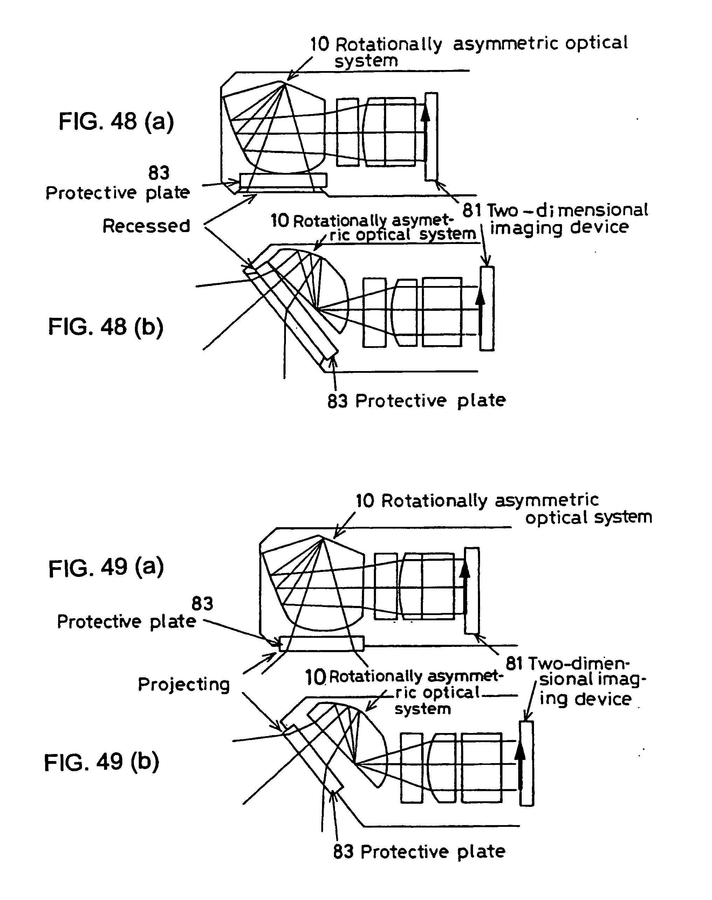

Figs. 48 (a) and 48 (b) each illustrate an optical ray trace of Example 45 in which an optical system according to the present invention is used in an objective optical system of an endoscope.

Figs. 49 (a) and 49 (b) each illustrate an optical ray trace of Example 46 in which an optical system according to the present invention is used in an objective optical system of an endoscope.

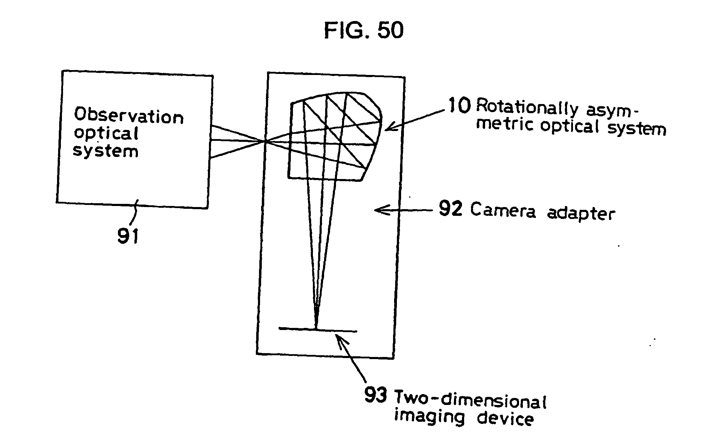

Fig. 50 illustrates an optical ray trace of Example 47 in which an optical system according to the present invention is used in a camera adapter for an endoscope.

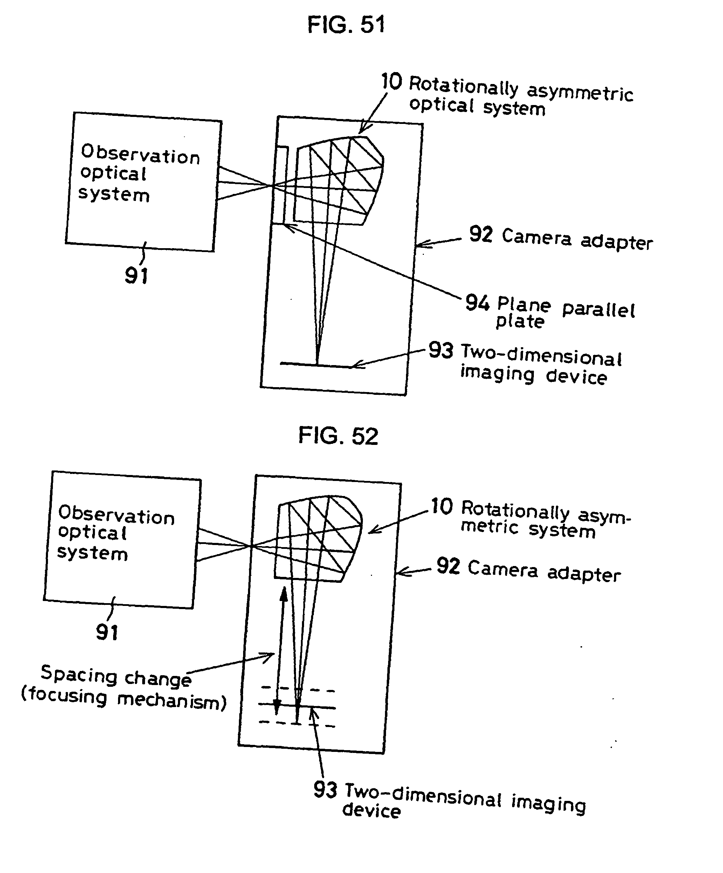

Fig. 51 illustrates an optical ray trace of Example 48 in which an optical system according to the present invention is used in a camera adapter for an endoscope.

Fig. 52 illustrates an optical ray trace of Example 49 in which an optical system according to the present invention is used in a camera adapter for an endoscope.

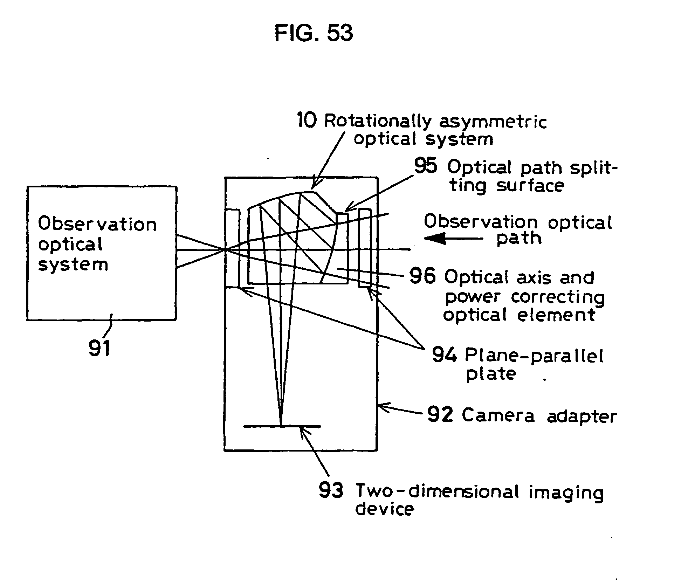

Fig. 53 illustrates an optical ray trace of Example 50 in which an optical system according to the present invention is used in a camera adapter for an endoscope.

Fig. 54 shows curvature of field produced by a decentered concave mirror.

Fig. 55 shows axial astigmatism produced by a decentered concave mirror.

Fig. 56 shows axial coma produced by a decentered concave mirror.

Fig. 57 is a diagram for describing a focal length in an optical system according to the present invention.

## DESCRIPTION OF THE PREFERRED EMBODIMENTS

Examples of optical systems according to the present invention, together with examples of optical systems of various optical apparatuses using the optical systems according to the present invention, will be described below.

Examples 1 to 5 and Examples 7 to 13 will be first described, which are examples of representative optical systems involving constituent parameters according to the present invention. However, the present invention is not necessarily limited to these examples. It should be noted that Example 6 is concerned with a surface having reflecting action.

In constituent parameters of Examples 1 to 5 (described later), a coordinate system is defined as follows: As shown in Fig. 1, the center of a pupil (aperture) 1 is defined as the origin of an optical system. An optical axis 2 is defined by a light ray emanating from the center of an object (not shown in the figure) and passing through the center of the aperture 1. A direction in which the light ray travels as far as a first surface of an optical system 10 along the optical axis 2 is defined as a direction of Z-axis. A direction perpendicularly intersecting the Z-axis and passing through the origin in a plane where the optical axis 2 is bent by the optical system 10 is defined as a direction of Y-axis. A direction perpendicularly intersecting both the Z- and Y-axes and passing through the origin is defined as a direction of X-axis. A direction extending toward the first surface of the optical system 10 from the object point is defined as a positive direction of the Z-axis. The X-, Y- and Z-axes constitute a right-handed orthogonal coordinate system. In the coordinate system, each surface separation is defined along the Z-axis direction. A position given by the surface separation becomes the origin of a new coordinate system defining the position of the subsequent surface. A displacement in the Y-axis direction of the vertex of the surface relative to the new origin is given as a displacement Y. An amount of rotation from the Z-axis direction of the center axis of an expression defining the surface is given as a tilt angle Θ. Similarly, the subsequent surface is defined with respect to the coordinate system defining the preceding surface. That is, according to a coordinate system newly defined after decentration of each surface, a surface separation between the surface and the subsequent surface is defined. It should be noted that, regarding the tilt angle, the counterclockwise direction is defined as a positive direction.

In the constituent parameters of Examples 7 to 13 (described later), a coordinate system is defined as follows: As shown in Fig. 7, the surface No. 1 [containing a pupil (aperture) 1] of an optical system 10 is defined as the origin of the optical system. An optical axis 2 is defined by a light ray emanating from the center of an object (not shown in the figure) and passing through the center of the aperture 1. A direction in which the light ray travels as far as a first surface of the optical system 10 along the optical axis 2 is defined as a direction of Z-axis. A direction perpendicularly intersecting the Z-axis and passing through the origin in a plane in which the optical axis 2 is bent by the optical system 10 is defined as a direction of Y-axis. A direction perpendicularly intersecting both the Z- and Y-axes and passing through the origin is defined as a direction of X-axis. A direction extending from the object point toward the first surface of the optical system is defined as a positive direction of the Z-axis. The X-, Y- and Z-axes constitute a right-handed orthogonal coordinate system. Regarding each surface for which displacements Y and Z and a tilt angle Θ are shown, the displacements Y and Z are each a displacement of the position of the vertex of the surface relative to the surface No. 1 [containing the pupil (aperture) 1] of the optical system, which is the origin of the optical system 10, and the tilt angle Θ is an amount of rotation of the center axis of an expression defining the surface from the Z-axis direction. It should be noted that, regarding the tilt angle, the counterclockwise direction is defined as a positive direction. Regarding each surface for which a surface separation is shown, the surface separation is an axial distance between the surface and the subsequent surface.

Three-dimensional surfaces are polynomial surfaces expressed by the above equation (a). It should be noted that the Z-axis of the defining equation (a) is the axis of a three-dimensional surface.

The non-rotationally symmetric aspherical configuration of each surface may be expressed in the coordinate system defining the surface as follows:

$$Z = [(X^2/R_x) + (Y^2/R_y)]/[1 + \{1 - (1+K_x)(X^2/R_x{}^2)$$

$$-(1+K_y)(Y^2/R_y{}^2)\}^{1/2}]$$

$$+ AR[(1-AP)X^2 + (1+AP)Y^2]^2$$

$$+ BR[(1-BP)X^2 + (1+BP)Y^2]^3$$

$$+ CR[(1-CP)X^2 + (1+CP)Y^2]^4$$

$$+ DR[(1-DP)X^2 + (1+DP)Y^2]^5 \qquad \text{(b)}$$

where $R_y$ is the paraxial curvature radius of the surface in the YZ-plane (the plane of the figure); $R_x$ is the paraxial curvature radius in the xZ-plane; $R_x$ is the conical coefficient in the XZ-plane; $K_y$ is the conical coefficient in the YZ-plane; AR, BR, CR and DR are 4th-, 6th-, 8th- and 10th-order aspherical coefficients, respectively, which are rotationally symmetric with respect to the Z-axis; and AP, BP, CP and DP are 4th-, 6th-, 8th- and 10th-order aspherical coefficients, respectively, which are rotationally asymmetric with respect to the Z-axis.

In coefficients concerning aspherical surfaces which are not shown in the constituent parameters (shown later) are zero. The refractive index of a medium lying between surfaces is expressed by the refractive index for the spectral d-line (wavelength: 587.56 nm). Lengths are given in millimeters.

Three-dimensional surfaces may also be defined by Zernike polynomials. That is, the configuration of a three-dimensional surface may be defined by the following equation (c). The Z-axis of the defining equation (c) is the axis of Zernike polynomial.

$$x = R \times \cos(A)$$

$$y = R \times \sin(A)$$

$$Z = D_2$$

$$+ D_3 R\cos(A) + D_4 R\sin(A)$$

$$+D_5R^2\cos(2A)+D_6(R^2-1)+D_7R^2\sin(2A)$$

$$+D_8R^3\cos(3A)+D_9(3R^3-2R)\cos(A)$$

$$+D_{10}(3R^3-2R)\sin(A)+D_{11}R^3\sin(3A)$$

$$+D_{12}R^4\cos(4A)+D_{13}(4R^4-3R^2)\cos(2A)$$

$$+D_{14}(6R^4-6R^2+1)+D_{15}(4R^4-3R^2)\sin(2A)$$

$$+D_{16}R^4\sin(4A)$$

$$+D_{17}R^5\cos(5A)+D_{18}(5R^5-4R^3)\cos(3A)$$

$$+D_{19}(10R^5-12R^3+3R)\cos(A)$$

$$+D_{20}(10R^5-12R^3+3R)\sin(A)$$

$$+D_{21}(5R^5-4R^3)\sin(3A)+D_{22}R^5\sin(5A)$$

$$+D_{23}R^6\cos(6A)+D_{24}(6R^6-5R^4)\cos(4A)$$

$$+D_{25}(15R^6-20R^4+6R^2)\cos(2A)$$

$$+D_{26}(20R^6-30R^4+12R^2-1)$$

$$+D_{27}(15R^6-20R^4+6R^2)\sin(2A)$$

$$+D_{28}(6R^6-SR^4)\sin(4A)+D_{29}R^6\sin(6A) \qquad\qquad (c)$$

where $D_m$ (m is an integer of 2 or higher) are coefficients.

Examples of other surfaces usable in the present invention include those which are given by the following defining equation:

$$z = \sum\sum c_{nm}XY$$

Assuming that k=7 (polynomial of degree 7), for example, the equation, when expanded, may be given by:

$$Z=C_2$$

$$+C_3y+C_4|x|$$

$$+C_5y^2+C_6y|x|+C_7x^2$$

$$+C_8y^3+C_9y^2|x|+C_{10}yx^2+C_{11}|x^3|$$

$$+C_{12}y^4+C_{13}y^3|x|+C_{14}y^2x^2+C_{15}y|x^3|+C_{16}x^4$$

$$+C_{17}y^5+C_{18}y^4|x|+C_{19}y^3x^2+C_{20}y^2|x|^3$$

$$+C_{21}yx^4+C_{22}|x^5|$$

$$+C_{23}y^6+C_{24}y^5|x|+C_{25}y^4x^2+C_{26}y^3|x^3|$$

$$+C_{27}y^2x^4+C_{28}y|x^5|+C_{29}x^6$$

$$+C_{30}y^7+C_{31}y^6|x|+C_{32}y^5x^2+C_{33}y^4|x^3|$$

$$+C_{34}y^3x^4+C_{35}y^2|x^5|+C_{36}yx^6+C_{37}|x^7| \qquad\qquad (d)$$

Example 1:

Fig. 1 is a sectional view of Example 1 taken by the YZ-plane containing the optical axis 2. The optical system according to this example is a refracting decentered optical system 10 consisting essentially of a first surface 3 formed from a decentered toric surface, and a second surface 4 formed from a decentered spherical surface. Constituent parameters of this example will be shown later. In this example, imaging field angles are as follows: The horizontal field angle is 24°, and the vertical field angle is 16.7°. The entrance pupil diameter is 2 millimeters. It should be noted that reference numeral 5 denotes an image plane. The same shall apply hereinafter.

Example 2:

Fig. 2 is a sectional view of Example 2 taken by the YZ-plane containing the optical axis 2. The optical system according to this example is a refracting decentered optical system 10 consisting essentially of a first surface 3 formed from an anamorphic surface, and a second surface 4 formed from a decentered spherical surface. Constituent parameters of this example will be shown later. In this example, imaging field angles are as follows: The horizontal field angle is 24°, and the vertical field angle is 16.7°. The entrance pupil diameter is 2 millimeters.

Example 3:

Fig. 3 is a sectional view of Example 3 taken by the YZ-plane containing the optical axis 2. The optical system according to this example is a refracting decentered optical system 10 consisting essentially of a first surface 3 formed from a three-dimensional surface, and a second surface 4 formed from a decentered spherical surface. Constituent parameters of this example will be shown later. In this example, imaging field angles are as follows: The horizontal field angle is 24°, and the vertical field angle is 16.7°. The entrance pupil diameter is 2 millimeters.

Example 4:

Fig. 4 is a sectional view of Example 4 taken by the YZ-plane containing the optical axis 2. The optical system according to this example is a refracting decentered optical system 10 consisting essentially of a first surface 3 formed from a decentered three-dimensional surface, and a second surface 4 formed from a decentered spherical surface. Constituent parameters of this example will be shown later. In this example, imaging field angles are as follows: The horizontal field angle is 24°, and the vertical field angle is 16.7°. The entrance pupil diameter is 2 millimeters.

Example 5:

Fig. 5 is a sectional view of Example 5 taken by the YZ-plane containing the optical axis 2. The optical system according to this example is a reflecting decentered optical system 10 consisting essentially of a first surface 3 formed from a decentered three-dimensional reflecting surface. Constituent parameters of this example will be shown later. In this example, imaging field angles are as follows: The horizontal field angle is 24°, and the vertical field angle is 16.7°. The entrance pupil diameter is 2 millimeters.

Example 6:

This example is concerned with the structure of a surface having reflecting action, which may be applied in a case where a rotationally asymmetric surface according to the present invention is used as a reflecting surface, particularly as a back-coated mirror. As shown in Figs. 6 (a), 6 (b) and 6 (c), examples of reflecting surfaces usable in the present invention include a structure in which, as shown in Fig. 6(a), a transparent member 11 made of a transparent material such as a glass or plastic material has a aluminum coating layer 12 provided on the surface thereof; a structure in which, as shown in Fig. 6(b), a transparent member 11 has a silver coating layer 13 provided on the surface thereof; and a structure in which, as shown in Fig. 6(c), a transparent member 11 has an aluminum coating layer 12 partially provided on the surface thereof to form a semitransparent mirror. It is also possible to use a reflecting surface structure which is provided with an optical multilayer film so as to have a reflectivity of 100% or to form a semitransparent mirror.

Example 7:

Fig. 7 is a sectional view of Example 7 taken by the YZ-plane containing the optical axis 2. The optical system according to this example is a reflecting decentered optical system 10 consisting essentially of a first surface 3 formed from a decentered three-dimensional transmitting surface, a second surface 4 formed from a decentered three-dimensional reflecting surface, and a third surface 6 formed from a transmitting surface common to the first and third surfaces 3 and 6. Constituent parameters of this example will be shown later. In this example, imaging field angles are as follows: The horizontal field angle is 24°, and the vertical field angle is 16.7°. The entrance pupil diameter is 2 millimeters.

Example 8:

Fig. 8 is a sectional view of Example 8 taken by the YZ-plane containing the optical axis 2. The optical system according to this example is a reflecting decentered optical system 10 consisting essentially of a first surface 3 formed from a decentered three-dimensional transmitting surface, a second surface 4 formed from a decentered three-dimensional reflecting surface, and a third surface 6 formed from a decentered three-dimensional transmitting surface. Constituent parameters of this example will be shown later. In this example, imaging field angles are as follows: The horizontal field angle is 24°, and the vertical field angle is 16.7°. The entrance pupil diameter is 2 millimeters.

Example 9:

Fig. 9 is a sectional view of Example 9 taken by the YZ-plane containing the optical axis 2. The optical system according to this example is a reflecting decentered optical system 10 consisting essentially of a first surface 3 formed from a decentered three-dimensional transmitting surface, a second surface 4 formed from a decentered three-dimensional reflecting surface, a third surface 6 formed from a decentered three-dimensional reflecting surface, and a fourth surface 7 formed from a decentered three-dimensional transmitting surface. Constituent parameters of this example will be shown later. In this example, imaging field angles are as follows: The horizontal field angle is 24°, and the vertical field angle is 16.7°. The entrance pupil diameter is 2 millimeters.

Example 10:

Fig. 10 is a sectional view of Example 10 taken by the YZ-plane containing the optical axis 2. The optical system according to this example is a reflecting decentered optical system 10 consisting essentially of a first surface 3 formed from a three-dimensional transmitting surface, a second surface 4 formed from a decentered three-dimensional reflecting surface, a third surface 6 formed from a decentered three-dimensional reflecting surface, and a fourth surface 7 formed from a decentered three-dimensional transmitting surface. Constituent parameters of this example will be shown later. In this example, imaging field angles are as follows: The horizontal field angle is 40°, and the vertical field angle is 30°. The entrance pupil diameter is 2 millimeters.

Example 11:

Fig. 11 is a sectional view of Example 11 taken by the YZ-plane containing the optical axis 2. The optical system according to this example is a reflecting decentered optical system 10 consisting essentially of a first surface 3 formed from a decentered three-dimensional transmitting surface, a second surface 4 formed from a decentered three-dimensional reflecting surface, a third surface 6 which is a reflecting surface formed from a surface common to the first and third surfaces 3 and 6, and a fourth surface 7 formed from a decentered three-dimensional transmitting surface. Constituent parameters of this example will be shown later. In this example, imaging field angles are as follows: The horizontal field angle is 40°, and the vertical field angle is 30°. The entrance pupil diameter is 10 millimeters.

Example 12:

Fig. 12 is a sectional view of Example 12 taken by the YZ-plane containing the optical axis 2. The optical system according to this example is a reflecting decentered optical system 10 consisting essentially of a first surface 3 formed from a decentered three-dimensional transmitting surface, a second surface 4 formed from a decentered three-dimensional reflecting surface, a third surface 6 formed from a decentered three-dimensional reflecting surface, and a fourth surface 7 which is a transmitting surface formed from a surface common to the second and fourth surfaces 4 and 7. Constituent parameters of this example will be shown later. In this example, imaging field angles are as follows: The horizontal field angle is 40°, and the vertical field angle is 30°. The entrance pupil diameter is 10 millimeters.

Example 13:

Fig. 13 is a sectional view of Example 13 taken by the YZ-plane containing the optical axis 2. The optical system according to this example is a reflecting decentered optical system 10 consisting essentially of a first surface 3 formed from a three-dimensional transmitting surface, a second surface 4 formed from a decentered three-dimensional reflecting surface, a third surface 6 formed from a plane reflecting surface, a fourth surface 7 which is a reflecting surface formed from a surface common to the first and fourth surfaces 3 and 7, and a fifth surface 8 which is a transmitting surface formed from a surface common to the second and fifth surfaces 4 and 8. Constituent parameters of this example will be shown later. In this example, imaging field angles are as follows: The horizontal field angle is 40°, and the vertical field angle is 30°. The entrance pupil diameter is 10 millimeters.

The constituent parameters of the above Examples 1 to 5 and 7 to 13 are as follows:

Example 1

| Surface No. | Radius of curvature | Surface separation | Refractive index (Displacement) | Abbe's No. (Tilt angle) |
|---|---|---|---|---|
| 1 | ∞ (pupil) | 5. 000 | | |
| 2 | $R_y$ 88. 44333 | 3. 000 | 1. 51633 | 64.15 |
|   | $R_x$ 95.45737 | | Y 0. 000 | θ -1.99° |
| 3 | -17.301 | 38.032 | Y 0.069 | θ -1.77° |
| 4 | ∞ (image plane) | | Y 3.119 | θ 10. 00° |
| CXn | 0.01048 | | | |
| CYn | 0.01130 | | | |
| FXn | 184.8040 | | | |
| FYn | 184. 8766 | | | |
| FX | 28. 3607 | | | |
| FY | 27. 8784 | | | |
| FXn/FX | 6.51620 | | | |
| FYn/FY | 6.63154 | | | |
| FY/FX | 0.98299 | | | |

Example 2

| Surface No. | Radius of curvature | Surface separation | Refractive index (Displacement) | Abbe's No. (Tilt angle) |
|---|---|---|---|---|
| 1 | ∞(pupil) | 2. 273 | | |
| 2 | $R_y$ 96. 003 | 3. 000 | 1. 5163 | 64.15 |
|   | $R_x$ 95. 457 | | Y 0. 000 θ | 0. 00° |
|   | $K_y$ 0 | | | |
|   | $K_x$ 0 | | | |
|   | A R -8.9601 $\times$ 10$^{-5}$ | | | |
|   | A P -4. 4886 $\times$ 10$^{-1}$ | | | |
| 3 | -17.143 | 37.747 | Y 0.094 | θ -2.42° |
| 4 | ∞ (image plane) | | Y 4. 240 | θ 10.00° |
| CXn | 0.01048 | | | |
| CYn | 0.01042 | | | |
| FXn | 184.8767 | | | |
| FYn | 185.9339 | | | |
| FX | 28.4495 | | | |

# EP 0 845 692 B1

(continued)

| Surface No. | Radius of curvature | Surface separation | Refractive index (Displacement) | Abbe's No. (Tilt angle) |
|---|---|---|---|---|
| FY | 28.1215 | | | |
| FXn/FX | 6.49842 | | | |
| FYn/FY | 6.61181 | | | |
| FY/FX | 1.01745 | | | |

Example 3

| Surface No. | Radius of curvature | Surface separation | Refractive index (Displacement) | Abbe's No. (Tilt angle) |
|---|---|---|---|---|
| 1 | ∞ (pupil) | 5. 000 | | |
| 2 | Three-dimensional surface (1) | 3.000 | 1.5163 | 64.15 |
| | | | Y 0.000 | θ 0.00° |
| 3 | -11.903 | 37.119 | Y 0.000 | θ -1.42° |
| 4 | ∞ (image plane) | | Y 1.436 | θ 10. 00° |

| Three-dimensional surface (1) | | | | | |
|---|---|---|---|---|---|
| $C_5$ | $-1.6641 \times 10^{-2}$ | $C_7$ | $-1.6675 \times 10^{-2}$ | $C_{10}$ | $3.5664 \times 10^{-4}$ |
| CXn | -0.03335 | | | | |
| CYn | -0.03328 | | | | |
| FXn | -58.0733 | | | | |
| FYn | -58.1955 | | | | |
| FX | 35.5619 | | | | |
| FY | 35.2237 | | | | |
| FXn/FX | -1.63302 | | | | |
| FYn/FY | -1.65217 | | | | |
| FY/FX | 0.99049 | | | | |

Example 4

| Surface No. | Radius of curvature | Surface separation | Refractive index (Displacement) | Abbe's No. (Tilt angle) |
|---|---|---|---|---|
| 1 | ∞ (pupil) | 5. 000 | | |
| 2 | Three-dimensional surface(1) | 3.000 | 1.5163 | 64.15 |
| | | | Y 0.000 | θ -2.57° |
| 3 | -15.349 | 36.155 | Y 0.089 | θ -2.06° |
| 4 | ∞ (image plane) | | Y 3. 615 | θ 10. 00° |

| Three-dimensional surface(1) | | | | | |
|---|---|---|---|---|---|
| $C_5$ | $-6.2923 \times 10^{-3}$ | $C_7$ | $-6.1230 \times 10^{-3}$ | $C_{10}$ | $1.0315 \times 10^{-4}$ |
| CXn | -0.01225 | | | | |

(continued)

| Three-dimensional surface(1) | | | | | |
|---|---|---|---|---|---|
| CYn | -0.01258 | | | | |
| FXn | -158.10170 | | | | |
| FYn | -153.95436 | | | | |
| FX | 35.67606 | | | | |
| FY | 35.81662 | | | | |
| FXn/FX | -4.43159 | | | | |
| FYn/FY | -4.29841 | | | | |
| FY/FX | 1.00394 | | | | |

Example 5

| Surface No. | Radius of curvature | Surface separation | Refractive index (Displacement) | Abbe's No. (Tilt angle) |
|---|---|---|---|---|
| 1 | ∞ (pupil) | 23. 667 | | |
| 2 | Three-dimensional surface (1) | -33.473 | Y 0.000 | θ -20. 00° |
| 3 | ∞ (display plane) | | Y 12.183 | θ -29.79° |

| Three-dimensional surface (1) | | | | | |
|---|---|---|---|---|---|
| $C_5$ | $-6.6312 \times 10^{-3}$ | $C_7$ | $-7.3816 \times 10^{-3}$ | $C_8$ | $1.3051 \times 10^{-4}$ |
| $C_{10}$ | $3.5104 \times 10^{-4}$ | $C_{12}$ | $-1.7318 \times 10^{-6}$ | $C_{14}$ | $1.4418 \times 10^{-6}$ |
| $C_{16}$ | $1.0842 \times 10^{-6}$ | $C_{17}$ | $-2.2182 \times 10^{-6}$ | $C_{19}$ | $-1.3828 \times 10^{-6}$ |
| $C_{21}$ | $-6.8971 \times 10^{-6}$ | | | | |
| CXn | -0.01476 | | | | |
| CYn | -0.01326 | | | | |
| FXn | -33.87534 | | | | |
| FYn | -37.70739 | | | | |
| FX | 35.52397 | | | | |
| FY | 35. 37319 | | | | |
| FXn/FX | -0.95359 | | | | |
| FYn/FY | -1.06599 | | | | |
| FY/FX | 0.99576 | | | | |

Example 7

| Surface No. | Radius of curvature | Surface separation | Refractive index (Displacement) | Abbe's No. (Tilt angle) |
|---|---|---|---|---|
| 1 | ∞(pupil) | | | |
| 2 | Three-dimensional surfaced (1) | | 1.5163 | 64.15 |
| | | | Y 0.000 | θ -17.45° |
| | | | Z 17.611 | |
| 3 | Three-dimensional surface (2) | | 1.5163 | 64.15 |

(continued)

| Surface No. | Radius of curvature | Surface separation | Refractive index (Displacement) | Abbe's No. (Tilt angle) |
|---|---|---|---|---|
| | | | Y -0.529 | θ -20.00° |
| | | | Z 22. 611 | |
| 4 | Three-dimensional surface (1) | | Y 0.000 | θ -17.45° |
| | | | Z 17. 611 | |
| 5 | ∞ (image plane) | | Y 24.425 | θ -47.96° |
| | | | Z -7. 952 | |

| Three-dimensional surface (1) | | | |
|---|---|---|---|
| $C_5$ | $1.8423 \times 10^{-2}$ | $C_7$ | $3.2520 \times 10^{-2}$ |

| Three-dimensional surface(2) | | | |
|---|---|---|---|
| $C_5$ | $2.3788 \times 10^{-3}$ | $C_7$ | $7.6150 \times 10^{-3}$ |
| Three-dimensional surface(2) | | | |
| CXn | 0.01523 | | |
| CYn | 0.00476 | | |
| FXn | 21.65092 | | |
| FYn | 69.27385 | | |
| FX | 28.80566 | | |
| FY | 28.36382 | | |
| FXn/FX | 0.75162 | | |
| FYn/FY | 2.44233 | | |
| FY/FX | 0.98466 | | |

Example 8

| Surface No. | Radius of curvature | Surface separation | Refractive index (Displacement) | Abbe's No. (Tilt angle) |
|---|---|---|---|---|
| 1 | ∞ (pupil) | | | |
| 2 | Three-dimensional surface (1) | | 1.5163 | 64.15 |
| | | | Y 0.000 | θ -11.28° |
| | | | Z 1.758 | |
| 3 | Three-dimensional surface(2) | | 1.5163 | 64.15 |
| | | | Y -1.816 | θ -20.00° |
| | | | Z 28. 620 | |
| 4 | Three-dimensional surface(3) | | Y 17.796 | θ -28.72° |
| | | | Z 1. 758 | |
| 5 | ∞ (image plane) | | Y 41. 948 | θ -49. 40° |
| | | | Z -27.025 | |

| Three-dimensional surface (1) | | | | | |
|---|---|---|---|---|---|
| $C_5$ | $-2.9815 \times 10^{-2}$ | $C_7$ | $5.8788 \times 10^{-3}$ | $C_{10}$ | $-1.9434 \times 10^{-4}$ |

| Three-dimensional surface(2) | | | | | |
|---|---|---|---|---|---|
| $C_5$ | $-5.6421 \times 10^{-3}$ | $C_7$ | $3.0794 \times 10^{-3}$ | $C_{10}$ | $-6.3954 \times 10^{-5}$ |

| Three-dimensional surface(3) | | | | | |
|---|---|---|---|---|---|
| $C_5$ | $2.7620 \times 10^{-3}$ | $C_7$ | $3.3894 \times 10^{-2}$ | $C_{10}$ | $2.5637 \times 10^{-5}$ |
| Three-dimensional surface (2) | | | | | |
| CXn | 0.00616 | | | | |
| CYn | -0.01128 | | | | |
| FXn | 53.52979 | | | | |
| FYn | -29.23258 | | | | |
| FX | 33.52330 | | | | |
| FY | 34.95281 | | | | |
| FXn/FX | 1.59679 | | | | |
| FYn/FY | -0.83634 | | | | |
| FY/FX | 1.04264 | | | | |

Example 9

| Surface No. | Radius of curvature | Surface separation | Refractive index (Displacement) | Abbe's No. (Tilt angle) |
|---|---|---|---|---|
| 1 | ∞ (pupil) | | | |
| 2 | Three-dimensional surface(1) | | 1.5163 | 64.15 |
| | | | Y 0.000 | θ 0.00° |
| | | | Z 10.000 | |
| 3 | Three-dimensional surface (2) | | 1.5163 | 64.15 |
| | | | Y 0.000 | θ -45.00° |
| | | | Z 20.000 | |
| 4 | Three-dimensional surface(3) | | 1.5163 | 64.15 |
| | | | Y 10.000 | θ 45.00° |
| | | | Z 20.000 | |
| 5 | Three-dimensional surface (4) | | Y 10.000 | θ 0.00° |
| | | | Z 10.000 | |
| 6 | ∞ (image plane) | | Y 10.000 | θ -13.68° |
| | | | Z -10.000 | |

| Three-dimensional surface (1) | | | | | |
|---|---|---|---|---|---|
| $C_5$ | $-2.5583 \times 10^{-3}$ | $C_7$ | $-1.1629 \times 10^{-3}$ | $C_8$ | $3.6340 \times 10^{-4}$ |
| $C_{10}$ | 0 | $C_{12}$ | $3.2535 \times 10^{-5}$ | $C_{14}$ | $3.1012 \times 10^{-5}$ |

(continued)

| Three-dimensional surface (1) | | | | | |
|---|---|---|---|---|---|
| $C_{16}$ | $8.2196 \times 10^{-5}$ | | | | |

| Three-dimensional surface(2) | | | | | |
|---|---|---|---|---|---|
| $C_5$ | $-2.5807 \times 10^{-3}$ | $C_7$ | $-5.9100 \times 10^{-3}$ | $C_8$ | $-7.4253 \times 10^{-6}$ |
| $C_{10}$ | $3.3196 \times 10^{-5}$ | $C_{12}$ | $3.2466 \times 10^{-7}$ | $C_{14}$ | $-3.5149 \times 10^{-7}$ |
| $C_{16}$ | $1.9988 \times 10^{-5}$ | | | | |

| Three-dimensional surface(3) | | | | | |
|---|---|---|---|---|---|
| $C_5$ | $-2.9513 \times 10^{-3}$ | $C_7$ | $-4.5073 \times 10^{-3}$ | $C_8$ | $-1.0598 \times 10^{-4}$ |
| $C_{10}$ | $-1.0663 \times 10^{-5}$ | $C_{12}$ | $-2.8568 \times 10^{-6}$ | $C_{14}$ | $7.7238 \times 10^{-7}$ |
| $C_{16}$ | $-9.1435 \times 10^{-6}$ | | | | |

| Three-dimensional surface (4) | | | | | |
|---|---|---|---|---|---|
| $C_5$ | $-1.9093 \times 10^{-2}$ | $C_7$ | $-1.9783 \times 10^{-2}$ | $C_8$ | $-7.3494 \times 10^{-4}$ |
| $C_{10}$ | $0$ | $C_{12}$ | $-9.6786 \times 10^{-5}$ | $C_{14}$ | $-5.5417 \times 10^{-5}$ |
| $C_{16}$ | $-4.5951 \times 10^{-6}$ | | | | |

| Three-dimensional surface | | | | |
|---|---|---|---|---|
| | (1) | (2) | (3) | (4) |
| CXn | -0.00233 | -0.01182 | -0.00901 | -0.03957 |
| CYn | -0.00512 | -0.00516 | -0.00590 | -0.03819 |
| FXn | -831.2214 | 27.8970 | 36.5975 | -48.9448 |
| FYn | -378.2706 | 63.9037 | 55.8887 | -50.7134 |
| FX | 33.59086 | | | |
| FY | 31.39717 | | | |
| FXn/FX | -24.7455 | 0.8305 | 1.0895 | -1.4571 |
| FYn/FY | -12.0479 | 2.0353 | 1.7801 | -1.6152 |
| FY/FX | 0.9347 | | | |

Example 10

| Surface No. | Radius of curvature | Surface separation | Refractive index (Displacement) | Abbe's No. (Tilt angle) |
|---|---|---|---|---|
| 1 | Three-dimensional surface (1) | | 1.5163 | 64.15 |
| 2 | Three-dimensional surface (2) | | 1.5163 | 64.15 |
| | | | Y 0.000 | θ -22.50° |
| | | | Z 26.000 | |
| 3 | Three-dimensional surface (3) | | 1.5163 | 64.15 |
| | | | Y 14.000 | θ-67.50° |

(continued)

| Surface No. | Radius of curvature | Surface separation | Refractive index (Displacement) | Abbe's No. (Tilt angle) |
|---|---|---|---|---|
| 4 | Three-dimensional surface (4) | 2.000 | Z 12. 000<br>Y -10.000<br><br>Z 10. 000 | θ 90.00° |
| 5 | ∞ (image plane) | | | |

| Three-dimensional surface(1) | | | | |
|---|---|---|---|---|
| $C_5$ 1.<br>$C_{10}$ | $3733 \times 10^{-2}$<br>$-1.3336 \times 10^{-4}$ | $C_7$ | $1. 8225 \times 10^{-2}$ | $C_8$ $-9.4288 \times 10^{-5}$ |

| Three-dimensional surface (2) | | | | |
|---|---|---|---|---|
| $C_5$<br>$C_{10}$ | $-7. 9366 \times 10^{-4}$<br>$-5.6154 \times 10^{-5}$ | $C_7$ | $-1.1721 \times 10^{-3}$ | $C_8$ $-2.5491 \times 10^{-5}$ |

| Three-dimensional surface (3) | | | | |
|---|---|---|---|---|
| $C_5$<br>$C_{10}$ | $2. 8039 \times 10^{-3}$<br>$-1. 4966 \times 10^{-4}$ | $C_7$ | $-8. 7180 \times 10^{-4}$ | $C_8$ $-7.6318 \times 10^{-5}$ |

| Three-dimensional surface (4) | | | | |
|---|---|---|---|---|
| $C_5$<br>$C_{10}$ | $8. 4385 \times 10^{-3}$<br>$3. 1268 \times 10^{-4}$ | $C_7$ | $-6. 4925 \times 10^{-3}$ | $C_8$ $-2.7582 \times 10^{-4}$ |

| Three-dimensional surface | | | | |
|---|---|---|---|---|
| | (1) | (2) | (3) | (4) |
| CXn | 0.03645 | -0.00234 | -0.00174 | -0.01299 |
| CYn | 0.02747 | -0.00159 | 0.00561 | 0.01688 |
| FXn | 53.13432 | 140.9160 | -189.5078 | -149.0951 |
| FYn | 70.50404 | 207.3859 | 58.7778 | 114.7361 |
| FX | 49.19207 | | | |
| FY | 34.94060 | | | |
| FXn/FX | 1.0801 | 2.8646 | -3.8524 | -3.03087 |
| FYn/FY | 2.0178 | 5.9354 | 1.6822 | 3.28374 |
| FY/FX | 0.7102 | | | |

Example 11

| Surface No. | Radius of curvature | Surface separation | Refractive index | Abbe's No. |
|---|---|---|---|---|
| 1 | ∞ (pupil) | | | |
| 2 | Three-dimensional surface (1) | | 1.5163 | 64.15 |

(continued)

| Surface No. | Radius of curvature | Surface separation | Refractive index | Abbe's No. |
|---|---|---|---|---|
| 3 | Three-dimensional surface (2) | | Y -22.988<br>Z 50. 530<br>1.5163<br>Y -1.449 | θ -8.98°<br><br>64.15<br>θ 17.73° |
| 4 | Three-dimensional surface (1) | | Z 76.977<br>1. 5163<br>Y -22.988 | <br>64.15<br>θ -8.98° |
| 5 | Three-dimensional surface (3) | | Z 50. 530<br>Y -48.948<br>Z 67.306 | θ -78.43° |
| 6 | ∞ (image plane) | | Y -58. 973<br>Z 77.331 | θ -45. 00° |

| Three-dimensional surface (1) | | | | | |
|---|---|---|---|---|---|
| $C_5$<br>$C_{10}$ | $6.7120 \times 10^{-4}$<br>$2. 1250 \times 10^{-5}$ | $C_7$ | $-1. 1797 \times 10^{-4}$ | $C_8$ | 0 |

| Three-dimensional surface (2) | | | | | |
|---|---|---|---|---|---|
| $C_5$<br>$C_{10}$ | $-2. 0716 \times 10^{-3}$<br>$1. 8112 \times 10^{-5}$ | $C_7$ | $-3. 2040 \times 10^{-3}$ | $C_8$ | 0 |

| Three-dimensional surface (3) | | | | | |
|---|---|---|---|---|---|
| $C_5$<br>$C_{10}$ | $1. 3932 \times 10^{-3}$<br>$6. 8065 \times 10^{-5}$ | $C_7$ | $1. 2275 \times 10^{-2}$ | $C_8$ | 0 |

| Three-dimensional surface | | | | |
|---|---|---|---|---|
| | (1) | (2) | (1) | (3) |
| CXn | 0.00076 | -0.00641 | -0.00024 | 0.02455 |
| CYn | 0.00134 | -0.00414 | 0.00134 | 0.00279 |
| FXn | 2548.34984 | 51.44205 | 1373.93135 | -78.8898 |
| FYn | 1445.3327 | 79.6482 | -246.07726 | -777.80959 |
| FX | 66.22517 | | | |
| FY | 50. 40322 | | | |
| FXn/FX | 38.4801 | 0.7768 | 20.7464 | -3.03087 |
| FYn/FY | 28.6754 | 1.5802 | 1.6822 | 3.28374 |
| FY/FX | 0.7102 | | | |

Example 12

| Surface No. | Radius of curvature | Surface separation | Refractive index | Abbe's No. |
|---|---|---|---|---|
| 1 | ∞ (pupil) | | | |

(continued)

| Surface No. | Radius of curvature | Surface separation | Refractive index | Abbe's No. |
|---|---|---|---|---|
| 2 | Three-dimensional surface (1) | | 1.5163<br>Y 0.000<br>Z 48. 036 | 64.15<br>θ 4.56° |
| 3 | Three-dimensional surface (2) | | 1. 5163<br>Y 0.781<br>Z 76.770 | 64. 15<br>θ 54.56° |
| 4 | Three-dimensional surface(3) | | 1.5163<br>Y -28.138<br>Z 85. 930 | 64.15<br>θ 83.15° |
| 5 | Three-dimensional surface(2) | | Y 0.781<br>Z 76. 770 | θ 54.56° |
| 6 | ∞ (image plane) | | Y 14. 258<br>Z 111. 028 | θ 50. 00° |

| Three-dimensional surface(1) | | | | | |
|---|---|---|---|---|---|
| $C_5$<br>$C_{10}$ | $6. 1734 \times 10^{-3}$<br>$5. 7752 \times 10^{-5}$ | $C_7$ | $9. 9567 \times 10^{-3}$ | $C_8$ | $2. 2653 \times 10^{-5}$ |

| Three-dimensional surface(2) | | | | | |
|---|---|---|---|---|---|
| $C_5$<br>$C_{10}$ | $9.6423 \times 10^{-4}$<br>$1.8481 \times 10^{-5}$ | $C_7$ | $3.0939 \times 10^{-3}$ | $C_8$ | $4. 2479 \times 10^{-6}$ |

| Three-dimensional surface(3) | | | | | |
|---|---|---|---|---|---|
| $C_5$<br>$C_{10}$ | $3. 8994 \times 10^{-3}$<br>$1. 7324 \times 10^{-6}$ | $C_7$ | $4.1772 \times 10^{-3}$ | $C_8$ | $-4. 2157 \times 10^{-6}$ |

| Three-dimensional surface | | | | |
|---|---|---|---|---|
| | (1) | (2) | (3) | (2) |
| CXn | 0.01991 | 0.00619 | 0.00835 | 0.00534 |
| CYn | 0.01235 | 0.00193 | 0.00780 | 0.00134 |
| FXn | 97.2750 | -53.2704 | 39.4902 | -362.6865 |
| FYn | 156.8215 | -170.8516 | 42.2748 | -1445.3327 |
| FX | 55. 61735 | | | |
| FY | 45. 53734 | | | |
| FXn/FX | 1.7490 | -0.9578 | 0.7100 | -6.52110 |
| FYn/FY | 3.4438 | -3.7519 | 0.9284 | -31.7395 |
| FY/FX | 0.81876 | | | |

Example 13

| Surface No. | Radius of curvature | Surface separation | Refractive index | Abbe's No. |
|---|---|---|---|---|
| 1 | ∞ (pupil) | | | |
| 2 | Three-dimensional surface (1) | | 1.5254 Y 0.000 Z 4. 230 | 56.25 θ 0.00° |
| 3 | Three-dimensional surface(2) | | 1.5254 Y 0.000 Z 14. 245 | 56.25 θ -53.34° |
| 4 | ∞ | | 1.5254 Y 47.807 Z 28. 564 | 56.25 θ 57.45° |
| 5 | Three-dimensional surface(1) | | 1.5254 Y 0.000 Z 4. 230 | 56.25 θ 0.00° |
| 6 | Three-dimensional surface(2) | | Y 0.000 Z 14. 245 | θ -53.34° |
| 7 | ∞ (image plane) | | Y 0.000 | θ -19. 11° Z 26. 296 |

| Three-dimensional surface(1) | | | | | | | |
|---|---|---|---|---|---|---|---|
| $C_5$ | $1.0924 \times 10^{-3}$ | $C_7$ | $7.2551 \times 10^{-3}$ | $C_8$ | $-1.1681 \times 10^{-5}$ |
| $C_{10}$ | $1.0202 \times 10^{-5}$ | $C_{12}$ | $1.0606 \times 10^{-6}$ | $C_{14}$ | $-8.1164 \times 10^{-7}$ |
| $C_{16}$ | $-5.8312 \times 10^{-7}$ | $C_{17}$ | $-9.2779 \times 10^{-9}$ | $C_{19}$ | $1.0029 \times 10^{-8}$ |
| $C_{21}$ | $2.5790 \times 10^{-8}$ | | | | |

| Three-dimensional surface(2) | | | | | | | |
|---|---|---|---|---|---|---|---|
| $C_5$ | $-6.7102 \times 10^{-4}$ | $C_7$ | $3.6136 \times 10^{-4}$ | $C_8$ | $-1.3035 \times 10^{-5}$ |
| $C_{10}$ | $-5.9967 \times 10^{-5}$ | $C_{12}$ | $2.8639 \times 10^{-7}$ | $C_{14}$ | $1.1362 \times 10^{-6}$ |
| $C_{16}$ | $1.4776 \times 10^{-7}$ | $C_{17}$ | $3.7664 \times 10^{-9}$ | $C_{19}$ | $-3.4413 \times 10^{-8}$ |
| $C_{21}$ | $-2.3892 \times 10^{-7}$ | | | | |

| Three-dimensional surface | | | | |
|---|---|---|---|---|
| | (1) | (2) | (1) | (2) |
| CXn | 0.01451 | 0.00070 | 0.01421 | 0.00075 |
| CYn | 0.00218 | -0.00134 | 0.00586 -0.00171 | |
| FXn | 133.4766 | -471.0622 | 23.2050 | -2582.3278 |
| FYn | 888.4155 | 246.0773 | 56.2702 | 1132.5999 |
| FX | 34.36426 | | | |
| FY | 31.49606 | | | |
| FXn/FX | 3.8842 | 13.7079 | 0.6753 | 75.1457 |
| FYn/FY | 28. 2072 | 7. 8130 | 1. 7866 | 35. 9601 |
| FY/FX | 0.9165 | | | |

The following is a description of examples concerning the arrangement of surfaces of a decentered optical system according to the present invention which has at least one rotationally asymmetric surface that satisfies at least one of the above-described conditions (1-1) to (3-3). In the following description, the object plane and the image plane are relative to each other; it will be apparent that the object and image planes may be replaced by each other to use the optical path reversely.

Example 14:

As shown in Fig. 14, a decentered optical system 10 according to this example comprises, in order in which incident light rays from an object pass, a first transmitting surface T1, a first reflecting surface R1, a second reflecting surface R2, a third reflecting surface R3, a fourth reflecting surface R4, and a second transmitting surface T2. The light rays enter the optical system through the first transmitting surface T1 and are reflected successively by the first reflecting surface R1, the second reflecting surface R2, the third reflecting surface R3, and the fourth reflecting surface R4. The reflected light rays exit from the optical system through the second transmitting surface T2 in a direction different from a direction in which the light rays are incident on the first transmitting surface T1 to reach the image plane. The image plane may be replaced by the object plane to use the optical path reversely.

Example 15:

As shown in Fig. 15, a decentered optical system 10 according to this example is the same as that shown in Fig. 14 except that the first transmitting surface T1 and the second reflecting surface R2 are the identical surface.

Example 16:

As shown in Fig. 16, a decentered optical system 10 according to this example is the same as that shown in Fig. 14 except that the second transmitting surface T2 and the third reflecting surface R3 are the identical surface.

Example 17:

As shown in Fig. 17, a decentered optical system 10 according to this example is the same as that shown in Fig. 14 except that the first reflecting surface R1 and the third reflecting surface R3 are the identical surface.

Example 18:

As shown in Fig. 18, a decentered optical system 10 according to this example is the same as that shown in Fig. 14 except that the second reflecting surface R2 and fourth reflecting surface R4 are the identical surface.

Example 19:

As shown in Fig. 19, a decentered optical system 10 according to this example is the same as that shown in Fig. 14 except that the first transmitting surface T1, the second reflecting surface R2, and the fourth reflecting surface R4 are the identical surface.

Example 20:

As shown in Fig. 20, a decentered optical system 10 according to this example is the same as that shown in Fig. 14 except that the first transmitting surface T1 and the second reflecting surface R2 are the identical surface, and the first reflecting surface R1 and the third reflecting surface R3 are the identical surface.

Example 21:

As shown in Fig. 21, a decentered optical system 10 according to this example is the same as that shown in Fig. 14 except that the first transmitting surface T1 and the second reflecting surface R2 are the identical surface, and the second transmitting surface T2 and the third reflecting surface R3 are the identical surface.

Example 22:

As shown in Fig. 22, a decentered optical system 10 according to this example is the same as that shown in Fig. 14 except that the first reflecting surface R1 and the third reflecting surface R3 are the identical surface, and the second reflecting surface R2 and the fourth reflecting surface R4 are the identical surface.

Example 23:

As shown in Fig. 23, a decentered optical system 10 according to this example is the same as that shown in Fig. 14 except that the second reflecting surface R2 and the fourth reflecting surface R4 are the identical surface, and the second transmitting surface T2 and the third reflecting surface R3 are the identical surface.

Example 24:

As shown in Fig. 24, a decentered optical system 10 according to this example is the same as that shown in Fig. 14 except that the first transmitting surface T1, the second reflecting surface R2, and the fourth reflecting surface R4 are the identical surface, and the second transmitting surface T2 and the third reflecting surface R3 are the identical surface.

Example 25:

As shown in Fig. 25, a decentered optical system 10 according to this example is the same as that shown in Fig. 14 except that the first transmitting surface T1, the second reflecting surface R2, and the fourth reflecting surface R4 are the identical surface, and the first reflecting surface R1 and the third reflecting surface R3 are the identical surface.

Example 26:

As shown in Fig. 26, a decentered optical system 10 according to this example is the same as that shown in Fig. 14 except that the first transmitting surface T1 and the second reflecting surface R2 are the identical surface, and the second transmitting surface T2, the first reflecting surface R1 and the third reflecting surface R3 are the identical surface.

Example 27:

As shown in Fig. 27, a decentered optical system 10 according to this example is the same as that shown in Fig. 14 except that the second reflecting surface R2 and the fourth reflecting surface R4 are the identical surface, and the second transmitting surface T2, the first reflecting surface R1, and the third reflecting surface R3 are the identical surface.

Example 28:

As shown in Fig. 28, a decentered optical system 10 according to this example is the same as that shown in Fig. 14 except that the first transmitting surface T1, the second reflecting surface R2, and the fourth reflecting surface R4 are the identical surface, and the second transmitting surface T2, the first reflecting surface R1, and the third reflecting surface R3 are the identical surface.

Example 29:

This example relates to a machining method usable in a case where a decentered optical system according to the present invention consists essentially of a rotationally asymmetric surface and a rotationally symmetric surface. As shown in Fig. 29, a decentered optical system 10 according to this example comprises, in order in which incident light rays from an object pass, a first transmitting surface T1, a first reflecting surface R1, a second reflecting surface R2, and a second transmitting surface T2. The light rays enter the optical system through the first transmitting surface T1 and are reflected successively by the first reflecting surface R1 and the second reflecting surface R2. The reflected light rays exit from the optical system through the second transmitting surface T2 in a direction different from a direction in which the light rays are incident on the first transmitting surface T1 to reach an image plane. The second transmitting surface T2 and the first reflecting surface R1 are the identical surface. In a case where the first transmitting surface T1 is a rotationally symmetric surface, and the first reflecting surface R1 and the second reflecting surface R2 are rotationally asymmetric surfaces, first the rotationally asymmetric surfaces R1 and R2 are machined, and thereafter, the rotationally symmetric surface T1 is machined. Such a machining sequence facilitates positioning of each surface, and the manufacturing accuracy improves.

Example 30:

This example relates to a method of producing a decentered optical system according to the present invention in such a manner that the decentered optical system is divided into portions including a rotationally asymmetric surface and some other portions, and that each portion is first machined, and thereafter, the machined portions are cemented together to form a decentered optical system. As shown in Fig. 30, the decentered optical system 10 comprises a first transmitting surface T1, a first reflecting surface R1, a second reflecting surface R2, and a second transmitting surface T2 as in the case of Fig. 10. Light rays enter the optical system through the first transmitting surface T1 and are reflected successively by the first reflecting surface R1 and the second reflecting surface R2. The reflected light rays exit from the optical system through the second transmitting surface T2 in a direction different from a direction in which the light rays are incident on the first transmitting surface T1 to reach an image plane. In a case where the first transmitting surface T1 is a rotationally symmetric surface, while the first reflecting surface R1 and the second reflecting surface R2 are rotationally asymmetric surfaces, and the second transmitting surface T2 is a rotationally symmetric surface, the optical system is divided into a first portion 14 including the first reflecting surface R1, a second portion 15 including the second reflecting surface R2, and a third portion 16 including both the first transmitting surface T1 and the second transmitting surface T2. After surfaces of each portion have been machined, the three portions 14, 15 and 16 are cemented together to produce the decentered optical system 10. With such a production method, rotationally asymmetric surfaces are formed by machining plane thin members. Accordingly, it is possible to avoid degradation of the machining accuracy due to distortion or the like of components during machining. It should be noted that in a case where a rotationally asymmetric surface is produced by injection molding, the optical component is preferably as thin as possible. The thinner the optical component, the further the distortion of the resin after the injection molding can be reduced.

Example 31:

As shown in Fig. 31, this example relates to an ocular optical system having a folded optical path including a reflecting surface M, wherein the reflecting surface M is formed from a rotationally asymmetric surface so as to have power. By doing so, it is possible to omit a transmission lens in the ocular optical system. Moreover, the folded optical path enables the ocular optical system to be constructed in a compact form. It should be noted that an inversion prism in an ocular optical system can also be given power by the same way as the above.
Similarly, as shown in Fig. 32, in the case of an ocular optical system having a folded optical path including two reflecting surfaces M1 and M2, at least one reflecting surface M1 can be formed from a rotationally asymmetric surface so as to have power.

Example 32:

As shown in Fig. 33, this example relates to an image-forming optical system having a folded optical path including a reflecting surface M3, wherein the reflecting surface M3 is formed from a rotationally asymmetric surface so as to have power. By doing so, it is possible to omit a transmission lens in the image-forming optical system. Moreover, the folded optical path enables the image-forming optical system to be constructed in a compact form. It should be noted that an inversion prism in an image-forming optical system can also be given power by the same way as the above.
Similarly, as shown in Fig. 34, in the case of an image-forming optical system having a folded optical path including two reflecting surfaces M4 and M5, at least one reflecting surface M4 can be formed from a rotationally asymmetric surface so as to have power.

Example 33:

In this example, as shown in Fig. 35, an image-forming optical system such as that shown in Fig. 34 is used as an objective optical system, and this is combined with an ocular optical system 17 consisting essentially of an ordinary transmission lens to form an afocal optical system for a telescope, a real-image finder, etc. If an objective optical system is formed by giving power to a prism optical system for obtaining an inverted image, for example, it is possible to construct a compact optical system. If an objective lens of a real-image finder for a camera is constructed of an optical system in which a rotationally asymmetric surface is used in an inversion prism, it is possible to obtain a compact camera finder having a simple structure. It should be noted that an erect image can be obtained by an even number of reflections, as shown in Fig. 35.

Example 34:

In this example, as shown in Fig. 36, an ocular optical system such as that shown in Fig. 32 is combined with an image-forming optical system 18 consisting essentially of an ordinary transmission lens, which is used as an objective optical system, to form an afocal optical system for a telescope, a real-image finder, etc. Thus, it becomes possible to reduce the size of an afocal optical system of short focal length in particular, which is complicated in arrangement, to thereby obtain a compact optical system.

The effect of reducing the size is particularly remarkable in an ocular optical system having a focal length of 100 millimeters or less. It should be noted that an erect image can be obtained by even number of reflections, as shown in Fig. 36.

Example 35:

In this example, as shown in Fig. 37, an image-forming optical system such as that shown in Fig. 34 is used as an objective optical system, and this is combined with an ocular optical system such as that shown in Fig. 32 to form an afocal optical system for a telescope, a real-image finder, etc. The combination makes it possible to achieve a further reduction in the size of the afocal optical system. It should be noted that if a rotationally asymmetric surface is used in an inversion prism, and thus the prism optical system is given power, it is possible to simplify the structure of an objective lens or an ocular lens or to omit it. In this case also, the afocal optical system may be arranged to obtain an erect image by an even number of reflections.

The following is a description of examples of optical systems for various optical apparatuses which use decentered optical systems having at least one rotationally asymmetric surface that satisfies at least one of the conditions (1-1) to (3-3) according to the present invention.

Example 36:

The following is a description of examples in which a decentered optical system according to the present invention is applied to an endoscope. In the following description, the term "endoscope" means an endoscope 64 using an image guide optical fiber bundle and a relay lens system as shown in Fig. 38, and a video endoscope 71 such as that shown in Fig. 39, unless otherwise specified. The endoscope 64 shown in Fig. 38 has an insert part 65 containing an image-forming optical system and illumination optical system (not shown), a camera 66, a monitor 67, and a light source unit 68. The image-forming optical system, together with a light guide for applying light in the direction of the visual field of the image-forming optical system, is incorporated in a distal end portion 69 of the insert part 65. In the insert part 65, a relay lens system, which is an image and pupil transfer optical system, is provided subsequently to the image-forming optical system. An ocular optical system (not shown) is disposed in the proximal portion of the endoscope 64. The camera 66, which serves as an imaging device, can be attached to the proximal portion of the endoscope 64 at a position subsequent to the ocular optical system. Illuminating light from the light source unit 68 is supplied through a light guide cable 70 and passed through the proximal portion, the insert part 65, and the distal end portion 69 to illuminate an area in the direction of the visual field.

The video endoscope 71 shown in Fig. 39 contains an image-forming optical system and an illumination optical system. The video endoscope 71 is associated with a light source unit 72 for supplying illuminating light, a video processor 73 for executing processing of signals associated with the video endoscope 71, a monitor 74 for displaying video signals outputted from the video processor 73, a VTR deck 75 and video disk 76 connected to the video processor 73 to record video signals and so forth, and a video printer 77 for printing out video signals in the form of images. The video endoscope 71 has an insert part 78 with a distal end portion 79. An image-forming optical system, an imaging device, and a light guide for applying light in the direction of the visual field are incorporated in the distal end portion 79.

Figs. 40 (a) , 40 (b) and 40 (c) show some examples in which a decentered optical system 10 having a rotationally asymmetric surface according to the present invention is used in the objective optical systems provided in the distal end portions of these endoscopes. Fig. 40 (a) shows the distal end portion of a side-viewing video endoscope. A decentered optical system 10 according to the present invention is disposed behind a lens 80 also serving as a protective glass. The decentered optical system 10 comprises a first transmitting surface T1, a first reflecting surface R1, a second reflecting surface R2, and a second transmitting surface T2, wherein at least one of the four surfaces is formed from a rotationally asymmetric surface. The optical axis is deflected through approximately 90° by the decentered optical system 10, and a two-dimensional imaging device 81 is disposed at the image plane of the decentered optical system 10. It is, of course, possible to dispose an end face of an optical fiber bundle in place of the two-dimensional imaging device 81 to thereby construct an endoscope such as that shown in Fig . 38.

Fig. 40(b) shows the distal end portion of an endoscope using an optical fiber bundle 82 for guiding an endoscopic image. This endoscope is arranged to enable observation of an object in a diagonally forward direction. A decentered optical system 10 according to the present invention is disposed behind a lens 80 also serving as a protective glass. The decentered optical system 10 comprises a first transmitting surface T1, a first reflecting surface R1, a second reflecting surface R2, and a second transmitting surface T2, wherein the first transmitting surface T1 and the second reflecting surface R2 are the identical surface, and at least one of the four surfaces is formed from a rotationally asymmetric surface. The optical axis is deflected through several tens of degrees by the decentered optical system 10, and an end face of an optical fiber bundle 82 is disposed at the image plane of the decentered optical system 10.

Fig. 40 (c) shows the distal end portion of a direct-view video endoscope in which a decentered optical system 10 according to the present invention, such as that shown in Fig. 12, is disposed. The decentered optical system 10 comprises a first transmitting surface T1, a first reflecting surface R1, a second reflecting surface R2, and a second transmitting surface T2, wherein at least one of the four surfaces is formed from a rotationally asymmetric surface. A two-dimensional imaging device 81 is disposed at an image plane tilted with respect to the optical axis.

Example 37:

As shown in Figs. 41 (a) and 41(b), this example relates to arrangements similar to those shown in Figs. 40 (a) and 40 (b), wherein a transparent protective plate 83 is disposed on the entrance side of the decentered optical system 10 in place of the lens 80, which also serves as a protective glass [it should, however, be noted that in Fig. 41 (b) a two-dimensional imaging device 81 is disposed at the image plane of the decentered optical system 10].

Example 38:

As shown in Figs. 42 (a) and 42 (b), this example relates to arrangements similar to those shown in Figs. 40 (a) and 40 (b), wherein the first transmitting surface T1 on the entrance side of the decentered optical system 10 is a plane surface, and the lens 80, which also serves as a protective glass, is omitted [in Figs. 42(a) and 42(b), a two-dimensional imaging device 81 or optical fiber bundle 82 disposed at the image plane is not shown].

Example 39:

As shown in Figs. 43 (a) and 43 (b), this example relates to arrangements similar to those shown in Figs. 41 (a) and 41 (b), wherein the second transmitting surface T2 on the exit side of the decentered optical system 10 is a plane surface.

Example 40:

As shown in Figs. 44(a) and 44(b), this example relates to arrangements similar to those shown in Figs. 43 (a) and 43(b), wherein the image plane of the decentered optical system 10 is made coincident with the plane surface T2 on the exit side of the decentered optical system 10, and a two-dimensional imaging device 81 is placed in close contact with the surface T2.

Example 41:

As shown in Figs. 45 (a) and 45 (b), this example relates to arrangements similar to those shown in Figs. 43 (a) and 43 (b), wherein the second transmitting surface T2 on the exit side of the decentered optical system 10 is a plane surface. The arrangements differ from those shown in Figs. 43 (a) and 43 (b) in that one end of an optical fiber bundle 82 is disposed at the image plane of the decentered optical system 10 in place of the two-dimensional imaging device 81.

Example 42:

As shown in Figs. 46 (a) and 46 (b), this example relates to arrangements similar to those shown in Figs. 44 (a) and 44(b), wherein the image plane of the decentered optical system 10 is made coincident with the plane surface T2 on the exit side of the decentered optical system 10. In this example, one end of an optical fiber bundle 82 is disposed in place of the two-dimensional imaging device 81.

Example 43:

As shown in Figs. 47 (a) and 47 (b), this example relates to arrangements similar to those shown in Figs. 42 (a) and 42 (b), wherein the first transmitting surface T1 on the entrance side of the decentered optical system 10 is a plane surface, and the lens 80, which also serves as a protective glass, is omitted. In this example, one end of an optical fiber bundle 82 is disposed at the image plane of the decentered optical system 10.

Example 44:

In this example, a crystalline material, e.g. sapphire, is used as the protective plate 83 disposed on the entrance side of the decentered optical system 10 in the arrangements shown in Figs. 43 (a) , 43 (b) and so forth.

Example 45:

As shown in Figs. 48 (a) and 48 (b), this example relates to arrangements similar to those shown in Figs. 41 (a) and 41(b), wherein the first surface of the endoscope objective optical system (in this case, the front surface of the transparent protective plate 83) is recessed inward from the enclosure of the distal end of the endoscope. In other examples also, the first surface of the endoscope objective optical system may be similarly recessed inward from the enclosure of the endoscope distal end. Example 46:

As shown in Figs. 49 (a) and 49(b) , this example relates to arrangements similar to those shown in Figs. 41 (a) and 41(b) , wherein the first surface of the endoscope objective optical system (in this case, the front surface of the transparent protective plate 83) projects outward from the enclosure of the distal end of the endoscope. In other examples also, the first surface of the endoscope objective optical system may similarly project outward from the enclosure of the endoscope distal end.

Example 47:

In this example, a decentered optical system 10 according to the present invention is used in an optical system of an endoscope camera adapter which is attached to an ocular lens part of an endoscope, e.g. a soft endoscope, which has an ocular lens to project an endoscopic image onto an imaging device. As shown in Fig. 50, an endoscope has an observation optical system 91, and a camera adapter 92 is attached to the observation side of the observation optical system 91. In the camera adapter 92, a decentered optical system 10 according to the present invention, which is arranged in the form of a penta prism including at least one rotationally asymmetric surface having power, is disposed, and a two-dimensional imaging device 93 is disposed at the image plane of the decentered optical system 10.

Example 48:

In this example, as shown in Fig. 51, a plane-parallel plate 94 which serves as a protective glass is provided on the entrance side of a decentered optical system 10 in an endoscope camera adapter 92 arranged as shown in Fig. 50.

Example 49:

In this example, as shown in Fig. 52, an endoscope camera adapter 92 arranged as shown in Fig. 50 is provided with a mechanism for adjusting the spacing between an image-forming decentered optical system 10 and a two-dimensional imaging device 93, thereby enabling focus adjustment.

Example 50:

In this example, as shown in Fig. 53, an endoscope camera adapter 92 arranged as shown in Fig. 50 is modified such that the first reflecting surface of a penta prism, which constitutes the decentered optical system 10, is formed as an optical path splitting surface 95, e.g. a half-mirror, thereby enabling an endoscopic image to be directly observed simultaneously with imaging by the two-dimensional imaging device 93. In this example, an optical axis and power correcting optical element 96 is pasted on the optical path splitting surface 95, thereby making the observation direction approximately parallel to the optical axis of light rays entering the camera adapter 92 from the observation optical system 91.

In the foregoing, a description has been given of basic examples of decentered optical systems according to the present invention, examples relating to the arrangement of surfaces, and examples of application of the decentered optical systems to various optical elements and optical apparatuses. However, it should be noted that the present invention is not necessarily limited to these examples, and that various modifications may be imparted thereto.

The above-described optical systems according to the present invention may be arranged, for example, as follows:

[1] A decentered optical system comprising at least one rotationally asymmetric surface having no axis of rotational symmetry in nor out of the surface, wherein rotationally asymmetric aberrations due to decentration are corrected by the rotationally asymmetric surface.

[2] The optical system as set forth in [1], wherein the rotationally asymmetric surface is a plane-symmetry three-dimensional surface characterized by having only one plane of symmetry.

[3] The optical system as set forth in [2], wherein the plane of symmetry of said rotationally asymmetric surface is disposed in a plane approximately coincident with a decentration plane, which is a direction of decentration of each surface constituting the optical system.

[4] The optical system as set forth in any one of [1] to [3], wherein said rotationally asymmetric surface is used as a reflecting surface.

[5] The optical system as set forth in [4], wherein said reflecting surface is a surface having totally reflecting action or reflecting action.

[6] The optical system as set forth in [2] or [3], wherein said rotationally asymmetric surface having only one plane of symmetry is used as a back-coated mirror.

[7] The optical system as set forth in any one of [1] to [6], wherein, assuming that a light ray emanating from the center of an object point and passing through the center of a pupil to reach the center of an image is defined as a principal ray, said rotationally asymmetric surface is tilted with respect to said principal ray.

[8] The optical system as set forth in any one of [1] to [7], wherein, assuming that a light ray emanating from the center of an object point and passing through the center of a pupil to reach the center of an image is defined as a principal ray, and that a Y-axis is taken in the decentration plane of the surface, and an X-axis is taken in a direction perpendicularly intersecting the Y-axis, and further an axis constituting an orthogonal coordinate system in combination with the X- and Y-axes is defined as a Z-axis, and further that said principal ray and a light ray which is parallel to said principal ray at a slight distance d in the X-axis direction are made to enter said optical system from an entrance side thereof, and the sine of an angle formed between said two rays as projected on the XZ-plane at an exit side of said optical system is denoted by NA'X, and further that a value obtained by dividing the distance d between said parallel rays by the NA'X is denoted by FX, and the focal length in the X-axis direction of that portion of said rotationally asymmetric surface on which the axial principal ray strikes is denoted by FXn, the following condition is satisfied:

$$-1000 < FX/FXn < 1000 \tag{1-1}$$

[9] The optical system as set forth in [8], wherein said FX and FXn satisfy the following condition:

$$-100 < FX/FXn < 100 \tag{1-2}$$

[10] The optical system as set forth in [8], wherein said FX and FXn satisfy the following condition:

$$-10 < FX/FXn < 10 \tag{1-3}$$

[11] The optical system as set forth in any one of [1] to [10], wherein, assuming that a light ray emanating from the center of an object point and passing through the center of a pupil to reach the center of an image is defined as a principal ray, and that a Y-axis is taken in the decentration plane of the surface, and an X-axis is taken in a direction perpendicularly intersecting the Y-axis, and further an axis constituting an orthogonal coordinate system in combination with the X- and Y-axes is defined as a Z-axis, and further that the principal ray and a light ray which is parallel to the principal ray at a slight distance d in the Y-axis direction are made to enter said optical system from the entrance surface side thereof, and the sine of an angle formed between said two rays in the YZ-plane at the exit side of said optical system is denoted by NA'Y, and further that a value obtained by dividing the distance d between said parallel rays by the NA'Y is denoted by FY, and the focal length in the Y-axis direction of that portion of said rotationally asymmetric surface on which the axial principal ray strikes is denoted by FYn, the following condition is satisfied:

$$-1000 < FY/FYn < 1000 \tag{2-1}$$

[12] The optical system as set forth in [11], wherein said FY and FYn satisfy the following condition:

$$-100 < FY/FYn < 100 \qquad (2\text{-}2)$$

[13] The optical system as set forth in [11], wherein said FY and FYn satisfy the following condition:

$$-10 < FY/FYn < 10 \qquad (2\text{-}3)$$

[14] The optical system as set forth in any one of [1] to [13], wherein, assuming that a light ray emanating from the center of an object point and passing through the center of a pupil to reach the center of an image is defined as a principal ray, and that a Y-axis is taken in the decentration plane of the surface, and an X-axis is taken in a direction perpendicularly intersecting the Y-axis, and further an axis constituting an orthogonal coordinate system in combination with the X- and Y-axes is defined as a Z-axis, and further that the principal ray and a light ray which is parallel to the principal ray at a slight distance d in the X-axis direction are made to enter said optical system from an entrance side thereof, and the sine of an angle formed between said two rays as projected on the XZ-plane at an exit side of said optical system is denoted by NA'X, and a value obtained by dividing the distance d between said parallel rays by the NA'X is denoted by FX, and further that the principal ray and a light ray which is parallel to the principal ray at a slight distance d away from it in the Y-axis direction are made to enter said optical system from the entrance side thereof, and the sine of an angle formed between said two rays in the YZ-plane at the exit side of said optical system is denoted by NA'Y, and a value obtained by dividing the distance d between said parallel rays by the NA'Y is denoted by FY, the following condition is satisfied:

$$0.01 < |FY/FX| < 100 \qquad (3\text{-}1)$$

[15] The optical system as set forth in [14], wherein said FX and FY satisfy the following condition:

$$0.1 < |FY/FX| < 10 \qquad (3\text{-}2)$$

[16] The optical system as set forth in [14], wherein said FX and FY satisfy the following condition:

$$0.5 < |FY/FX| < 2 \qquad (3\text{-}3)$$

[17] The optical system as set forth in any one of [1] to [16], which comprises only a first reflecting surface, wherein light rays are reflected by the first reflecting surface in a direction different from a direction in which the light rays are incident thereon.

[18] The optical system as set forth in any one of [1] to [16], which comprises a first reflecting surface and a first transmitting surface, wherein light rays enter the optical system through the first transmitting surface and are reflected by the first reflecting surface to exit from the optical system through the first transmitting surface in a direction different from a direction in which the light rays are incident on the first transmitting surface.

[19] The optical system as set forth in any one of [1] to [16], which comprises a first reflecting surface, a first transmitting surface, and a second transmitting surface, wherein light rays enter the optical system through the first transmitting surface and are reflected by the first reflecting surface to exit from the optical system through the second transmitting surface in a direction different from a direction in which the light rays are incident on the first transmitting surface.

[20] The optical system as set forth in any one of [1] to [16], which comprises a first reflecting surface, a second reflecting surface, and a first transmitting surface, wherein light rays enter the optical system through the first transmitting surface and are reflected by the first reflecting surface and then reflected by the second reflecting surface to exit from the optical system through the first transmitting surface.

[21] The optical system as set forth in any one of [1] to [16], which comprises a first reflecting surface, a second reflecting surface, a first transmitting surface, and a second transmitting surface, wherein light rays enter the optical system through the first transmitting surface and are reflected by the first reflecting surface and then reflected by the second reflecting surface to exit from the optical system through the second transmitting surface.

[22] The optical system as set forth in [21], wherein an optical path of the optical system has portions intersecting each other.

[23] The optical system as set forth in [21], wherein an optical path of the optical system has no portions intersecting each other.

[24] The optical system as set forth in [21], wherein the first transmitting surface and the second reflecting surface are the identical surface.

[25] The optical system as set forth in [21], wherein the first reflecting surface and the second transmitting surface are the identical surface.

[26] The optical system as set forth in any one of [1] to [16], which comprises a first reflecting surface, a second reflecting surface, a third reflecting surface, a first transmitting surface, and a second transmitting surface, wherein light rays enter the optical system through the first transmitting surface and are reflected successively by the first, second and third reflecting surfaces to exit from the optical system through the second transmitting surface in a direction different from a direction in which the light rays are incident on the first transmitting surface.

[27] The optical system as set forth in [26], wherein the first transmitting surface and the second reflecting surface are the identical surface.

[28] The optical system as set forth in [26], wherein the first reflecting surface and the third reflecting surface are the identical surface.

[29] The optical system as set forth in [26], wherein the first transmitting surface and the third reflecting surface are the identical surface.

[30] The optical system as set forth in [26], wherein the second transmitting surface and the second reflecting surface are the identical surface.

[31] The optical system as set forth in any one of [1] to [16], which comprises at least a first reflecting surface, a second reflecting surface, a third reflecting surface, a fourth reflecting surface, a first transmitting surface, and a second transmitting surface, wherein light rays enter the optical system through the first transmitting surface and are reflected successively by the first, second, third and fourth reflecting surfaces to exit from the optical system through the second transmitting surface in a direction different from a direction in which the light rays are incident on the first transmitting surface.

[32] The optical system as set forth in [31], wherein the first transmitting surface and the second reflecting surface are the identical surface.

[33] The optical system as set forth in [31], wherein the second transmitting surface and the third reflecting surface are the identical surface.

[34] The optical system as set forth in [31], wherein the first reflecting surface and the third reflecting surface are the identical surface.

[35] The optical system as set forth in [31], wherein the second reflecting surface and the fourth reflecting surface are the identical surface.

[36] The optical system as set forth in [31], wherein the first transmitting surface, the second reflecting surface, and the fourth reflecting surface are the identical surface.

[37] The optical system as set forth in [31], wherein the first transmitting surface and the second reflecting surface are the identical surface, and wherein the first reflecting surface and the third reflecting surface are the identical surface.

[38] The optical system as set forth in [31], wherein the first transmitting surface and the second reflecting surface are the identical surface, and wherein the second transmitting surface and the third reflecting surface are the identical surface.

[39] The optical system as set forth in [31], wherein the first reflecting surface and the third reflecting surface are the identical surface, and wherein the second reflecting surface and the fourth reflecting surface are the identical surface.

[40] The optical system as set forth in [31], wherein the second reflecting surface and the fourth reflecting surface are the identical surface, and wherein the second transmitting surface and the third reflecting surface are the identical surface.

[41] The optical system as set forth in [31], wherein the first transmitting surface, the second reflecting surface, and the fourth reflecting surface are the identical surface, and wherein the second transmitting surface and the third reflecting surface are the identical surface.

[42] The optical system as set forth in [31], wherein the first transmitting surface, the second reflecting surface, and the fourth reflecting surface are the identical surface, and wherein the first reflecting surface and the third reflecting surface are the identical surface.

[43] The optical system as set forth in [31], wherein the first transmitting surface and the second reflecting surface are the identical surface, and wherein the second transmitting surface, the first reflecting surface, and the third reflecting surface are the identical surface.

[44] The optical system as set forth in [31], wherein the second reflecting surface and the fourth reflecting surface are the identical surface, and wherein the second transmitting surface, the first reflecting surface, and the third reflecting surface are the identical surface.

[45] The optical system as set forth in [31], wherein the first transmitting surface, the second reflecting surface, and the fourth reflecting surface are the identical surface, and wherein the second transmitting surface, the first reflecting surface, and the third reflecting surface are the identical surface.

[46] The optical system as set forth in any one of [1] to [45], wherein a rotationally asymmetric surface is first machined, and then a rotationally symmetric surface is machined.

[47] The optical system as set forth in any one of [1] to [45], which is produced by cementing together an optical component having at least one rotationally asymmetric surface machined thereon and an optical component having another surface machined thereon.

[48] The optical system as set forth in any one of [1] to [47], which is arranged as an ocular optical system having a folded optical path, wherein a reflecting surface constituting said folded optical path has power.

[49] The optical system as set forth in any one of [1] to [47], which is arranged as an image-forming optical system having a folded optical path, wherein a reflecting surface constituting said folded optical path has power.

[50] An optical system which is formed as an afocal optical system from a combination of the image-forming optical system of [49] and an ocular optical system.

[51] The optical system as set forth in [50], wherein said afocal optical system is arranged to obtain an erect image by an even number of reflections.

[52] An optical system which is formed as an afocal optical system from a combination of an image-forming optical system and the ocular optical system of [48].

[53] The optical system as set forth in [52], wherein said afocal optical system is arranged to obtain an erect image by an even number of reflections.

[54] An optical system which is formed as an afocal optical system from a combination of the image-forming optical system of [49] and the ocular optical system of [48].

[55] The optical system as set forth in [54], wherein said afocal optical system is arranged to obtain an erect image by an even number of reflections.

[104] The optical system as set forth in any one of to [55], which is disposed in optical means provided in an endoscope.

[105] The optical system as set forth in [104], wherein said endoscope uses an imaging device.

[106] The optical system as set forth in [104], which is used in an endoscope objective optical system.

[107] The optical system as set forth in [106], wherein a protective transparent plate is disposed on the object side of said optical system.

[108] The optical system as set forth in [106], wherein an object-side surface of said optical system is a plane surface.

[109] The optical system as set forth in [106], wherein an image-side surface of said optical system is a plane surface.

[110] The optical system as set forth in [109], wherein the image-side surface of said optical system is placed in close contact with an imaging device.

[111] The optical system as set forth in [104], wherein an optical fiber bundle is disposed at an image-formation plane of said optical system separately from said optical system.

[112] The optical system as set forth in [104], wherein an optical fiber bundle is placed in close contact with an image-side surface of said optical system.

[113] The optical system as set forth in [111], wherein an object-side surface of said optical system is formed from a protective transparent plate.

[114] The optical system as set forth in [111], wherein an object-side surface of said optical system is a plane surface.

[115] The optical system as set forth in [104], wherein a first surface in a distal end part of the endoscope is made of glass or a crystalline material, e.g. sapphire.

[116] The optical system as set forth in [104], wherein a first surface of the endoscope objective optical system is recessed from an enclosure of the endoscope.

[117] The optical system as set forth in [104], wherein a first surface of the endoscope objective optical system projects from an enclosure of the endoscope.

[118] The optical system as set forth in any one of [1] to [55], which is disposed in a camera adapter for an endoscope to project an observation image onto an imaging device through said optical system.

[119] The optical system as set forth in [118], wherein a plane glass plate is provided in front of or behind said optical system.

[120] The optical system as set forth in [118], which has means for varying a spacing between said optical system and another optical system or an image-formation plane.

[121] The optical system as set forth in [118], wherein a sum total of reflections taking place in said optical system and another optical system is an even number.

[122] The optical system as set forth in [118], wherein said camera adapter for an endoscope comprises an optical system in which a sum total of reflections is an odd number, and an electrically image-inverting circuit.

[123] The optical system as set forth in [118], wherein said camera adapter for an endoscope has a semitransparent reflecting surface to divide an optical path into two.

[124] The optical system as set forth in [118], wherein an observation optical path for an observer is approximately parallel to an optical axis of light rays entering said endoscope camera adapter from an observation optical system.

As will be clear from the foregoing description, the present invention provides an optical system which is compact and has minimal aberrations in comparison to rotationally symmetric transmission optical systems.

A compact optical system capable of providing a clear image of minimal distortion even at a wide field angle. The optical system is a decentered optical system (10). Curved surfaces (3 and 4) constituting the optical system include at least one rotationally asymmetric surface having no axis of rotational symmetry in nor out of the surface. To correct rotationally asymmetric aberrations due to decentration by the rotationally asymmetric surface, the following condition is satisfied:

$$-1000<FX/FXn<1000 \qquad\qquad (1\text{-}1)$$

where FX is the focal length in the X-direction of the optical system, and FXn is the focal length in the X-direction of that portion of the rotationally asymmetric surface on which an axial principal ray strikes.

**Claims**

1. An endoscope having optical means (10) disposed in a distal portion of the endoscope to image on a two-dimensional imaging device (81) or an end face of an optical fiber bundle (82);
   **characterized in that** a decentered optical system (10) is provided as said optical means, and **in that** said decentered optical system comprises at least one rotationally asymmetric surface having no axis of rotational symmetry in nor out of the surface to correct rotationally asymmetric aberrations due to decentration.

2. The endoscope according to claim 1, wherein an optical element (80) having a negative refracting power is disposed on an object side of said rotationally asymmetric surface.

3. The endoscope according to claim 1 or 2, wherein said decentered optical system (10) comprises four optical surfaces, at least one of said four optical surfaces is a rotationally asymmetric surface having no axis of rotational symmetry in nor out the surface;
   wherein a first surface, a second surface, a third surface and a fourth surface of said four optical surfaces are arranged so that a segment of a principal ray that extends from the first surface (T1) to the second surface (R1) intersects a segment of the principal ray that extends from the third surface (R2) to the fourth surface (T2); and
   wherein the principal ray is a ray emanating from a center of a pupil to reach a center of an image plane of said decentered optical system.

4. The endoscope according to claim 1, wherein said decentered optical system (10) comprises three optical surfaces, at least one of said three optical surfaces is a rotationally asymmetric surface having no axis of rotational symmetry in nor out of the surface;
   wherein a first surface of said three optical surfaces serves as a transmitting surface (T1), a second surface of said three optical surfaces serves as a transmitting surface (T2) and as a reflecting surface (R1) and a third surface of said three optical surfaces serves as a reflecting surface (R2);
   wherein said first, second and third surface are arranged so that light from an object is transmitted through said first surface (T1) toward said second surface (R1) and is reflected by said second surface (R1) toward said third surface (R2) and is reflected by said third surface (R2) toward said second surface (T2) and is transmitted through said second surface (T2) toward an image plane of said decentered optical system.

5. The endoscope according to any one of claims 1 to 4, wherein, assuming that a light ray emanating from a center of an object point and passing through a center of a pupil to reach a center of an image is defined as a principal ray, and that a Y-axis is taken in a decentration plane of the surface, and an X-axis is taken in a direction perpendicularly intersecting the Y-axis, and further an axis constituting an orthogonal coordinate system in combination with the X- and Y-axes is defined as a Z-axis, and further that said principal ray and a light ray which is parallel to said principal ray at a slight distance d in the X-axis direction are made to enter said optical system from an entrance side thereof, and a sine of an angle formed between said two rays in an XZ-plane at an exit side of said optical system is denoted by NA'X, and further that a value obtained by dividing the distance d between said parallel rays by said NA'X is denoted by FX, which is the focal length in the X-axis direction of the optical system, and a focal length in the X-axis direction of that portion of said rotationally asymmetric surface on which the axial principal ray strikes is denoted by FXn, the following condition is satisfied:

$$-1000 < FX/FXn < 1000 \tag{1-1}$$

6. The endoscope according to any one of claims 1 to 5, wherein, assuming that a light ray emanating from a center of an object point and passing through a center of a pupil to reach a center of an image is defined as a principal ray, and that a Y-axis is taken in a decentration plane of the surface, and an X-axis is taken in a direction perpendicularly intersecting the Y-axis, and further an axis constituting an orthogonal coordinate system in combination with the X- and Y-axes is defined as a Z-axis, and further that said principal ray and a light ray which is parallel to said principal ray at a slight distance d in the Y-axis direction are made to enter said optical system from an entrance side thereof, and a sine of an angle formed between said two rays in a YZ-plane at an exit side of said optical system is denoted by NA'Y, and further that a value obtained by dividing the distance d between said parallel rays by said NA'Y is denoted by FY, which is the focal length in the Y-axis direction of the optical system, and a focal length in the Y-axis direction of that portion of said rotationally asymmetric surface on which the axial principal ray strikes is denoted by FYn, the following condition is satisfied:

$$-1000 < FY/FYn < 1000 \tag{2-1}$$

7. The endoscope according to any one of claims 1 to 6, wherein, assuming that a light ray emanating from a center of an object point and passing through a center of a pupil to reach a center of an image is defined as a principal ray, and that a Y-axis is taken in a decentration plane of the surface, and an X-axis is taken in a direction perpendicularly intersecting the Y-axis, and further an axis constituting an orthogonal coordinate system in combination with the X- and Y-axes is defined as a Z-axis, and further that said principal ray and a light ray which is parallel to said principal ray at a slight distance d in the X-axis direction are made to enter said optical system from an entrance side thereof, and a sine of an angle formed between said two rays in an XZ-plane at an exit side of said optical system is denoted by NA'X, and a value obtained by dividing the distance d between said parallel rays by said NA'X is denoted by FX, which is the focal length in the X-axis direction of the optical system, and further that said principal ray and a by FX, and further that said principal ray and a light ray which is parallel to said principal ray at a slight distance d away from it in the Y-axis direction are made to enter said optical system from the entrance side thereof, and a sine of an angle formed between said two rays in a YZ-plane at the exit side of said optical system is denoted by NA'Y, and a value obtained by dividing the distance d between said parallel rays by said NA'Y is denoted by FY, which is the focal length in the Y-axis direction of the optical system, the following condition is satisfied:

$$0.01 < |FY/FX| < 100 \tag{3-1}$$

8. The endoscope according to any one of claims 1 to 7, wherein said rotationally asymmetric surface is a plane-symmetry three-dimensional surface having only one plane of symmetry.

9. The endoscope according to any one of claim 1 to 8, wherein said rotationally asymmetric surface is used as a reflecting surface having totally reflecting action or reflecting action.

10. The endoscope according to claim 9, which comprises only a first reflecting surface, wherein light rays are reflected by the first reflecting surface in a direction different from a direction in which the light rays are incident thereon.

**Patentansprüche**

1. Endoskop, welches in einem distalen Abschnitt desselben ein optisches Mittel (10) aufweist, um auf ein zweidimensionales Abbildungsgerät (81) oder eine Endfläche eines Bündels (82) von optischen Fasern abzubilden;

**dadurch gekennzeichnet, dass** ein dezentriertes optisches System (10) als das optische Mittel vorgesehen ist, und dass das dezentrierte optische System wenigstens eine rotationsasymmetrische Fläche umfasst, welche weder eine Achse der Rotationssymmetrie innerhalb noch außerhalb der Fläche aufweist, um rotationsasymmetrische Aberrationen aufgrund der Dezentrierung zu korrigieren.

2. Endoskop nach Anspruch 1, wobei ein optisches Element (80), welches eine negative Brechkraft aufweist, an einer Objektseite der rotationsasymmetrischen Fläche angeordnet ist.

3. Endoskop nach Anspruch 1 oder 2, wobei das dezentrierte optische System (10) vier optische Flächen umfasst, wobei wenigstens eine der vier optischen Flächen eine rotationsasymmetrische Fläche ist, welche weder eine Achse der Rotationssymmetrie innerhalb noch außerhalb der Fläche aufweist;
wobei eine erste Fläche, eine zweite Fläche, eine dritte Fläche und eien vierte Fläche der vier optischen Flächen derart angeordnet sind, dass ein Segment eines Hauptstrahls, der von der ersten Fläche (T1) zur zweiten Fläche (R1) verläuft, ein Segment des Hauptstrahls schneidet, der von der dritten Fläche (R2) zur vierten Fläche (T2) verläuft; und
wobei der Hauptstrahl ein Strahl ist, der von einer Mitte einer Blende ausgeht, um eine Mitte einer Bildebene des dezentrierten optischen Systems zu erreichen.

4. Endoskop nach Anspruch 1, wobei das dezentrierte optische System (10) drei optische Flächen umfasst, wobei wenigstens eine der drei optischen Flächen eine rotationsasymmetrische Fläche ist, welche weder eine Achse der Rotationssymmetrie innerhalb noch außerhalb der Fläche aufweist;
wobei eine erste Fläche der drei optischen Flächen als eine Transmissionsfläche (T1) dient, eine zweite Fläche der drei optischen Flächen als eine Transmissionsfläche (T2) und als eine Reflektionsfläche (R1) dient und eine dritte Fläche der drei optischen Flächen als eine Reflektionsfläche (R2) dient;
wobei die erste, zweite und dritte Fläche derart angeordnet sind, dass Licht von einem Objekt durch die erste Fläche (T1) zur zweiten Fläche (R1) durchgelassen wird, und von der zweiten Fläche (R1) zur dritten Fläche (R2) reflektiert wird, und von der dritten Fläche (R2) zur zweiten Fläche (T2) reflektiert wird, und durch die zweite Fläche (T2) zu einer Bildebene des dezentrierten optischen Systems durchgelassen wird.

5. Endoskop nach einem der Ansprüche 1 bis 4, wobei, unter der Annahme, dass ein von einer Mitte eines Objektpunkts ausgehender und durch eine Mitte einer Blende verlaufender Lichtstrahl, um eine Mitte eines Bilds zu erreichen, als ein Hauptstrahl definiert ist, und dass eine Y-Achse in einer Dezentrierungsebene der Fläche gezogen ist, und eine X-Achse in einer Richtung gezogen ist, die die Y-Achse senkrecht schneidet, und femer eine Achse, die zusammen mit der X-und der Y-Achse ein orthogonales Koordinatensystem bildet, als eine Z-Achse definiert ist, und dass ferner der Hauptstrahl und ein Lichtstrahl, der parallel zu dem Hauptstrahl mit einem kleinen Abstand d in Richtung der X-Achse verläuft, dazu gebracht werden, dass sie in das optische System von einer Eingangsseite desselben eintreten, und ein Sinus eines Winkels, der zwischen diesen beiden Strahlen in der XZ-Ebene an einer Ausgangsseite des optischen Systems gebildet ist, als NA'X bezeichnet wird, und dass femer ein Wert, welcher dadurch erhalten wird, indem der Abstand d zwischen den parallelen Strahlen durch NA'X geteilt wird, als FX bezeichnet wird, was die Brennweite des optischen Systems in der X-Achsenrichtung ist, und eine Brennweite in der X-Achsenrichtung dieses Abschnitts der rotationsasymmetrischen Fläche, auf die der axiale Hauptstrahl auftrifft, durch FXn bezeichnet ist, die folgende Bedingung erfüllt ist:

$$-1000 < FX/FXn < 1000 \tag{1-1}$$

6. Endoskop nach einem der Ansprüche 1 bis 5, wobei, unter der Annahme, dass ein von einer Mitte eines Objektpunkts ausgehender und durch eine Mitte einer Blende verlaufender Lichtstrahl, um eine Mitte eines Bilds zu erreichen, als ein Hauptstrahl definiert ist, und dass eine Y-Achse in einer Dezentrierungsebene der Fläche gezogen ist, und eine X-Achse in einer Richtung gezogen ist, die die Y-Achse senkrecht schneidet, und ferner eine Achse, die zusammen mit der X-und der Y-Achse ein orthogonales Koordinatensystem bildet, als eine Z-Achse definiert ist, und dass femer der Hauptstrahl und ein Lichtstrahl, der parallel zu dem Hauptstrahl mit einem kleinen Abstand d in Richtung der Y-Achse verläuft, dazu gebracht werden, dass sie in das optische System von einer Eingangsseite desselben eintreten, und ein Sinus eines Winkels, der zwischen diesen beiden Strahlen in der YZ-Ebene an einer Ausgangsseite des optischen Systems gebildet ist, als NA'Y bezeichnet wird, und dass femer ein Wert, welcher dadurch erhalten wird, indem der Abstand d zwischen den parallelen Strahlen durch NA'Y geteilt wird, als FY bezeichnet wird, was die Brennweite des optischen Systems in der Y-Achsenrichtung ist, und eine Brennweite in der Y-Achsenrichtung dieses Abschnitts der rotationsasymmetrischen Fläche, auf die der axiale Hauptstrahl auftrifft, durch FYn bezeichnet ist, die folgende Bedingung erfüllt ist:

$$-1000 < FY/FYn < 1000 \qquad (2\text{-}1)$$

**7.** Endoskop nach einem der Ansprüche 1 bis 6, wobei, unter der Annahme, dass ein von einer Mitte eines Objektpunkts ausgehender und durch eine Mitte einer Blende verlaufender Lichtstrahl, um eine Mitte eines Bilds zu erreichen, als ein Hauptstrahl definiert ist, und dass eine Y-Achse in einer Dezentrierungsebene der Fläche gezogen ist, und eine X-Achse in einer Richtung gezogen ist, die die Y-Achse senkrecht schneidet, und femer eine Achse, die zusammen mit der X-und der Y-Achse ein orthogonales Koordinatensystem bildet, als eine Z-Achse definiert ist, und dass femer der Hauptstrahl und ein Lichtstrahl, der parallel zu dem Hauptstrahl mit einem kleinen Abstand d in Richtung der X-Achse verläuft, dazu gebracht werden, dass sie in das optische System von einer Eingangsseite desselben eintreten, und ein Sinus eines Winkels, der zwischen diesen beiden Strahlen in der XZ-Ebene an einer Ausgangsseite des optischen Systems gebildet ist, als NA'X bezeichnet wird, und dass femer ein Wert, welcher dadurch erhalten wird, indem der Abstand d zwischen den parallelen Strahlen durch NA'X geteilt wird, als FX bezeichnet wird, was die Brennweite des optischen Systems in der X-Achsenrichtung ist, und dass femer der Hauptstrahl und ein Lichtstrahl, der parallel zu dem Hauptstrahl mit einem kleinen Abstand d von diesem entfernt in der Richtung der Y-Achse verläuft, dazu gebracht werden, in das optische System von der Eingangsseite desselben einzutreten, und ein Sinus eines Winkels, welcher an der Ausgangsseite des optischen Systems in der YZ-Ebene zwischen diesen beiden Strahlen gebildet ist, durch NA'Y bezeichnet ist, und ein Wert, der durch Teilen des Abstands d zwischen den parellelen Strahlen durch NA'Y erhalten wird, mit FY bezeichnet wird, was die Brennweite des optischen Systems in der Y-Achsenrichtung ist, die folgende Bedingung erfüllt ist:

$$0{,}01 < |FY/FX| < 100 \qquad (3\text{-}1)$$

**8.** Endoskop nach einem der Ansprüche 1 bis 7, wobei die rotationsasymmetrische Fläche eine plansymmetrische dreidimensionale Fläche ist, welche nur eine Symmetrieebene aufweist.

**9.** Endoskop nach einem der Ansprüche 1 bis 8, wobei die rotationsasymmetrische Fläche als eine Reflektionsfläche verwendet wird, welche eine Totalreflektionswirkung oder eine Reflektionswirkung aufweist.

**10.** Endoskop nach Anspruch 9, welches nur eine erste Reflektionsfläche aufweist, wobei Lichtstrahlen von der ersten Reflektionsfläche in eine Richtung reflektiert werden, welche sich von der Richtung, in der die Lichtstrahlen darauf auftreffen, unterscheidet.

**Revendications**

**1.** Endoscope comportant des moyens optiques (10) disposés dans une partie distale de l'endoscope pour former une image sur un dispositif de formation d'image bidimensionnel (81) ou une face d'extrémité d'un faisceau de fibres optiques (82) ;

**caractérisé en ce qu'**un système optique décentré (10) est prévu comme lesdits moyens optiques, et **en ce que** ledit système optique décentré comprend au moins une surface à asymétrie de révolution n'ayant aucun axe de symétrie de révolution à l'intérieur ou à l'extérieur de la surface pour corriger des aberrations d'asymétrie de révolution dues au décentrage.

**2.** Endoscope selon la revendication 1, dans lequel un élément optique (80) ayant un pouvoir réfringent négatif est disposé sur un côté objet de ladite surface à asymétrie de révolution.

**3.** Endoscope selon la revendication 1 ou 2, dans lequel ledit système optique décentré (10) comprend quatre surfaces optiques, au moins l'une desdites quatre surfaces optiques est une surface à asymétrie de révolution n'ayant aucun axe de symétrie de révolution à l'intérieur ou à l'extérieur de la surface ;

dans lequel une première surface, une deuxième surface, une troisième surface et une quatrième surface desdites quatre surfaces optiques sont agencées de sorte qu'un segment d'un rayon principal qui s'étend de la première surface (T1) à la deuxième surface (R1) coupe un segment du rayon principal qui s'étend de la troisième surface (R2) à la quatrième surface (T2) ; et

dans lequel le rayon principal est un rayon émanant d'un centre d'une pupille pour atteindre un centre d'un plan image dudit système optique décentré.

4. Endoscope selon la revendication 1, dans lequel ledit système optique décentré (10) comprend trois surfaces optiques, au moins l'une desdites trois surfaces optiques étant une surface à asymétrie de révolution n'ayant aucun axe de symétrie de révolution à l'intérieur ou à l'extérieur de la surface ;

dans lequel une première surface desdites trois surfaces optiques sert de surface d'émission (T1), une deuxième surface desdites trois surfaces optiques sert de surface d'émission (T2) et de surface réfléchissante (R1) et une troisième surface desdites trois surfaces optiques sert de surface réfléchissante (R2) ;

dans lequel lesdites première, deuxième et troisième surfaces sont agencées de sorte que la lumière provenant d'un objet est transmise à travers ladite première surface (T1) en direction de ladite deuxième surface (R1) et est réfléchie par ladite deuxième surface (R1) en direction de ladite troisième surface (R2) et est réfléchie par ladite troisième surface (R2) en direction de ladite deuxième surface (T2) et est transmise à travers ladite deuxième surface (T2) en direction d'un plan image dudit système optique décentré.

5. Endoscope selon l'une quelconque des revendications 1 à 4, dans lequel, en supposant qu'un rayon lumineux émanant d'un centre d'un point objet et passant à travers un centre d'une pupille pour atteindre un centre d'une image soit défini comme un rayon principal, et qu'un axe Y soit pris dans un plan de décentrage de la surface et qu'un axe X soit pris dans une direction coupant perpendiculairement l'axe Y, et en outre qu'un axe constituant un système de coordonnées orthogonales en combinaison avec les axes X et Y soit défini comme un axe Z, et en outre que ledit rayon principal et un rayon lumineux qui est parallèle audit rayon principal à une légère distance d dans la direction d'axe X soient amenés à entrer dans ledit système optique à partir d'un côté d'entrée de celui-ci, et qu'un sinus d'un angle formé entre lesdits deux rayons dans un plan XZ sur un côté de sortie dudit système optique soit désigné par NA'X, et en outre qu'une valeur obtenue en divisant la distance d entre lesdits rayons parallèles par ledit NA'X soit désignée par FX qui est la longueur focale dans la direction d'axe X du système optique, et qu'une longueur focale dans la direction d'axe X de cette partie de ladite surface à asymétrie de révolution que frappe le rayon principal axial soit désignée par FXn, la condition suivante est satisfaite :

$$-1000 < FX/FXn < 1000 \qquad (1\text{-}1)$$

6. Endoscope selon l'une quelconque des revendications 1 à 5, dans lequel, en supposant qu'un rayon lumineux émanant d'un centre d'un point objet et passant à travers un centre d'une pupille pour atteindre un centre d'une image soit défini comme un rayon principal, et qu'un axe Y soit pris dans un plan de décentrage de la surface et qu'un axe X soit pris dans une direction coupant perpendiculairement l'axe Y, et en outre qu'un axe constituant un système de coordonnées orthogonales en combinaison avec les axes X et Y soit défini comme un axe Z, et en outre que ledit rayon principal et un rayon lumineux qui est parallèle audit rayon principal à une légère distance d dans la direction d'axe Y soient amenés à entrer dans ledit système optique à partir d'un côté d'entrée de celui-ci, et qu'un sinus d'un angle formé entre lesdits deux rayons dans un plan YZ sur un côté de sortie dudit système optique soit désigné par NA'Y, et en outre qu'une valeur obtenue en divisant la distance d entre lesdits rayons parallèles par ledit NA'Y soit désignée par FY, qui est la longueur focale dans la direction d'axe Y du système optique, et qu'une longueur focale dans la direction d'axe Y de cette partie de ladite surface à asymétrie de révolution que frappe le rayon principal axial soit désignée par FYn, la condition suivante est satisfaite :

$$-1000 < FY/FYn < 1000 \qquad (2\text{-}1)$$

7. Endoscope selon l'une quelconque des revendications 1 à 6, dans lequel, en supposant qu'un rayon lumineux émanant d'un centre d'un point objet et passant à travers un centre d'une pupille pour atteindre un centre d'une image soit défini comme un rayon principal, et qu'un axe Y soit pris dans un plan de décentrage de la surface et qu'un axe X soit pris dans une direction coupant perpendiculairement l'axe Y, et en outre qu'un axe constituant un système de coordonnées orthogonales en combinaison avec les axes X et Y soit défini comme un axe Z, et en outre que ledit rayon principal et un rayon lumineux qui est parallèle audit rayon principal à une légère distance d dans la direction d'axe X soient amenés à entrer dans ledit système optique à partir d'un côté d'entrée de celui-ci, et qu'un sinus d'un angle formé entre lesdits deux rayons dans un plan XZ sur un côté de sortie dudit système optique soit désigné par NA'X, et qu'une valeur obtenue en divisant la distance d entre lesdits rayons parallèles par ledit NA'X soit désignée par FX, qui est la longueur focale dans la direction d'axe X du système optique, et en outre que ledit rayon principal et un rayon lumineux qui est parallèle audit rayon principal à une légère distance d éloignée de celui-ci dans la direction d'axe Y soient amenés à entrer dans ledit système optique à partir d'un côté d'entrée de celui-ci, et qu'un sinus d'un angle formé entre lesdits deux rayons dans un plan YZ sur un côté de sortie dudit système optique soit désigné par NA'Y, et qu'une valeur obtenue en divisant la distance d entre lesdits rayons parallèles par ledit NA'Y soit désignée par FY, qui est la longueur focale dans la direction d'axe Y du système optique, la condition suivante est satisfaite :

$$0,01 < |FY/FX| < 100 \tag{3-1}$$

8. Endoscope selon l'une quelconque des revendications 1 à 7, dans lequel ladite surface à asymétrie de révolution est une surface tridimensionnelle à symétrie de plan ne comportant qu'un seul plan de symétrie.

9. Endoscope selon l'une quelconque des revendications 1 à 8, dans lequel ladite surface à asymétrie de révolution est utilisée comme une surface réfléchissante ayant une action de réflexion totale ou une action réfléchissante.

10. Endoscope selon la revendication 9, qui comprend seulement une première surface réfléchissante, dans lequel des rayons lumineux sont réfléchis par la première surface réfléchissante dans une direction différente d'une direction dans laquelle les rayons lumineux sont incidents sur celle-ci.

## FIG. 1

## FIG. 2

FIG. 3

FIG. 4

FIG. 5

FIG. 6 (a)

Aluminum coating layer ⌇12

⌇11

FIG. 6 (b)

Silver coating layer ⌇13

⌇11

FIG. 6 (c)

Aluminum coating layer

⌇12

⌇11

FIG. 7

## FIG. 8

## FIG. 9

FIG. 10

FIG.11

## FIG. 12

## FIG. 13

## FIG. 14

R4 Fourth reflec-
ting surface

R2 Second reflecting
surface

T1 First transmitting
surface

Object (exit pupil)

Image plane
(objectplane)

T2 Second transmitting
surface

←10

R3 Third reflecting
surface

R1 First reflecting
surface

## FIG. 15

R4 Fourth reflecting
surface

T1 First transmitting surface
R2 Second reflecting surface
T1 = R2

Image plane
(object plane)

T2 Second transmitting
surface

←10

R3 Third reflecting
surface

R1

## FIG. 16

R4 Fourth reflecting sur-
face

R2 Second reflecting sur-
face

T1 First transmitting sur-
face

Object (exit pupil)

Image plane
(object plane)

T2 Second transmit-
ting surface

R3 Third reflecting
surface

T2 = R3

10

R1 First reflecting
surface

## FIG. 17

R4 Fourth reflecting sur-
face

R2 Second reflecting sur-
face

T1 First transmitting
surface

Object (exit pupil)

Image plane
(object plane)

T2 Second transmitting
surface

10

R3 Third reflecting
surface

R1 First reflecting
surface

R1 = R3

# FIG.18

R4 Fourth reflecting
   surface
R2 Second reflecting
   surface
   R2 = R4

T1 First transmitting
   surface

Object (exit pupil)

Image plane
(object plane)

T2 Second transmit-
   ting surface

―10

R3 Third reflecting
   surface

R1 First reflecting
   surface

# FIG.19

R4 Fourth reflecting
   surface
R2 Second reflecting
   surface
T1 First transmitting
   surface
   T1 = R2 = R4

Object (exit pupil)

Image plane
(object plane)

T2 Second transmitting
   surface

←―10

R3 Third reflecting
   surface

R1 First reflecting surface

## FIG. 20

R4 Fourth reflecting sur-
 face

R2 Second reflecting sur-
 face
T1 First transmitting sur-
 face
 T1= R2

Object (exit pupil)

Image plane
(object plane)

T2 Second transmit-
 ting surface

10

R3 Third reflecting
 surface
R1 First reflecting
 surface
 R1= R3

## FIG. 21

R4 Fourth reflecting
 surface

R2 Second reflecting
 surface
T1 First transmitting
 surface
 T1= R2

Object (exit pupil)

Image plane
(object plane)

10

T2 Second transmitting
 surface
R3 Third reflecting
 surface
 T2=R3

R1 First reflecting surface

## FIG. 22

Image plane (object plane)

R4 Fourth reflecting surface
R2 Second reflecting surface
R2 = R4

T1 First transmitting surface

Object (exit pupil)

T2 Second transmitting surface
10

R3 Third reflecting surface
R1 First reflecting surface
R1 = R3

## FIG. 23

Image plane (object plane)

R4 Forth reflecting surface
R2 Second reflecting surface
R2 = R4

T1 First transmitting surface

Object (exit pupil)

T2 Second transmitting surface
R3 Third reflecting surface
T2 = R3
10

R1 First reflecting surface

## FIG. 24

Image plane (object plane)

R4 Fourth reflecting surface

R2 Second reflecting surface

T1 First transmitting surface

T1 = R2 = R4

T2 Second transmitting surface

R3 Third reflecting surface

T2 = R3

10

Object (exit pupil)

R1 First reflecting surface

## FIG. 25

Image plane (object plane)

R4 Fourth reflecting surface

R2 Second reflecting surface

T1 First transmitting surface

T1 = R2 = R4

T2 Second transmitting surface

10

Object (exit pupil)

R3 Third reflecting surface

R1 First reflecting surface

R1 = R3

## FIG. 26

Image plane
(object plane)

R4 Fourth reflecting
surface

R2 Second reflecting sur-
face
T1 First transmitting
surface
T1= R2

Object (exit pupil)

T2 Second transmitting
surface
R3 Third reflecting surface
R1 First reflecting surface

T2= R1=R3

## FIG. 27

Image plane
(object plane)

R4 Fourth reflecting
surface
R2 Second reflecting
surface
R2= R4

T1 First transmitting
surface

Object (exit pupil)

T2 Second transmitting
surface
R3 Third reflecting surface
R1 First reflecting surface
T2= R1=R3

# FIG. 28

R4 Fourth reflecting
surface

R2 Second reflecting
surface

T 1 First transmitting
surface

T 1 = R2 = R4

Image plane
(object plane)

10

T 2 Second transmitting
surface

R3 Third reflecting
surface

R1 First reflecting
surface

T 2 = R1 = R3

Object (exit pupil)

# FIG. 29

R1

T1

Rotationally asymmetric
surface

Object point
(exit pupil position)

Image plane
(object plane)

T2

Rotationally sym-
metric surface

10

R2

Rotationally asymmetric
surface

## FIG. 30

Rotationally symmetric surface

Image plane (object plane)

T2

Rotationally asymmetric surface

T1

Object point
(exit pupil position)

16

R1

10

14

Rotationally symmetric surface

Rotationally asymmetric surface

R2

15

## FIG. 31

Rotationally asymmetric surface

Object surface

M

Exit pupil position

## FIG. 32

Object plane

Rotationally asymmetric surface

M1

M2

Exit pupil position

## FIG. 33

Entrance pupil position

Rotationally asymmetric surface

M3

Image plane

## FIG. 34

## FIG. 35

FIG. 36

Entrance pupil
position

Image plane

Rotationally asym-
metric surface

M1

M2

18 Image-forming
optical system

Exit pupil

FIG. 37

Rotationally asymmet-
ric surface

Image formation
position

M5

Rotationally
asymmetric surface

M1

M2

Object

Exit pupil

M4 Rotationally asymmetric
surface

## FIG. 38

## FIG. 39

VTR deck

Video
printer

Video
processor

Video disk

10 Rotationally asymmetric optical system

FIG. 40 (a)

81 Two-dimensional imaging device

10 Rotationally asymmetric optical system

FIG. 40 (b)

82 Optical fiber bundle

Rotationally asymmetric surface

Object

81 Two-dimensional imaging device

FIG. 40 (c)

Rotationally asymmetric surface

FIG. 41 (a)

10 Rotationally asymmetric optical system

FIG. 41 (b)

83 Protective plate

10 Rotationally asymmetric optical system

81 Two-dimensional imaging device

FIG. 42 (a)

10 Rotationally asymmetric optical system

T1

Plane

FIG. 42 (b)

10 Rotationally asymmetric optical system

T1

FIG. 43

10 Rotationally asymmetric optical system

(a)

T2

83 Plane glass

Plane

81 Two-dimensional imaging device

(b)

T2

10 Rotationally asymmetric optical system

FIG. 44 (a)

10 Rotationally asymmetric optical system

T2

81 Two-dimensional imaging device

83 Plane glass

Plane

Close contact

FIG. 44 (b)

81 Two-dimensional imaging device

T2

10 Rotationally asymmetric optical system

FIG. 45

(a)

10 Rotationally asymmetric optical system

T2

83 Plane glass

Image formation plane

82 Optical fiber bundle

(b)

T2

10 Rotationally asymmetric optical system

FIG. 46 (a)

10 Rotationally asymmetric optical system

T2

83 Plane glass

Close contact

82 Optical fiber bundle

FIG. 46 (b)

T2

10 Rotationally asymmetric optical system

FIG. 47 (a)

10 Rotationally asymmetric optical system

T1

Plane

82 Optical fiber bundle

10 Rotationally asymmetric optical system

FIG. 47 (b)

T1

FIG. 48 (a)

10 Rotationally asymmetric optical system

83 Protective plate

Recessed

81 Two-dimensional imaging device

FIG. 48 (b)

10 Rotationally asymetric optical system

83 Protective plate

FIG. 49 (a)

10 Rotationally asymmetric optical system

83 Protective plate

Projecting

81 Two-dimensional imaging device

FIG. 49 (b)

10 Rotationally asymmetric optical system

83 Protective plate

## FIG. 50

Observation optical system

91

10 Rotationally asymmetric optical system

92 Camera adapter

93 Two-dimensional imaging device

## FIG. 51

10 Rotationally asymmetric optical system

Observation optical system

91

92 Camera adapter

94 Plane parallel plate

93 Two-dimensional imaging device

## FIG. 52

Observation optical system

91

10 Rotationally asymmetric system

92 Camera adapter

Spacing change (focusing mechanism)

93 Two-dimensional imaging device

## FIG. 53

10 Rotationally asymmetric
optical system

95 Optical path split-
ting surface

Observation optical
path

96 Optical axis and
power correcting
optical element

94 Plane-parallel
plate

92 Camera adapter

Observation
optical
system

91

93 Two-dimensional imaging
device

FIG. 54

FIG. 55

## FIG. 56

M

## FIG. 57

Lens system

A Rotationally asymmetric surface

Image plane

Object

Exit side NA'Y

d

Y

Axial principal ray

X → Z

S Optical system

Rotationally asymmetric surface